# EUROPEAN PATENT SPECIFICATION

(11) **EP 4 280 307 B1**
(45) Date of publication and mention of the grant of the patent: **17.12.2025**
(21) Application number: 22912793.1
(22) Date of filing: 31.03.2022
(51) Int. Cl.: H01M 4/02, H01M 4/36, H01M 10/0525, H01M 4/58

(54) **NOVEL POSITIVE ELECTRODE PLATE, SECONDARY BATTERY, BATTERY MODULE, BATTERY PACK AND POWER CONSUMING DEVICE**
NEUE POSITIVE ELEKTRODENPLATTE, SEKUNDÄRE BATTERIE, BATTERIEMODUL, BATTERIEPACK UND STROMVERBRAUCHENDE VORRICHTUNG
NOUVELLE PLAQUE D'ÉLECTRODE POSITIVE, BATTERIE SECONDAIRE, MODULE DE BATTERIE, BATTERIE ET DISPOSITIF ÉLECTRIQUE

(43) Date of publication of application: 22.11.2023
(73) Proprietor: Contemporary Amperex Technology (Hong Kong) Limited, Central, Central And Western District (HK)
(72) Inventor: JI, Cheng, Ningde, Fujian 352100 (CN); LI, Baiqing, Ningde, Fujian 352100 (CN)
(74) Representative: Lorenz Seidler Gossel Part. mbB
(86) International application number: PCT/CN2022/084292
(87) International publication number: WO 2023/184304

(56) References cited:
- CN-A- 103 199 247
- CN-A- 103 199 247
- CN-A- 104 347 880
- CN-A- 104 347 880
- CN-A- 108 511 715
- CN-A- 110 660 961
- CN-A- 110 660 961
- CN-A- 111 446 488
- CN-A- 114 256 448
- CN-A- 114 256 448
- US-A1- 2015 093 651

## Description

### Technical Field

The present description relates to the technical field of secondary batteries, and in particular to a novel positive electrode plate, a secondary battery, a battery module, a battery pack, and a power consuming device.

### Background Art

In recent years, with the increasing application range, secondary batteries are widely used in energy storage power systems such as hydraulic power, thermal power, wind power, and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, safety performance, etc. The existing lithium manganese iron phosphate causes the secondary batteries to have poorer kinetic performance and lower cell rate performance, which cannot meet the needs of power batteries. Though the secondary batteries, prepared from the existing lithium iron phosphate as a positive electrode active material, have excellent cycling stability and safety, due to the existence of one-dimensional lithium ion channels inside the secondary batteries and the existence of both of an LiFePO₄ phase and an FePO₄ phase during a charge/discharge process of the secondary batteries, the internal phase change resistance of the material during the charge/discharge process is increased, resulting in poor kinetic performance, low cell rate performance, short low-temperature cycle life, and low low-temperature capacity retention rate of the secondary batteries.

### Summary of the Invention

The present invention is made in view of the above topics, and aims to provide a novel positive electrode plate, a secondary battery, a battery module, a battery pack, and a power consuming device, to solve the problems of low energy density, poor kinetic performance, low rate performance, short low-temperature cycle life, and low low-temperature cycling capacity retention rate of the secondary battery prepared from the existing positive electrode active material.

In order to achieve the above object, a first aspect of the present application provides a positive electrode plate comprising a positive electrode current collector and positive electrode film layers provided on at least one surface of the positive electrode current collector; the positive electrode film layers have a single-layer structure or a multi-layer structure; when the positive electrode film layers have a single-layer structure, at least one of the positive electrode film layers comprises both a first positive electrode active material having a core-shell structure and a second positive electrode active material; and/or when the positive electrode film layers have a multi-layer structure, at least one layer of the at least one of the positive electrode film layers comprises both a first positive electrode active material having a core-shell structure and a second positive electrode active material; the first positive electrode active material comprises an inner core, a first coating layer coating the inner core, a second coating layer coating the first coating layer, and a third coating layer coating the second coating layer; wherein the inner core comprises Li₁₊ₓMn_{1-y}A_{y}P_{1-z}R_{z}O₄, the first coating layer comprises crystalline pyrophosphate LiₐMP₂O₇ and/or M₃(P₂O₇)_{c}, the second coating layer comprises crystalline phosphate XPO₄, and the third coating layer comprises carbon; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from any value in the range of -0.100 to 0.100; y is selected from any value in the range of 0.001 to 0.500; z is selected from any value in the range of 0.001 to 0.100; M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al; a is selected from any value in the range of 0 to 2; b is selected from any value in the range of 1 to 4; c is selected from any value in the range of 1 to 6; and X comprises one or more elements selected from Li, Fe, Ni, Mg, Co, Cu, Zn, Ti, Ag, Zr, Nb and Al; and the second positive electrode active material is selected from one or more of LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Nb, W, Zr, Nb, Sm, Cr, Cu and B, d is independently selected from the range of 0.99 to 0.999, and d + e = 1.

Herein, the crystalline state means that the crystallinity is 50% or more, that is, 50% - 100%. A crystalline state with a crystallinity of less than 50% is referred to as a glassy state. The crystallinity of the crystalline pyrophosphate and crystalline phosphate of the present application is 50% to 100%. The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interface side reactions, but also the better lattice matching between the phosphate coating layer and the phosphate coating layer, such that a close combination between the coating layer and the coating layer can be achieved.

Thus, the present invention, by doping an element A at the manganese site of lithium manganese phosphate and doping an element R at the phosphorus site to obtain a doped lithium manganese phosphate inner core and sequentially coating the surface of the inner core with three layers, provides a novel first positive electrode active material having a core-shell structure, the first positive electrode active material can remarkably reduce the dissolution of manganese and the lattice change rate, and the use of the first positive electrode active material in the secondary battery can significantly improve the high-temperature cycling performance, cycling stability, high-temperature storage performance, rate performance and safety performance of the secondary battery and increase the capacity of the secondary battery.

The present invention, by mixing the first positive electrode active material and the second positive electrode active material for use to complement the advantages of the two materials, improves the energy density of the secondary battery, meanwhile making the secondary battery have excellent kinetic performance, rate performance, low-temperature cycle life and low-temperature cycling capacity retention rate.

A second aspect of the present description provides a positive electrode plate comprising a positive electrode current collector and positive electrode film layers provided on at least one surface of the positive electrode current collector; at least one of the positive electrode film layers has a multi-layer structure, and any of the positive electrode film layers having a multi-layer structure comprises in different layers a first positive electrode active material having a core-shell structure and a second positive electrode active material, respectively; the first positive electrode active material comprises an inner core, a first coating layer coating the inner core, a second coating layer coating the first coating layer, and a third coating layer coating the second coating layer; wherein the inner core comprises Li₁₊ₓMn_{1-y}A_{y}P_{1-z}R_{z}O₄, the first coating layer comprises crystalline pyrophosphate LiₐMP₂O₇ and/or M_{b}(P₂O₇)_{c}, the second coating layer comprises crystalline phosphate XPO₄, and the third coating layer comprises carbon; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from any value in the range of -0.100 to 0.100; y is selected from any value in the range of 0.001 to 0.500; z is selected from any value in the range of 0.001 to 0.100; M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al; a is selected from any value in the range of 0 to 2; b is selected from any value in the range of 1 to 4; c is selected from any value in the range of 1 to 6; and X comprises one or more elements selected from Li, Fe, Ni, Mg, Co, Cu, Zn, Ti, Ag, Zr, Nb and Al; and the second positive electrode active material is selected from one or more of LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Nb, W, Zr, Nb, Sm, Cr, Cu and B, d is independently selected from any value in the range of 0.99 to 0.999, and d + e = 1; and optionally, any of the positive electrode film layers having a multi-layer structure comprises in adjacent layers a first positive electrode active material and a second positive electrode active material, respectively.

Thus, the first positive electrode active material can significantly reduce the dissolution of manganese and the lattice change rate, and the use of the first positive electrode active material in the secondary battery can significantly improve the high-temperature cycling performance, cycling stability, high-temperature storage performance, rate performance and safety performance of the secondary battery and increase the capacity of the secondary battery.

The present description, by combining the first positive electrode active material and the second positive electrode active material for use to complement the advantages of the two materials, improves the energy density of the secondary battery, meanwhile making the secondary battery have excellent rate performance, kinetic performance, low-temperature cycle life and low-temperature cycling capacity retention rate.

A third aspect of the present description provides a positive electrode plate comprising a positive electrode current collector and a positive electrode film layer A and a positive electrode film layer B which are respectively provided on the two surfaces of the positive electrode current collector; the positive electrode film layer A and the positive electrode film layer B each independently have a single-layer structure or a multi-layer structure; at least one layer of the positive electrode film layer A contains a first positive electrode active material having a core-shell structure, and at the same time, at least one layer of the positive electrode film layer B comprises a second positive electrode active material; the first positive electrode active material comprises an inner core, a first coating layer coating the inner core, a second coating layer coating the first coating layer, and a third coating layer coating the second coating layer; wherein the inner core comprises Li₁₊ₓMn_{1-y}A_{y}P_{1-z}R_{z}O₄, the first coating layer comprises crystalline pyrophosphate LiₐMP₂O₇ and/or M₃(P₂O₇)_{c}, the second coating layer comprises crystalline phosphate XPO₄, and the third coating layer comprises carbon; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from any value in the range of -0.100-0.100; y is selected from any value in the range of 0.001-0.500; z is selected from any value in the range of 0.001-0.100; M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al; a is selected from any value in the range of 0-2; b is selected from any value in the range of 1-4; c is selected from any value in the range of 1-6; and X comprises one or more elements selected from Li, Fe, Ni, Mg, Co, Cu, Zn, Ti, Ag, Zr, Nb and Al; and the second positive electrode active material is selected from one or more of LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Nb, W, Zr, Nb, Sm, Cr, Cu and B, d is independently selected from any value in the range of 0.99 to 0.999, and d + e = 1.

Thus, the first positive electrode active material of the present application can significantly reduce the dissolution of manganese and the lattice change rate, and the use of the first positive electrode active material in the secondary battery can significantly improve the high-temperature cycling performance, cycling stability, high-temperature storage performance, rate performance and safety performance of the secondary battery and increase the capacity of the secondary battery.

The present description, by combining the first positive electrode active material and the second positive electrode active material for use to complement the advantages of the two materials, improves the energy density of the secondary battery, meanwhile making the secondary battery have excellent rate performance, kinetic performance, low-temperature cycle life and low-temperature cycling capacity retention rate.

Unless otherwise stated, in the above chemical formula, when the A is a combination of at least two elements, the above definition of the numerical range of y not only represents a definition of the stoichiometric number of each element as A, but also represents a definition of the sum of the stoichiometric numbers of the elements as A. For example, when A is a combination of at least two elements of A1, A2... and An, the stoichiometric numbers y1, y2... and yn of each of A1, A2... and An each fall within the numerical range of y defined in the present application, and the sum of y1, y2... and yn also falls within this numerical range. Similarly, when the R is a combination of at least two elements, the definitions of the numerical ranges of the stoichiometric numbers of R, M and X in the present application also have the above meanings.

Unless otherwise stated, in the chemical formula LiFe_{d}DₑPO₄, when the D is a combination of at least two elements, the above definition of the numerical range of e not only represents a definition of the stoichiometric number of each element as D, but also represents a definition of the sum of the stoichiometric numbers of the elements as D. For example, when D is a combination of at least two elements of D1, D2... and Dn, the stoichiometric numbers e1, e2... and en of each of D1, D2... and Dn each fall within the numerical range of e defined in the present application, and the sum of e1, e2... and en also falls within this numerical range.

In any embodiment of the first aspect to the third aspect, in the second positive electrode active material, the mass of carbon accounts for 0.1% - 4% of the mass of the carbon-coated LiFePO₄; and/or the mass of carbon accounts for 0.1% - 4% of the mass of the carbon-coated LiFe_{d}DₑPO₄. The adoption of the second positive electrode active material with the mass content of carbon described above can further ensure that the secondary battery has excellent rate performance, kinetic performance and low-temperature cycling performance, and has higher energy density.

In any embodiment of the first aspect to the third aspect, the mass ratio of the first positive electrode active material to the second positive electrode active material is 1 : 7 - 7 : 1, optionally 1 : 4 - 4 : 1, and further optionally 1 : 3 - 3 : 1, such as 1 : 7, 1 : 5, 1 : 3, 1 : 2, 3 : 5, 1 : 1, 5 : 3, 2 : 1, 3 : 1, 5 : 1, and 7 : 1. The secondary battery is guaranteed to have higher energy density, excellent kinetic performance, excellent rate performance, long low-temperature cycle life, and higher low-temperature cycling capacity retention rate, and to reduce interface side reactions.

In any embodiment of the first aspect to the third aspect, in the first positive electrode active material, the A is selected from one or more elements of Fe, Ti, V, Ni, Co and Mg. By selecting the doping elements within the above ranges, it is beneficial to an enhanced doping effect. For one thing, the lattice change rate is further reduced, thereby inhibiting the dissolution of manganese and reducing the consumption of an electrolyte solution and active lithium. For another, it is also beneficial to further reducing the surface oxygen activity and the interface side reactions between the first positive electrode active material and the electrolyte solution, thereby improving the cycling performance and high-temperature storage performance of the secondary battery.

In any embodiment of the first aspect to the third aspect, in the first positive electrode active material, the R is selected from one element of B, Si, N and S. By selecting the doping elements within the above ranges, the rate performance and electrical conductivity of the secondary battery can be further improved, thereby improving the gram capacity, cycling performance and high-temperature performance of the secondary battery.

In any embodiment of the first aspect to the third aspect, in the first positive electrode active material, the ratio of y to 1-y is selected from 1 : 10 to 1 : 1, optionally 1 : 4 to 1 : 1. Thus, the energy density, cycling performance and rate performance of the secondary battery are further improved.

In any embodiment of the first aspect to the third aspect, in the first positive electrode active material, the ratio of z to 1-z is selected from 1 : 9 to 1 : 999, optionally 1 : 499 to 1 : 249. Thus, the energy density, cycling performance and rate performance of the secondary battery are further improved.

In any embodiment of the first aspect to the third aspect, in the first positive electrode active material, the first coating layer has an interplanar spacing of the crystalline pyrophosphate of a range of 0.293-0.470 nm, and an angle of the crystal direction (111) of 18.00° - 32.00°; the second coating layer has an interplanar spacing of the crystalline phosphate in a range of 0.244-0.425 nm, and an angle of the crystal direction (111) in a range of 20.00° - 37.00°.

Both the first coating layer and the second coating layer in the positive electrode active material of the present application are crystalline substances, and the interplanar spacing and angle ranges thereof are within the above ranges. Thus, the impurity phase in the coating layer can be effectively avoided, thereby improving the gram capacity of the material and the cycling performance and rate performance of the secondary battery.

In any embodiment of the first aspect to the third aspect, in the first positive electrode active material, the carbon of the third coating layer is a mixture of SP2-form carbon and SP3-form carbon, and optionally, the molar ratio of the SP2-form carbon to the SP3-form carbon is any value in the range of 0.1-10, optionally any value in the range of 2.0-3.0.

In the present application, the overall performance of the secondary battery is improved by limiting the molar ratio of the SP2-form carbon to the SP3-form carbon within the above ranges.

In any embodiment of the first aspect to the third aspect, a coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or

a coating amount of the second coating layer is greater than 0 and less than or equal to 6 wt%, optionally greater than 0 and less than or equal to 5.5 wt%, more optionally 2-4 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In the first positive electrode active material having a core-shell structure of the present application, the coating amounts of the three coating layers are preferably within the above ranges, which thus can enable the full coating of the inner core, while further improving the kinetic performance and safety performance of the secondary battery without compromising the gram capacity of the first positive electrode active material.

In any embodiment of the first aspect to the third aspect, in the first positive electrode active material, the thickness of the first coating layer is 1-10 nm. In the present application, when the thickness of the first coating layer is in the range of 1-10 nm, the adverse effect on the kinetic performance of the material, which can be caused when the first coating layer is too thick, can be further avoided, and the problem that the migration of transition metal ions cannot be effectively prevented when the first coating layer is too thin can be avoided.

In any embodiment of the first aspect to the third aspect, in the first positive electrode active material, the thickness of the second coating layer is 2-15 nm. When the thickness of the second coating layer is in the range of 2-15 nm, the surface structure of the second coating layer is stable, and the side reaction with the electrolyte solution is small, so the interface side reactions can be effectively reduced, thereby improving the high-temperature performance of the secondary battery.

In any embodiment of the first aspect to the third aspect, in the first positive electrode active material, the thickness of the third coating layer is 2-25 nm. When the thickness of the third coating layer is in the range of 2-25 nm, the electrical conductivity of the material can be improved, and the compacted density performance of the battery electrode plate prepared from the first positive electrode active material can be improved.

In any embodiment of the first aspect to the third aspect, in the first positive electrode active material, based on the weight of the first positive electrode active material, the content of the manganese element is in the range of 10 wt%-35 wt%, optionally in the range of 15 wt%-30 wt%, more optionally in the range of 17 wt%-20 wt%.

In the first positive electrode active material having a core-shell structure of the present application, the content of the manganese element is within the above ranges, such that the problems such as deterioration of the stability of the material structure and decrease in density that may be caused if the content of the manganese element is too high can be effectively avoided, thereby improving the performances, such as cycling, storage and compacted density, of the secondary battery; and the problems such as low voltage platform that may be caused if the content of the manganese ele is too low can be effectively avoided, thereby improving the energy density of the secondary battery.

In any embodiment of the first aspect to the third aspect, in the first positive electrode active material, based on the weight of the first positive electrode active material, the content of the phosphorus element is in the range of 12 wt% - 25 wt%, optionally in the range of 15 wt% - 20 wt%.

In the first positive electrode active material having a core-shell structure of the present application, the content of the phosphorus element is within the above ranges, which can effectively avoid the following situations: if the content of the phosphorus element is too high, the covalency of P-O may be too strong so as to affect the conduction of small polarons, thereby affecting the electrical conductivity of the material; and if the content of the phosphorus element is too low, the stability of the inner core, the lattice structures of the pyrophosphate in the first coating layer and/or the phosphate in the second coating layer may be reduced, thereby affecting the overall stability of the material.

In any embodiment of the first aspect to the third aspect, in the first positive electrode active material, based on the weight of the first positive electrode active material, the weight ratio of the manganese element to the phosphorus element is in the range of 0.90-1.25, optionally 0.95-1.20.

In the first positive electrode active material having a core-shell structure of the present application, the weight ratio of the manganese element to the phosphorus element is within the above ranges, which can effectively avoid the following situations: if the weight ratio is too high, an increase in the dissolution of transition metals may be caused, thereby affecting the stability of the material and the cycling performance and storage performance of the secondary battery; and if the weight ratio is too low, the discharge voltage platform of the material may be decreased, thereby reducing the energy density of the secondary battery.

In any embodiment of the first aspect to the third aspect, the first positive electrode active material has a lattice change rate, before and after complete lithium intercalation-deintercalation, of 4% or less, optionally 3.8% or less, more optionally 2.0-3.8%.

The first positive electrode active material having a core-shell structure of the present application can achieve a lattice change rate before and after lithium intercalation-deintercalation of 4% or less. Therefore, the use of the first positive electrode active material can improve the gram capacity and rate performance of the secondary battery.

In any embodiment of the first aspect to the third aspect, an Li/Mn antisite defect concentration of the first positive electrode active material is 4% or less, optionally 2.2% or less, more optionally 1.5-2.2%. By having the Li/Mn antisite defect concentration within the above ranges, it is capable of avoiding prevention of transport of Li⁺ by Mn²⁺, while improving the gram capacity of the first positive electrode active material and the rate performance of the secondary battery.

In any embodiment of the first aspect to the third aspect, the first positive electrode active material has a compacted density under 3T of 2.2 g/cm³ or more, optionally 2.2 g/cm³ or more and 2.8 g/cm³ or less. Thus, when the compacted density is improved, the weight of the first positive electrode active material per unit volume is increased, which is more conducive to increasing the volumetric energy density of the secondary battery.

In any embodiment of the first aspect to the third aspect, the surface oxygen valence state of the first positive electrode active material is -1.90 or less, optionally -1.90 to -1.98. Thus, by limiting the surface oxygen valence state of the first positive electrode active material within the above ranges, the interface side reactions between the first positive electrode material and the electrolyte solution can be reduced, thereby improving the performances, such as cycling, high-temperature storage and gas production, of the cell.

In any embodiment of the first aspect to the third aspect, the sum of the mass of the first positive electrode active material and the second positive electrode active material accounts for 88%-98.7% of the mass of the positive electrode plate. The secondary battery is further guaranteed to have excellent rate performance, kinetic performance and low-temperature cycling performance, and to have higher energy density.

A fourth aspect of the present description provides a secondary battery, comprising the positive electrode plate according to any one of the first aspect to the third aspect of the present application.

A fifth aspect of the present description provides a battery module comprising the secondary battery of the fourth aspect of the present application.

A sixth aspect of the present application provides a battery pack comprising the battery module of the fifth aspect of the present application.

A seventh aspect of the present description provides a power consuming device, comprising at least one selected from a secondary battery of the fourth aspect of the present application, a battery module of the fifth aspect of the present application and a battery pack of the sixth aspect of the present application.

### Brief Description of the Drawings

FIG. 1 is a schematic diagram of a first positive electrode active material having a three-layer coating structure according to an embodiment of the present application.
FIG. 2 is a schematic diagram of a secondary battery according to an embodiment of the present application.
FIG. 3 is an exploded view of a secondary battery according to an embodiment of the present application as shown in FIG. 2.
FIG. 4 is a schematic diagram of a battery module according to an embodiment of the present application.
FIG. 5 is a schematic diagram of a battery pack according to an embodiment of the present application.
FIG. 6 is an exploded view of a battery pack according to an embodiment of the present application as shown in FIG. 5.
FIG. 7 is a schematic diagram of a power consuming device using a secondary battery according to an embodiment of the present application as a power source.
FIG. 8 is a schematic diagram of the structure of a battery made of a positive electrode plate P1 according to the present application.
FIG. 9 is a schematic diagram of the structure of a battery made of a positive electrode plate P2 according to the present application.
FIG. 10 is a schematic diagram of the structure of a battery made of a positive electrode plate P3 according to the present application.
FIG. 11 is a schematic diagram of the structure of a battery made of a positive electrode plate P8 according to the present application.
FIG. 12 is a schematic diagram of the structure of a battery made of a positive electrode plate P10 according to the present application.
FIG. 13 is a schematic diagram of the structure of a battery made of a positive electrode plate P11 according to the present application.
FIG. 14 is a schematic diagram of the structure of a battery made of a positive electrode plate P12 according to the present application.
FIG. 15 is a schematic diagram of the structure of a battery made of a positive electrode plate P17 according to the present application.
FIG. 16 is a schematic diagram of the structure of a battery made of a positive electrode plate P18 according to the present application.
FIG. 17 is a schematic diagram of the structure of a battery made of a positive electrode plate P23 according to the present application.
FIG. 18 is a schematic diagram of the structure of a battery made of a positive electrode plate P24 according to the present application.
FIG. 19 is a schematic diagram of the structure of a battery made of a positive electrode plate P26 of the present application.
FIG. 20 is a schematic diagram of the structure of a battery made of a positive electrode plate P27 according to the present application.

List of reference signs:
1 battery pack; 2 upper box body; 3 lower box body; 4 battery module; 5 secondary battery; 51 housing; 52 electrode assembly; 53 top cover assembly.

### Detailed Description of Embodiments

Hereinafter, the embodiments of the positive electrode plate, secondary battery, battery module, battery pack and power consuming device of the present invention are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present description are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a - b" denotes an abbreviated representation of any combination of real numbers between a and b, wherein both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the implementations and optional implementations of the present description can be combined with one another to form new technical solutions, unless otherwise stated.

All technical features and optional technical features of the present description can be combined with one another to form a new technical solution, unless otherwise stated.

Unless otherwise stated, all the steps of the present description can be carried out sequentially or randomly, preferably sequentially. For example, the method including steps (a) and (b) indicates that the method may comprise steps (a) and (b) carried out sequentially, and may also comprise steps (b) and (a) carried out sequentially. For example, reference to "the method may further comprise step (c)" indicates that step (c) may be added to the method in any order, e.g., the method may comprise steps (a), (b) and (c), steps (a), (c) and (b), or steps (c), (a) and (b).

The terms "comprise" and "include" mentioned in the present application are openended or closed-ended, unless otherwise stated. For example, "comprise" and "include" may mean that other components not listed may further be comprised or included, or only the listed components may be comprised or included.

In the present description, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

Unless otherwise specified, in the present description, the term "coating layer" refers to a material layer coating the inner core, and the material layer can completely or partially coat the inner core, and the use of "coating layer" is only for ease of description, and is not intended to limit the present invention.

Unless otherwise specified, in the present description, the term "thickness of the coating layer" refers to the thickness of the material layer coating the inner core in the radial direction of the inner core.

### [Secondary battery]

A secondary battery, also known as a rechargeable battery or an accumulator, refers to a battery of which active materials can be activated by means of charging for reuse of the battery after the battery is discharged.

Generally, the secondary battery comprises a positive electrode plate, a negative electrode plate, a separator and an electrolyte solution. During a charge/discharge process of the battery, active ions (e.g., lithium ions) are intercalated and de-intercalated back and forth between the positive electrode plate and the negative electrode plate. The separator is provided between the positive electrode plate and the negative electrode plate, and mainly prevents positive and negative electrodes from short-circuiting and enables the active ions to pass through. The electrolyte solution is provided between the positive electrode plate and the negative electrode plate and mainly functions for active ion conduction.

### [Positive electrode plate]

Embodiments of the first aspect of the present description provide a positive electrode plate comprising a positive electrode current collector and positive electrode film layers provided on at least one surface of the positive electrode current collector; the positive electrode film layers have a single-layer structure or a multi-layer structure; when the positive electrode film layers have a single-layer structure, at least one of the positive electrode film layers comprises both a first positive electrode active material having a core-shell structure and a second positive electrode active material; and/or when the positive electrode film layers have a multi-layer structure, at least one layer of the at least one of the positive electrode film layers comprises both a first positive electrode active material having a core-shell structure and a second positive electrode active material; the first positive electrode active material comprises an inner core, a first coating layer coating the inner core, a second coating layer coating the first coating layer, and a third coating layer coating the second coating layer; wherein the inner core comprises materials with the chemical formula Li₁₊ₓMn_{1-y}A_{y}P_{1-z}R_{z}O₄, the first coating layer comprises crystalline pyrophosphate LiₐMP₂O₇ and/or M_{b}(P₂O₇)_{c}, the second coating layer comprises crystalline phosphate XPO₄, and the third coating layer comprises carbon; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from any value in the range of -0.100 to 0.100; y is selected from any value in the range of 0.001 to 0.500; z is selected from any value in the range of 0.001 to 0.100; M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al; a is selected from any value in the range of 0 to 2; b is selected from any value in the range of 1 to 4; c is selected from any value in the range of 1 to 6; and X comprises one or more elements selected from Li, Fe, Ni, Mg, Co, Cu, Zn, Ti, Ag, Zr, Nb and Al; and the second positive electrode active material is one or more selected from LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Nb, W, Zr, Nb, Sm, Cr, Cu and B, d is independently selected from any value in the range of 0.99 to 0.999, and d + e = 1.

It should be noted that: when the positive electrode plate comprises two positive electrode film layers, "the positive electrode film layer having a single-layer structure or a multi-layer structure" means that the two positive electrode film layers each independently have a single-layer structure or a multi-layer structure, "when the positive electrode film layer has a single-layer structure" indicates the situation where one or both of the positive electrode film layers have a single-layer structure, and "when the positive electrode film layer has a multiple-layer structure" indicates the situation where one or both of the positive electrode film layers have a multi-layer structure.

The first positive electrode active material of the present description can improve the gram capacity, cycling performance and safety performance of the secondary battery. Although the mechanism is not yet clear, it is speculated that the first positive electrode active material of the present application has a core-shell structure, wherein doping the inner core of the lithium manganese phosphate at the manganese and phosphorus sites with element A and element R, respectively, not only can effectively reduce the dissolution of manganese, and then reduce the migration of manganese ions to the negative electrode, reduce the consumption of electrolyte solution due to the decomposition of the SEI film, and improve the cycling performance and safety performance of the secondary battery, but also can promote the adjustment of Mn-O bonds, reduce the migration barrier of lithium ions, promote the migration of lithium ions, and improve the rate performance of the secondary battery; coating the inner core with a first coating layer comprising crystalline pyrophosphate can further increase the migration resistance of manganese and reduce its dissolution, and reduce the content of lithium impurity on the surface and the contact between the inner core and the electrolyte solution, thereby reducing the interface side reactions, reducing gas production, and improving the high-temperature storage performance, cycling performance and safety performance of the secondary battery; by further coating with a crystalline phosphate coating layer with excellent lithium ion conductivity, the interface side reactions on the surface of the first positive electrode active material can be effectively reduced, thereby improving the high-temperature cycling and storage performance of the secondary battery; and further coating with a carbon layer as the third coating layer can further improve the safety performance and kinetic performance of the secondary battery. In addition, in the inner core, the element A doped at the manganese site of lithium manganese phosphate also facilitates to reduce the lattice change rate of the lithium manganese phosphate during the process of lithium intercalation-deintercalation, and improves the structural stability of the first positive electrode material, greatly reducing the dissolution of manganese and reducing the oxygen activity on the particle surface; and the element R doped at the phosphorus site also facilitates to change the difficulty of the change of the Mn-O bond length, thereby improving the electron conductivity and reducing the migration barrier of lithium ions, promoting the migration of lithium ions, and improving the rate performance of the secondary battery.

The present description, by mixing the first positive electrode active material and the second positive electrode active material for use to complement the advantages of the two materials, improves the energy density of the secondary battery; the internal lattice structure skeletons of the first positive electrode active material and the second positive electrode active material are stable. During the charge/discharge process, the doping elements in the first positive electrode active material can effectively reduce the migration energy barrier of lithium ions, which is beneficial to the fast intercalation-deintercalation of lithium ions. In addition, the unique second coating layer of the first positive electrode active material significantly improves the electron conductivity, and the first positive electrode active material is evenly dispersed around the second positive electrode active material, thereby improving the overall electron conductivity of the mixed material, and thus improving the cell rate performance and kinetic performance of the secondary battery. Moreover, the lattice change of the first positive electrode active material is relatively low, which reduces material polarization under low-temperature conditions, and effectively improves the low-temperature cycle life and low-temperature cycling capacity retention rate of the secondary battery.

In some embodiments of the first aspect, a positive electrode film layer C and a positive electrode film layer D are respectively provided on the two surfaces of the positive electrode current collector, the positive electrode film layer C is a multi-layer structure, the positive electrode film layer D is a single-layer structure, and at least one layer of the positive electrode film layer C comprises both the first positive electrode active material and the second positive electrode active material; optionally, the positive electrode film layer D comprises one or both of the first positive electrode active material and the second positive electrode active material; and optionally, the remaining layer(s) in the positive electrode film layer C comprise(s) the first positive electrode active material or the second positive electrode active material.

In some embodiments of the first aspect, a positive electrode film layer C and a positive electrode film layer D are respectively provided on the two surfaces of the positive electrode current collector, the positive electrode film layer C is a multi-layer structure, the positive electrode film layer D is a single-layer structure, and the positive electrode film layer D comprises both the first positive electrode active material and the second positive electrode active material; and optionally, any layer in the positive electrode film layer C comprises the first positive electrode active material or the second positive electrode active material.

In some embodiments of the first aspect, the two surfaces of the positive electrode current collector are respectively provided with positive electrode film layers thereon, wherein each positive electrode film layer has a multi-layer structure, and at least one layer of each positive electrode film layer comprises both a first positive electrode active material and a second positive electrode active material; and optionally, the remaining layer(s) in the positive electrode film layer comprise(s) the first positive electrode active material or the second positive electrode active material.

The embodiment of the second aspect of the present description provides a positive electrode plate comprising a positive electrode current collector and positive electrode film layers provided on at least one surface of the positive electrode current collector; wherein at least one of the positive electrode film layers has a multi-layer structure, and any of the positive electrode film layers having a multi-layer structure comprises in different layers a first positive electrode active material having a core-shell structure and a second positive electrode active material, respectively; the first positive electrode active material comprises an inner core, a first coating layer coating the inner core, a second coating layer coating the first coating layer, and a third coating layer coating the second coating layer; wherein the inner core comprises Li₁₊ₓMn_{1-y}A_{y}P_{1-z}R_{z}O₄, the first coating layer comprises crystalline pyrophosphate LiₐMP₂O₇ and/or M₃(P₂O₇)_{c}, the second coating layer comprises crystalline phosphate XPO₄, and the third coating layer comprises carbon; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from any value in the range of -0.100 to 0.100; y is selected from any value in the range of 0.001 to 0.500; z is selected from any value in the range of 0.001 to 0.100; M in the crystalline pyrophosphates LiₐMP₂O₇ and M₃(P₂O₇)_{c} each independently comprises one or more elements selected from Fe, Ni, Mg, Co, Cu, Zn, Ti, Ag, Zr, Nb and Al; a is selected from any value in the range of 0 to 2; b is selected from any value in the range of 1 to 4; c is selected from any value in the range of 1 to 6; and X comprises one or more elements selected from Li, Fe, Ni, Mg, Co, Cu, Zn, Ti, Ag, Zr, Nb and Al; and the second positive electrode active material is selected from one or more of LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Nb, W, Zr, Nb, Sm, Cr, Cu and B, d is independently selected from any value in the range of 0.99 to 0.999, and d + e = 1; and optionally, any of the positive electrode film layers having a multi-layer structure comprises in adjacent layers a first positive electrode active material and a second positive electrode active material, respectively.

The first positive electrode active material of the present description can improve the gram capacity and kinetic performance of the secondary battery, effectively reduce the dissolution of manganese, reduce the lattice change rate and reduce the oxygen activity on the particle surface, reduce the migration of manganese ions to the negative electrode, reduce the consumption of electrolyte solution due to the decomposition of the SEI film, and improve the cycling performance and safety performance of the secondary battery; the first positive electrode active material can promote the migration of lithium ions and improve the rate performance of the secondary battery; and the first positive electrode active material can reduce the interface side reactions, reduce gas production, and improve the storage performance, cycling performance and safety performance of secondary battery.

The present description, by mixing the first positive electrode active material and the second positive electrode active material for use to complement the advantages of the two materials, improves the energy density of the secondary battery; the internal lattice structure skeletons of the first positive electrode active material and the second positive electrode active material are stable. During the charge/discharge process, the doping elements in the first positive electrode active material can effectively reduce the migration energy barrier of lithium ions, which is beneficial to the fast intercalation-deintercalation of lithium ions. In addition, the unique second coating layer of the first positive electrode active material significantly improves the electron conductivity, and the first positive electrode active material is evenly dispersed around the second positive electrode active material, thereby improving the overall electron conductivity of the mixed material, and thus improving the cell rate performance and kinetic performance of the secondary battery. Moreover, the lattice change of the first positive electrode active material is relatively low, which reduces material polarization under low-temperature conditions, and effectively improves the low-temperature cycle life and low-temperature cycling capacity retention rate of the secondary battery.

In some embodiments of the second aspect, the two surfaces of the positive electrode current collector are respectively provided with positive electrode film layers thereon, wherein each positive electrode film layer has a multi-layer structure, and two adjacent layers in each positive electrode film layer comprise the first positive electrode active material and the second positive electrode active material, respectively.

In some embodiments of the second aspect, a positive electrode film layer E and a positive electrode film layer F are respectively provided on the two surfaces of the positive electrode current collector, the positive electrode film layer E has a multi-layer structure, the positive electrode film layer F has a single-layer structure, and two adjacent layers in the positive electrode film layer E comprise the first positive electrode active material and the second positive electrode active material, respectively; and optionally, the remaining layer(s) in the positive electrode film layer E and the positive electrode film layer F each independently comprise the first positive electrode active material or the second positive electrode active material.

Embodiments of the third aspect of the present description provide a positive electrode plate comprising a positive electrode current collector and a positive electrode film layer A and a positive electrode film layer B respectively provided on the two surfaces of the positive electrode current collector; the positive electrode film layer A and the positive electrode film layer B each independently have a single-layer structure or a multi-layer structure; at least one layer of the positive electrode film layer A contains a first positive electrode active material having a core-shell structure, and at the same time, at least one layer of the positive electrode film layer B comprises a second positive electrode active material; the first positive electrode active material comprises an inner core, a first coating layer coating the inner core, a second coating layer coating the first coating layer, and a third coating layer coating the second coating layer; wherein the inner core comprises a material with a chemical formula of Li₁₊ₓMn_{1-y}A_{y}P_{1-z}R_{z}O₄, the first coating layer comprises crystalline pyrophosphate LiₐMP₂O₇ and/or M₃(P₂O₇)_{c}, the second coating layer comprises crystalline phosphate XPO₄, and the third coating layer comprises carbon; wherein A comprises one or more elements selected from Zn, Al, Na, K, Mg, Mo, W, Ti, V, Zr, Fe, Ni, Co, Ga, Sn, Sb, Nb and Ge; R comprises one or more elements selected from B, Si, N and S; x is selected from any value in the range of -0.100-0.100; y is selected from any value in the range of 0.001-0.500; z is selected from any value in the range of 0.001-0.100; M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al; a is selected from any value in the range of 0-2; b is selected from any value in the range of 1-4; c is selected from any value in the range of 1-6; and X comprises one or more elements selected from Li, Fe, Ni, Mg, Co, Cu, Zn, Ti, Ag, Zr, Nb and Al; and the second positive electrode active material is selected from one or more of LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Nb, W, Zr, Nb, Sm, Cr, Cu and B, d is independently selected from any value in the range of 0.99 to 0.999, and d + e = 1.

The first positive electrode active material of the present description can improve the gram capacity and kinetic performance of the secondary battery, effectively reduce the dissolution of manganese, reduce the lattice change rate and reduce the oxygen activity on the particle surface, reduce the migration of manganese ions to the negative electrode, reduce the consumption of electrolyte solution due to the decomposition of the SEI film, and improve the cycling performance and safety performance of the secondary battery; the first positive electrode active material can promote the migration of lithium ions and improve the rate performance of the secondary battery; and the first positive electrode active material can reduce the interface side reactions, reduce gas production, and improve the storage performance, cycling performance and safety performance of secondary battery.

The present description, by mixing the first positive electrode active material and the second positive electrode active material for use to complement the advantages of the two materials, improves the energy density of the secondary battery; the internal lattice structure skeletons of the first positive electrode active material and the second positive electrode active material are stable. During the charge/discharge process, the doping elements in the first positive electrode active material can effectively reduce the migration energy barrier of lithium ions, which is beneficial to the fast intercalation-deintercalation of lithium ions. In addition, the unique second coating layer of the first positive electrode active material significantly improves the electron conductivity, and the first positive electrode active material is evenly dispersed around the second positive electrode active material, thereby improving the overall electron conductivity of the mixed material, and thus improving the cell rate performance and kinetic performance of the secondary battery. Moreover, the lattice change of the first positive electrode active material is relatively low, which reduces material polarization under low-temperature conditions, and effectively improves the low-temperature cycle life and low-temperature cycling capacity retention rate of the secondary battery.

Unless otherwise stated, in the chemical formula of the first to third aspects, when the A is a combination of at least two elements, the above definition of the numerical range of y not only represents a definition of the stoichiometric number of each element as A, but also represents a definition of the sum of the stoichiometric numbers of the elements as A. For example, when A is a combination of at least two elements of A1, A2... and An, the stoichiometric numbers y1, y2...and yn of each of A1, A2... and An each fall within the numerical range of y defined in the present application, and the sum of y1, y2...and yn also falls within this numerical range. Similarly, when the R is a combination of at least two elements, the definitions of the numerical ranges of the stoichiometric numbers of R, M and X in the present application also have the above meanings.

Unless otherwise stated, in the chemical formula LiFe_{d}DₑPO₄, when the D is a combination of at least two elements, the above definition of the numerical range of e not only represents a definition of the stoichiometric number of each element as D, but also represents a definition of the sum of the stoichiometric numbers of the elements as D. For example, when D is a combination of at least two elements of D1, D2... and Dn, the stoichiometric numbers e1, e2... and en of each of D1, D2... and Dn each fall within the numerical range of e defined in the present application, and the sum of e1, e2... and en also falls within this numerical range.

In some embodiments of the first to third aspects, when A is one, two three or fourth elements selected from Zn, Al, Na, K, Mg, Mo, W, Ti, V, Zr, Fe, Ni, Co, Ga, Sn, Sb, Nb and Ge, A_{y} is Qₙ₁Lₙ₂Eₙ₃Kₙ₄, wherein n1 + n2 + n3 + n4 = y, and n1, n2, n3 and n4 are all positive numbers and not simultaneously zero, Q, L, E and K are each independently one element selected from Zn, Al, Na, K, Mg, Mo, W, Ti, V, Zr, Fe, Ni, Co, Ga, Sn, Sb, Nb and Ge, and optionally, at least one of Q, L, E and K is Fe. Optionally, one of n1, n2, n3 and n4 is zero, and the remaining ones are not zero; more optionally, two of n1, n2, n3 and n4 are zero, and the remaining ones are not zero; and further optionally, three of n1, n2, n3 and n4 are zero, and the remaining one is not zero. In the inner core Li₁₊ₓMn_{1-y}A_{y}P_{1-z}R_{z}O₄, it is advantageous to dope one, two, three or four of the above A elements, optionally one, two or three of the above A elements, at the manganese site; and in addition, it is advantageous to dope one or two R elements at the phosphorus site, which is conducive to even distribution of doping elements.

In the first to third aspects, the values of x, y and z satisfy the following conditions: keeping the entire inner core electrically neutral.

In the inner core Li₁₊ₓMn_{1-y}A_{y}P_{1-z}R_{z}O₄, the magnitude of x is affected by that of valence states of A and R, and that of y and z, so as to ensure that the entire system is electrically neutral. If the value of x is too small, the lithium content of the entire inner core system will decrease, which will affect the gram capacity of the material. The value of y will limit the total amount of all doping elements. If y is too small, that is, the doping amount is too small, and the doping elements will have no effect. If y exceeds 0.5, the content of Mn in the system will be less, which will affect the voltage platform of the material. The R element is doped at the P site. The P-O tetrahedron is relatively stable, and if the value of z is too large, it will affect the stability of the material, so the value of z is limited to 0.001-0.100.

In addition, in the first to third aspects, the entire inner core system keeps electrically neutral, which can ensure that the defects and impurity phases in the first positive electrode active material are as little as possible. If there is an excess of a transition metal (such as manganese) in the first positive electrode active material, since the structure of the material system itself is relatively stable, the excess transition metal is likely to be precipitated in the form of an elementary substance, or form an impurity phase inside the lattice to keep electrically neutral, so that such an impurity phase can be as little as possible. In addition, ensuring the electrical neutrality of the system can also result in lithium vacancies in the material in some cases, so that the kinetic performance of the material is more excellent.

In the first to third aspects, the values of a, b and c satisfy the following conditions: keeping the crystalline pyrophosphate LiₐMP₂O₇ or M₃(P₂O₇)_{c} electrically neutral.

In the first to third aspects, the crystalline state means that the crystallinity is 50% or more, that is, 50%-100%. A crystalline state with a crystallinity of less than 50% is referred to as a glassy state. The crystallinity of the crystalline pyrophosphate and crystalline phosphate of the present application is 50% to 100%. The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interface side reactions, but also the better lattice matching between the phosphate coating layer and the phosphate coating layer, such that a more close combination between the coating layers can be achieved.

In the first to third aspects, the crystallinity of the crystalline pyrophosphate of a first coating layer material and the crystalline phosphate of a second coating layer material of the first positive electrode active material can be tested by conventional technical means in the art, such as density method, infrared spectroscopy, differential scanning calorimetry and nuclear magnetic resonance absorption method, and may also be tested by, for example, X-ray diffraction method.

Testing for the crystallinity of the crystalline pyrophosphate of the first coating layer and the crystalline phosphate of the second coating layer of the first positive electrode active material by the specific X-ray diffraction method can comprise the following steps:
taking a certain amount of a first positive electrode active material powder, and measuring the total scattering intensity by X-rays, which is the sum of the scattering intensity of the material in the whole space, only related to the intensity of the primary rays, the chemical structure of the first positive electrode active material powder, and the total number of electrons participating in the diffraction, i.e. the mass, but has nothing to do with the ordered state of the sample; Then the crystalline scattering and non-crystalline scattering are separated from the diffraction pattern, and the crystallinity is the ratio of the crystalline partial scattering to the total scattering intensity.

It should be noted that, in the first to third aspects, the crystallinity of pyrophosphate and phosphate in the coating layers can be adjusted, for example, by adjusting the process conditions of the sintering process, such as sintering temperature, sintering time, and the like.

In the first to third aspects, since the metal ions are difficult to migrate in the pyrophosphate, the pyrophosphate as the first coating layer can effectively isolate the doped metal ions from the electrolyte solution. The structure of the crystalline pyrophosphate is stable, and therefore, the coating of the crystalline pyrophosphate can effectively inhibit the dissolution of transition metals and improve cycling performance.

In the first to third aspects, the combination between the first coating layer and the core is similar to a heterojunction, and the firmness of the combination is limited by the degree of lattice matching. When the lattice mismatch is 5% or less, the lattice matching is better, and the two are easy to combine closely. The close combination can ensure that the coating layer will not fall off in the subsequent cycling process, which is beneficial to ensuring the long-term stability of the material. The measurement of the degree of the combination between the first coating layer and the core is mainly carried out by calculating the mismatch degree of each lattice constant between the core and the coating. In the present application, after doping A and R elements in the inner core, compared with inner cores without element doping, the matching degree between the inner core and the first coating layer is improved, and the inner core and the pyrophosphate coating layer can be closer combined together.

In the first to third aspects, the crystalline phosphate is selected as the second coating layer, firstly, because of its higher degree of lattice matching with the crystalline pyrophosphate of the first coating layer material (mismatch of only 3%); and secondly, the stability of the phosphate itself is better than that of the pyrophosphate, and coating the pyrophosphate with the phosphate is beneficial to improving the stability of the material. The crystalline phosphate is stable in structure, and has excellent lithium ion conductivity, and therefore, coating with the crystalline phosphate can effectively reduce the interface side reactions on the surface of the first positive electrode active material, thereby improving the high-temperature cycling and storage performance of the secondary battery. The mode for the lattice matching between the second coating layer and the first coating layer is similar to the above combination between the first coating layer and the core. When the lattice mismatch is 5% or less, the lattice matching is better, and the two are easy to combine closely.

In the first to third aspects, the main reason why carbon is used as the third coating layer is that the carbon layer has a better electron conductivity. Since the electrochemical reaction occurs in the application to the secondary battery, the participation of electrons is required. Therefore, in order to increase the electron transport between particles and the electron transport at different positions on the particles, it is possible to use carbon with excellent conductivity for coating. Carbon coating can effectively improve the conductivity and desolvation ability of the first positive electrode active material.

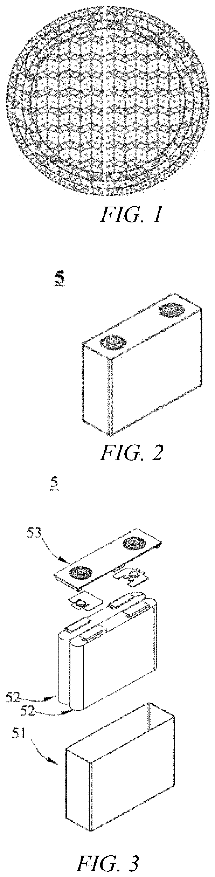

FIG. 1 is a schematic diagram of an ideal first positive electrode active material with a three-layer coating structure. As shown in the figure, the innermost circle schematically represents the inner core, and the first coating layer, the second coating layer, and the third coating layer are sequentially arranged from the inside to the outside. This figure shows an ideal state where each layer involves complete coating, but in practice, each coating layer can be complete coating or partial coating.

In some embodiments of the first to third aspects, in the second positive electrode active material, the mass of carbon accounts for 0.1% - 4% of the mass of carbon-coated LiFePO₄; and/or the mass of carbon accounts for 0.1% - 4% of the mass of carbon-coated LiFe_{d}DₑPO₄. The adoption of the second positive electrode active material with the mass content of carbon described above can further ensure that the secondary battery has excellent rate performance, kinetic performance and low-temperature cycling performance, and has higher energy density.

In some embodiments of the first to third aspects, the mass ratio of the first positive electrode active material to the second positive electrode active material is 1 : 7 - 7 : 1, optionally 1 : 4 - 4 : 1, further optionally 1 : 3 - 3 : 1, such as 1 : 7, 1 : 5, 1 : 3, 1 : 2, 3 : 5, 1 : 1, 5 : 3, 2 : 1, 3 : 1, 5 : 1, and 7 : 1. The secondary battery is guaranteed to have higher energy density, excellent kinetic performance, excellent rate performance, long low-temperature cycle life, and higher low-temperature cycling capacity retention rate, and to reduce interface side reactions.

In some embodiments of the first to third aspects, in the first positive electrode active material, A is selected from one or more elements of Fe, Ti, V, Ni, Co and Mg. By selecting the doping elements within the above ranges, it is beneficial to an enhanced doping effect. For one thing, the lattice change rate is further reduced, thereby inhibiting the dissolution of manganese and reducing the consumption of an electrolyte solution and active lithium. For another, it is also beneficial to further reducing the surface oxygen activity and the interface side reactions between the first positive electrode active material and the electrolyte solution, thereby improving the cycling performance and high-temperature storage performance of the secondary battery.

In some embodiments of the first to third aspects, in the first positive electrode active material, R is selected from one element of B, Si, N and S. By selecting the doping elements within the above ranges, the rate performance and electrical conductivity of the secondary battery can be further improved, thereby improving the gram capacity, cycling performance and high-temperature performance of the secondary battery.

In some embodiments of the first to third aspects, in the first positive electrode active material, the ratio of y to 1-y is selected from 1 : 10 to 1 : 1, optionally 1 : 4 to 1 : 1. Here, y denotes the sum of the stoichiometric numbers of the Mn-site doping elements A. When the above conditions are met, the energy density, cycling performance and rate performance of the secondary battery are further improved.

In some embodiments of the first to third aspects, in the first positive electrode active material, the ratio of z to 1-z is selected from 1 : 9 to 1 : 999, optionally 1 : 499 to 1: 249. Here, z denotes the sum of the stoichiometric numbers of the P-site doping element R. When the above conditions are met, the energy density, cycling performance and rate performance of the secondary battery are further improved.

In some embodiments of the first to third aspects, in the first positive electrode active material, the first coating layer has an interplanar spacing of the crystalline pyrophosphate in a range of 0.293-0.470 nm, and an angle of the crystal direction (111) of 18.00° - 32.00°; and the second coating layer has an interplanar spacing of the crystalline phosphate in a range of 0.244-0.425 nm, and an angle of the crystal direction (111) in a range of 20.00° - 37.00°.

Both the first coating layer and the second coating layer in the first positive electrode active material of the present application are crystalline materials. The crystalline pyrophosphate and the crystalline phosphate having an interplanar spacing and angle in the above ranges can more effectively inhibit the lattice change rate and Mn dissolution of the lithium manganese phosphate during the processes of lithium intercalation and deintercalation, thereby improving the high-temperature cycling performance, cycling stability and high-temperature storage performance of the secondary battery. The crystalline pyrophosphate and the crystalline phosphate in the coating layers can be characterized by conventional technical means in the art, and can also be characterized, for example, by means of a transmission electron microscope (TEM). Under TEM, the inner core and the coating layers can be distinguished by testing the interplanar spacing.

The specific test method of the interplanar spacing and the angle of the crystalline pyrophosphate and the crystalline phosphate in the coating layers can comprise the following steps:
taking a certain amount of the coated first positive electrode active material sample powder into a test tube, and injecting a solvent, such as alcohol, into the test tube, then fully stirring and dispersing, then taking an appropriate amount of the above solution by using a clean disposable plastic dropper and dripping same on a 300-mesh copper mesh, at this moment, part of the powder being remained on the copper mesh, transferring the copper mesh and the sample to a TEM sample chamber for testing to obtain the original picture of the TEM test, and then saving the original picture.

Opening the original picture obtained from the above TEM test in a diffractometer software, performing Fourier transform to obtain a diffraction pattern, and measuring the distance from the diffraction spot to the central position in the diffraction pattern to obtain the interplanar spacing, and calculating the angle according to the Bragg equation.

The difference between the interplanar spacing range of the crystalline pyrophosphate and that of the crystalline phosphate can be directly determined by the value of interplanar spacing.

In some embodiments of the first to third aspects, in the first positive electrode active material, the carbon in the third coating layer is a mixture of SP2-form carbon and SP3-form carbon, and optionally, the molar ratio of the SP2-form carbon to the SP3-form carbon is any value in the range of 0.1-10, optionally any value in the range of 2.0-3.0.

In some embodiments of the first to third aspects, the molar ratio of the SP2-form carbon to the SP3-form carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9 or about 10, or in any range of the above arbitrary values.

In the present application, "about" a numerical value means a range, i.e., a range of ±10% of the numerical value.

The comprehensive electrical performance of the secondary battery is improved by selecting the form of carbon in the carbon coating layer. Specifically, by using a mixed form of SP2-form carbon and SP3-form carbon and limiting the ratio of SP2-form carbon to SP3-form carbon within a certain range, the following can be avoided: if the carbon in the coating layer is in the form of amorphous SP3, the conductivity is poor; and if all the carbon is in a graphitized SP2-form, although the conductivity is good, there are few lithium ion paths, which is not conducive to the deintercalation of lithium. In addition, limiting the molar ratio of SP2-form carbon to SP3-form carbon within the above ranges can not only achieve good electrical conductivity, but also can ensure the paths of lithium ions, which is beneficial to the realization of the function of the secondary battery and the cycling performance thereof.

The mixing ratio of the SP2-form carbon to the SP3-form carbon of the third coating layer can be controlled by sintering conditions such as the sintering temperature and sintering time. For example, in the case where sucrose is used as the carbon source to prepare the third coating layer, after being subjected to pyrolysis at a high temperature, the sucrose is deposited on the second coating layer, while both the SP3-form and SP2-form carbon coating layers will be produced at a high temperature. The ratio of the SP2-form carbon to the SP3-form carbon may be adjusted by selecting high-temperature pyrolysis conditions and sintering conditions.

The structure and characteristics of the third carbon coating layer can be determined by a Raman spectroscopy, and the specific test method is as follows: subjecting the energy spectrum of the Raman test to peaking splitting to obtain Id/Ig (wherein Id is the peak intensity of SP3-form carbon, and Ig is the peak intensity of SP2-form carbon), thus confirming the molar ratio of the two forms.

In some embodiments of the first to third aspects, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or
a coating amount of the second coating layer is greater than 0 and less than or equal to 6 wt%, optionally greater than 0 and less than or equal to 5.5 wt%, more optionally 2-4 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In the present application, the coating amount of each layer is not zero.

In the first positive electrode active material with a core-shell structure of the present application, the coating amounts of the three coating layers in the present application are preferably within the above ranges, which thus can enable the full coating of the inner core, while further improving the kinetic performance and safety performance of the secondary battery without compromising the gram capacity of the positive electrode active material.

For the first coating layer, by having the coating amount within the above ranges, the following situations can be avoided: too small coating amount means that the coating layer is relatively thin, which may not be able to effectively prevent the migration of transition metals; and too large coating amount means that the coating layer is too thick, which will affect the migration of Li⁺, and thus affect the rate performance of the material.

For the second coating layer, by having a coating amount within the above ranges, the following situations can be avoided: too large coating amount may affect the overall platform voltage of the material; and too small coating amount may not be able to achieve a sufficient coating effect.

For the third coating layer, the carbon coating mainly plays the role of enhancing the electron transport between particles. However, since a large amount of amorphous carbon is comprised in the structure, the density of the carbon is low. Therefore, if the coating amount is too large, the compacted density of the electrode plate will be affected.

In some embodiments of the first to third aspects, in the first positive electrode active material, the thickness of the first coating layer is 1-10 nm.

In some embodiments of the first to third aspects, the thickness of the first coating layer may be about 2 nm, about 3 nm, about 4 nm, about 5 nm, about 6 nm, about 7 nm, about 8 nm, about 9 nm, or about 10 nm, or in any range of any of the above values.

In the present application, when the thickness of the first coating layer is in the range of 1-10 nm, the adverse effect on the kinetic performance of the material, which can be caused when the first coating layer is too thick, can be further avoided, and the problem that the migration of transition metal ions cannot be effectively prevented when the first coating layer is too thin can be avoided.

In some embodiments of the first to third aspects, in the first positive electrode active material, the thickness of the second coating layer is 2-15 nm.

In some embodiments of the first to third aspects, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or in any range of any of the above values.

In the present description, when the thickness of the second coating layer is in the range of 2-15 nm, the surface structure of the second coating layer is stable, and the side reaction with the electrolyte solution is small, so the interface side reactions can be effectively reduced, thereby improving the high-temperature performance of the secondary battery.

In some embodiments of the first to third aspects, in the first positive electrode active material, the thickness of the third coating layer is 2-25 nm.

In some embodiments of the first to third aspects, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range of any of the above values.

In the present description, when the thickness of the third coating layer is in the range of 2-25 nm, the electrical conductivity of the material can be improved, and the compacted density performance of the battery electrode plate prepared from the first positive electrode active material can be improved.

The thickness determination of the coating layer is mainly carried out by FIB, and the specific method may comprise the following steps: randomly selecting a single particle from the first positive electrode active material powder to be tested, cutting out a thin slice with a thickness of about 100 nm from the middle position or near the middle position of the selected particle, then conducting a TEM test on the thin slice, and measuring the thickness of the coating layer, with 3-5 positions being measured and the average value taken.

In some embodiments of the first to third aspects, in the first positive electrode active material, based on the weight of the first positive electrode active material, the content of the manganese element is in the range of 10 wt% - 35 wt%, optionally in the range of 15 wt% - 30 wt%, more optionally in the range of 17 wt% - 20 wt%.

In the present description, in the case where manganese is comprised only in the inner core of the first positive electrode active material, the content of manganese may correspond to that of the inner core.

In the first positive electrode active material having a core-shell structure of the present application, the content of the manganese element is within the above ranges, such that the problems such as deterioration of the stability of the material structure and decrease in density that may be caused if the content of the manganese element is too high can be effectively avoided, thereby improving the performances, such as cycling, storage and compacted density, of the secondary battery; and the problems such as low voltage platform that may be caused if the content of the manganese ele is too low can be effectively avoided, thereby improving the energy density of the secondary battery.

In some embodiments of the first to third aspects, in the first positive electrode active material, based on the weight of the first positive electrode active material, the content of the phosphorus element is in the range of 12 wt% - 25 wt%, optionally in the range of 15 wt% - 20 wt%.

In the first positive electrode active material having a core-shell structure of the present application, the content of the phosphorus element is within the above ranges, which can effectively avoid the following situations: if the content of the phosphorus element is too high, the covalency of P-O may be too strong so as to affect the conduction of small polarons, thereby affecting the electrical conductivity of the material; and if the content of the phosphorus element is too low, the stability of the inner core, the lattice structures of the pyrophosphate in the first coating layer and/or the phosphate in the second coating layer may be reduced, thereby affecting the overall stability of the material.

In some embodiments of the first to third aspects, in the first positive electrode active material, based on the weight of the first positive electrode active material, the weight ratio of the manganese element to the phosphorus element is in the range of 0.90-1.25, optionally 0.95-1.20.

In the first positive electrode active material having a core-shell structure of the present description, the weight ratio of the manganese element to the phosphorus element is within the above ranges, which can effectively avoid the following situations: if the weight ratio is too large, it means that there are too many manganese elements, and the dissolution of manganese will increase, which will affect the stability and gram capacity of the first positive electrode active material, and thus affecting the cycling performance and storage performance of the secondary battery; and if the weight ratio is too small, it means that there are too many phosphorus elements, which is prone to form impurity phases and will decrease the discharge voltage platform of the material, thereby reducing the energy density of the secondary battery.

The determination of manganese and phosphorus elements can be carried out by conventional technical means in the art. In particular, the following methods are used to determine the content of the manganese and phosphorus elements: dissolving the material in dilute hydrochloric acid (concentration 10-30%), measuring the content of each element in the solution using ICP, and then determining and converting the content of manganese element to obtain the weight percentage thereof.

In some embodiments of the first to third aspects, the first positive electrode active material has a lattice change rate, before and after complete lithium intercalation-deintercalation, of 4% or less, optionally 3.8% or less, more optionally 2.0-3.8%.

The process of lithium intercalation-deintercalation of lithium manganese phosphate (LiMnPO₄) is a two-phase reaction. The interfacial stress of the two phases is determined by the lattice change rate before and after lithium intercalation-deintercalation. The smaller the lattice change rate is, the smaller the interfacial stress is, and thus the easier Li⁺ transport is. Therefore, reducing the lattice change rate of the inner core will be beneficial to enhancing the Li⁺ transport ability, thereby improving the rate performance of the secondary battery. The first positive electrode active material having a core-shell structure of the present application can achieve a lattice change rate, before and after lithium intercalation-deintercalation, of 4% or less, so the use of the first positive electrode active material can improve the rate performance of the secondary battery. The lattice change rate may be measured with a method known in the art, e.g., X-ray diffraction (XRD).

In some embodiments of the first to third aspects, an Li/Mn antisite defect concentration of the first positive electrode active material is 4% or less, optionally 2.2% or less, more optionally 1.5-2.2%.

The Li/Mn antisite defect of the present application means that the positions of Li⁺ and Mn²⁺ have been exchanged in the LiMnPO₄ lattices. Accordingly, the Li/Mn antisite defect concentration refers to a percentage of the Li⁺ exchanged with Mn²⁺ based on the total amount of Li⁺. In the present application, the Li/Mn antisite defect concentration is tested, according to JIS K 0131-1996.

The first positive electrode active material having a core-shell structure of the present application can achieve the above lower Li/Mn antisite defect concentration. Although the mechanism is not yet clear, the inventors of the present application speculate that because the positions of Li⁺ and Mn²⁺ will be exchanged in the LiMnPO₄ lattice, and the Li⁺ transport channel is a one-dimensional channel, the migration of Mn²⁺ in the Li⁺ channel will be difficult, thereby preventing transport of Li⁺. Thus, the first positive electrode active material having a core-shell structure of the present application has a relatively low Li/Mn antisite defect concentration within the above ranges, so that it is capable of avoiding prevention of transport of Li⁺ by Mn²⁺, while improving the gram capacity and rate performance of the first positive electrode active material.

In some embodiments of the first to third aspects, the first positive electrode active material has a compacted density under 3 T of 2.2 g/cm³ or more, optionally 2.2 g/cm³ or more and 2.8 g/cm³ or less. A higher compacted density indicates a greater weight of the active material per unit volume, and thus, increasing the compacted density is beneficial in increasing the volumetric energy density of a cell. The compacted density is measured in accordance with GB/T 24533-2009.

In some embodiments of the first to third aspects, the surface oxygen valence state of the first positive electrode active material is -1.90 or less, optionally -1.90 to -1.98.

The stable valence state of oxygen is -2. The closer the valence is to -2, the stronger the ability to obtain electrons is, that is, the stronger the oxidizing ability is. Usually, the surface valence state is below -1.7. Therefore, in the present application, by limiting the surface oxygen valence state of the first positive electrode active material within the above ranges, the interface side reactions between the first positive electrode material and the electrolyte solution can be reduced, thereby improving the performances, such as cycling, high-temperature storage and gas production, of the battery cell.

The surface oxygen valence state is measured by electron energy loss spectroscopy (EELS).

In some embodiments of the first to third aspects, the sum of the mass of the first positive electrode active material and the second positive electrode active material accounts for 88% - 98.7% of the mass of the positive electrode plate. The secondary battery is further guaranteed to have excellent rate performance, kinetic performance and low-temperature cycling performance, and to have higher energy density.

In some embodiments of the first to third aspects, the first positive electrode active material has primary particles with an average particle size in the range of 50-500 nm, and a volume median particle size Dv50 in the range of 200-300 nm. Due to the agglomeration of the particles, the actually measured size of the agglomerated secondary particles may be 500-40000 nm. The size of the particles of the first positive electrode active material will affect the processing of the material and the compacted density performance of the electrode plate. By selecting the average particle size of the primary particles within the above range, the following situations can be avoided: if the average particle size of the primary particles of the first positive electrode active material is too small, the particles may be agglomerated and difficult to disperse, and more binders are required, resulting in poor brittleness of the electrode plate; and if the average particle size of the primary particles of the first positive electrode active material is too large, the gaps between the particles may be large, resulting in reduced compacted density.

Through the above solution, the lattice change rate and dissolution of Mn of the lithium manganese phosphate during the process of lithium intercalation-deintercalation can be effectively inhibited, thereby improving the high-temperature cycling stability and high-temperature storage performance of the secondary battery.

In the present description, the median particle size Dv50 refers to a particle size corresponding to a cumulative volume distribution percentage of the material reaching 50%. In the present application, the median particle size Dv50 of the material may be determined using a laser diffraction particle size analysis method. For example, the determination is carried out with reference to the standard GB/T 19077-2016 using a laser particle size analyser (e.g., Malvern Master Size 3000).

It is possible to ensure that each element is uniformly distributed in the crystal lattice without aggregation by means of process control (for example, sufficient mixing and grinding of various source materials). The positions of the main characteristic peaks in the XRD pattern of the lithium manganese phosphate doped with A and R elements are consistent with those of the undoped LiMnPO₄, indicating that no impurity phase is introduced in the doping process, and the improvement in performance of the inner core is mainly attributed to the doping with elements, rather than an impurity phase. After preparing the first positive electrode active material, the inventors of the present application cut out the middle area of the prepared first positive electrode active material particles by a focusing ion beam (abbreviated as FIB), and tests through a transmission electron microscope (abbreviated as TEM) and an X-ray energy dispersive spectrum (abbreviated as EDS) analysis show that various elements are uniformly distributed without aggregation.

In some embodiments of the first to third aspects, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments of the first to third aspects, the positive electrode film layers may further comprise other positive electrode active materials known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of the lithium transition metal oxides may include, but are not limited to, at least one of a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide and modified compounds thereof. Examples of the lithium-containing phosphates having an olivine structure may include, but are not limited to, at least one of a lithium manganese phosphate (such as LiMnPO₄), a composite of lithium manganese phosphate and carbon, a lithium manganese iron phosphate, and a composite of lithium manganese iron phosphate and carbon.

In some embodiments of the first to third aspects, the positive electrode film layer further optionally comprises a binder. As an example, the binder may comprise at least one of polyvinylidene fluoride (PVDF), polytetrafluoroethylene (PTFE), vinylidene fluoridetetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments of the first to third aspects, the positive electrode film layer further optionally comprises a conductive agent. As an example, the conductive agent may comprise at least one of superconducting carbon, acetylene black, carbon black, Ketjen black, carbon dots, carbon nanotubes, graphene, and carbon nanofibers.

In the first to third aspects, a method for preparing a first positive electrode active material comprises the following steps:
step of providing an inner core material: the inner core has a chemical formula of Li₁₊ₓMn_{1-y}A_{y}P_{1-z}R_{z}O₄, wherein x is any value in the range of -0.100-0.100, y is any value in the range of 0.001-0.500, z is any value in the range of 0.001-0.100, A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, and R is one or more elements selected from B, Si, N and S, optionally, R is an element selected from B, Si, N and S; and
coating steps: providing an LiₐMP₂O₇ and/or M_{b}(P₂O₇)_{c} suspension and an XPO₄ suspension respectively, adding the inner core material to the above suspensions, mixing and sintering same to obtain the first positive electrode active material, wherein 0 ≤ a ≤ 2, 1 ≤ b ≤ 4, 1 ≤ c ≤ 6, and the values of a, b and c satisfy the following conditions: keeping the crystalline pyrophosphate LiₐMP₂O₇ or M_{b}(P₂O₇)_{c} electrically neutral; wherein M is each independently one or more elements selected from Fe, Ni, Mg, Co, Cu, Zn, Ti, Ag, Zr, Nb or Al; and X is one or more elements selected from Li, Fe, Ni, Mg, Co, Cu, Zn, Ti, Ag, Zr, Nb or Al; and
the first positive electrode active material has a core-shell structure comprising an inner core, a first coating layer coating the inner core, a second coating layer coating the first coating layer, and a third coating layer coating the second coating layer, the first coating layer comprises crystalline pyrophosphate LiₐMP₂O₇ and/or M₃(P₂O₇)_{c}, the second coating layer comprises crystalline phosphate XPO₄, and the third coating is carbon.

In some embodiments of the first to third aspects, the step of providing the inner core material comprises the following steps:
step (1): mixing and stirring a manganese source, a dopant of element A, and an acid in a container to obtain manganese salt particles doped with element A; and
step (2): mixing the manganese salt particles doped with element A with the lithium source, a phosphorus source and a dopant of element R in a solvent to obtain a slurry, and sintering same under the protection of an inert gas atmosphere to obtain an inner core doped with element A and element R, wherein the inner core doped with element A and element R comprises Li₁₊ₓMn_{1-y}A_{y}P_{1-z}R_{z}O₄, wherein x is any value in the range of -0.100-0.100, y is any value in the range of 0.001-0.500, z is any value in the range of 0.001-0.100, A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, and R is one or more elements selected from B, Si, N and S, and optionally, R is an element selected from B, Si, N and S.

The preparation method of the present description does not have any limitations on the source of the material, and the source of a certain element can comprise one or more of an elementary substance, a sulfate, a halide, a nitrate, an organic acid salt, an oxide or a hydroxide of this element, precursor is that the source can achieve the purpose of the preparation method of the present application.

In some embodiments of the first to third aspects, in the step of providing the inner core material, the dopant of element A is one or more of the respective elementary substance, carbonate, sulfate, chloride, nitrate, organic acid salt, oxide and hydroxide of one or more elements selected from Zn, Al, Na, K, Mg, Mo, W, Ti, V, Zr, Fe, Ni, Co, Ga, Sn, Sb, Nb and Ge.

In some embodiments of the first to third aspects, in the step of providing the inner core material, the dopant of element R is one or more of the respective inorganic acid, subacid, organic acid, sulfate, chloride, nitrate, organic acid salt, oxide and hydroxide of one or more elements selected from B, Si, N and S.

In some embodiments of the first to third aspects, in the step of providing the inner core material, the manganese source may be a manganese-containing substance known in the art useful for preparing a lithium manganese phosphate. As an example, the manganese source may be one or more selected from elementary manganese, manganese dioxide, a manganese phosphate, a manganese oxalate, and a manganese carbonate.

In some embodiments of the first to third aspects, in the step of providing the inner core material, the acid may be one or more selected from organic acids such as hydrochloric acid, sulfuric acid, nitric acid, phosphoric acid, silicic acid, and a siliceous acid, and organic acids such as oxalic acid. In some embodiments, the acid is a dilute organic acid with a concentration of 60 wt% or less.

In some embodiments of the first to third aspects, in the step of providing the inner core material, the lithium source may be a lithium-containing substance known in the art useful for preparing lithium manganese phosphate. As an example, the lithium source is one or more selected from lithium carbonate, lithium hydroxide, lithium phosphate, and lithium dihydrogen phosphate.

In some embodiments of the first to third aspects, in the step of providing the inner core material, the phosphorus source may be a phosphorus-containing substance known in the art useful for preparing a lithium manganese phosphate. As an example, the phosphorus source is one or more selected from a diammonium hydrogen phosphate, an ammonium dihydrogen phosphate, an ammonium phosphate, and a phosphoric acid.

In some embodiments of the first to third aspects, in the step of providing the inner core material, after the manganese source, the dopant of element A and the acid react in a solvent to obtain an element A-doped manganese salt suspension, the suspension is filtered, dried, and then sanded, so as to obtain element A-doped manganese salt particles with a particle size of 50-200 nm.

In some embodiments of the first to third aspects, in the step of providing the inner core material, the slurry in step (2) is dried, so as to obtain a powder, and then the powder is sintered to obtain an inner core doped with element A and element R.

In some embodiments of the first to third aspects, the mixing in step (1) is carried out at a temperature of 20-120°C, optionally 40-120°C; and/or
the stirring in step (1) is carried out at 400-700 rpm for 1-9 h, optionally for 3-7 h.

Optionally, step (1) may be carried out at a reaction temperature of about 30°C, about 50°C, about 60°C, about 70°C, about 80°C, about 90°C, about 100°C, about 110°C or about 120°C; the stirring in step (1) is carried out for about 2 hours, about 3 hours, about 4 hours, about 5 hours, about 6 hours, about 7 hours, about 8 hours or about 9 hours; and optionally, the reaction temperature and stirring time in step (1) may be in any range of any of the above values.

In some embodiments of the first to third aspects, the mixing in step (2) is carried out at a temperature of 20-120°C, optionally 40-120°C for 1-12 h. Optionally, step (2) may be carried out at a reaction temperature of about 30°C, about 50°C, about 60°C, about 70°C, about 80°C, about 90°C, about 100°C, about 110°C or about 120°C; the mixing in step (2) is carried out for about 2 hours, about 3 hours, about 4 hours, about 5 hours, about 6 hours, about 7 hours, about 8 hours, about 9 hours, about 10 hours, about 11 hours or about 12 hours; and optionally, the reaction temperature and mixing time in step (2) may be in any range of any of the above values.

When the temperature and time during the preparation of the inner core particles are within the above ranges, the prepared inner core and the positive electrode active material prepared therefrom have fewer lattice defects, which is beneficial to inhibiting the dissolution of manganese and reducing the interface side reactions between the positive electrode active material and the electrolyte solution, thereby improving the cycling performance and safety performance of the secondary battery.

In some embodiments of the first to third aspects, in the step of providing the inner core material, during the preparation of the dilute manganese acid particles doped with element A and element R, the pH of the solution is controlled to be 3.5-6, optionally, the pH of the solution is controlled to be 4-6, and more optionally, the pH of the solution is controlled to be 4-5. It should be noted that in the present application, the pH of the obtained mixture can be adjusted by methods commonly used in the art, for example, by adding acid or alkali.

In some embodiments of the first to third aspects, in step (2), the molar ratio of the manganese salt particles to the lithium source to the phosphorus source is 1 : 0.5-2.1 : 0.5-2.1, and optionally, the molar ratio of the element A-doped manganese salt particles to the lithium source to the phosphorus source is about 1 : 1 : 1.

In some embodiments of the first to third aspects, in the step of providing the inner core material, the sintering conditions during the preparation of the lithium manganese phosphate doped with the element A and the element R are: the sintering is carried out at 600-950°C for 4-10 hours under an atmosphere of inert gas or a mixture of inert gas and hydrogen; optionally, the sintering can be carried out at about 650°C, about 700°C, about 750°C, about 800°C, about 850°C or about 900°C for about 2 hours, about 3 hours, about 4 hours, about 5 hours, about 6 hours, about 7 hours, about 8 hours, about 9 hours or about 10 hours; and optionally, the sintering temperature and sintering time may be in any range of any of the above values. During the preparation of the lithium manganese phosphate doped with element A and element R, if the sintering temperature is too low and the sintering time is too short, the crystallinity of the inner core of the material will be relatively low, which will affect the overall performance, and if the sintering temperature is too high, impurity phases are prone to appear in the inner core of the material, thereby affecting the overall performance; if the sintering time is too long, the inner core particles of the material will be grown to be relatively large, which will affect the gram capacity, compacted density, rate performance, and the like.

In some embodiments of the first to third aspects, in the step of providing the inner core material, the protective atmosphere is a mixed gas of 70-90 vol% nitrogen and 10-30 vol% hydrogen.

In some embodiments of the first to third aspects, the coating step comprises:
first coating step: dissolving a source of element M, a phosphorus source and an acid, and optionally a lithium source in a solvent to obtain a first coating layer suspension; fully mixing the inner core obtained in the inner core step with the first coating layer suspension obtained in the first coating step, drying, and then sintering same to obtain a first coating layer-coated material;
second coating step: dissolving a source of element X, a phosphorus source and an acid in a solvent to obtain a second coating layer suspension; fully mixing the first coating layer-coated material obtained in the first coating step with the second coating layer suspension obtained in the second coating step, drying, and then sintering same to obtain a two-layer coating layer-coated material; and
third coating step: dissolving the carbon source in a solvent, fully dissolving same to obtain a third coating layer solution; then adding the two-layer coating layer-coated material obtained in the second coating step into the third coating layer solution, mix uniformly, drying, and then sintering same to obtain a three-layer coating layer-coated material, that is, the positive electrode active material.

In some embodiments of the first to third aspects, in the coating step, the source of element M is one or more of the respective elementary substance, carbonate, sulfate, chloride, nitrate, organic acid salt, oxide and hydroxide of one or more elements selected from Fe, Ni, Mg, Co, Cu, Zn, Ti, Ag, Zr, Nb or Al.

In some embodiments of the first to third aspects, in the coating step, the source of element X is one or more of the respective elementary substance, carbonate, sulfate, chloride, nitrate, organic acid salt, oxide and hydroxide of one or more elements selected from Li, Fe, Ni, Mg, Co, Cu, Zn, Ti, Ag, Zr, Nb or Al.

The added amounts of the respective sources of the elements A, R, M and X depend on a target doping amount, and the ratio of the amounts of the lithium source, the manganese source and the phosphorus source conforms to a stoichiometric ratio.

As an example, the carbon source is one or more selected from starch, sucrose, glucose, polyvinyl alcohol, polyethylene glycol, and citric acid.

In some embodiments of the first to third aspects, in the first coating step, the pH of the solution dissolved with the source of element M, a phosphorus source and an acid, and optionally a lithium source is controlled to be 3.5-6.5, followed by stirring and reacting for 1-5 h, and then the temperature of the solution is increased to 50-120°C and maintained for 2-10 h, and/or the sintering is carried out at 650-800°C for 2-6 hours.

In some embodiments of the first to third aspects, in the first coating step, the reaction is fully carried out. Optionally, in the first coating step, the reaction is carried out for about 1.5 hours, about 2 hours, about 3 hours, about 4 hours, about 4.5 hours or about 5 hours. Optionally, in the first coating step, the reaction time of the reaction may be in any range of any of the above values.

In some embodiments of the first to third aspects, in the first coating step, the pH of the solution is controlled to be 4-6. Optionally, in the first coating step, the temperature of the solution is increased to about 55°C, about 60°C, about 70°C, about 80°C, about 90°C, about 100°C, about 110°C or about 120°C, and is maintained for about 2 hours, about 3 hours, about 4 hours, about 5 hours, about 6 hours, about 7 hours, about 8 hours, about 9 hours or about 10 hours; and optionally, in the first coating step, the increased temperature and the holding time may be in any range of any of the above values.

In some embodiments of the first to third aspects, in the first coating step, sintering can be carried out at about 650°C, about 700°C, about 750°C, or about 800°C for about 2 hours, about 3 hours, about 4 hours, about 5 hours or about 6 hours; and optionally, the sintering temperature and sintering time may be in any range of any of the above values.

In the first coating step, by controlling the sintering temperature and time within the above range, the following situations can be avoided: if the sintering temperature in the first coating step is too low and the sintering time is too short, the crystallinity of the first coating layer will be low, and there will be more amorphous materials, which will lead to a decrease in the effect of inhibiting the dissolution of metals, thereby affecting the cycling performance and high-temperature storage performance of the secondary battery; if the sintering temperature is too high, impurity phases will appear in the first coating layer, which will also affect its effect of inhibiting the dissolution of metals, thereby affecting the performances, such as cycling and high-temperature storage performance, of the secondary battery; and if the sintering time is too long, the thickness of the first coating layer will increase, which will affect the migration of Li⁺, thereby affecting the performances, such as gram capacity and rate performance, of the material.

In some embodiments of the first to third aspects, in the second coating step, after dissolving the source of element X, phosphorus source and acid in the solvent, the mixture is stirred and reacted for 1-10 h, then the temperature of the solution is increased to 60-150°C, and is maintained for 2-10 h, and/or the sintering is carried out at 500-700°C for 6-10 hours.

Optionally, in the second coating step, the reaction is fully carried out. Optionally, in the second coating step, the reaction is carried out for about 1.5 hours, about 2 hours, about 3 hours, about 4 hours, about 4.5 hours, about 5 hours, about 6 hours, about 7 hours, about 8 hours, about 9 hours or about 10 hours. Optionally, in the second coating step, the reaction time of the reaction may be in any range of any value mentioned above.

Optionally, in the second coating step, the temperature of the solution is increased to about 65°C, about 70°C, about 80°C, about 90°C, about 100°C, about 110°C, about 120°C, about 130°C, about 140°C or about 150°C, and is maintained for about 2 hours, about 3 hours, about 4 hours, about 5 hours, about 6 hours, about 7 hours, about 8 hours, about 9 hours or about 10 hours; and optionally, in the second coating step, the increased temperature and the holding time may be in any range of any of the above values.

In the step of providing the inner core material and the first coating step and the second coating step, before sintering, that is, in the preparation of the inner core material undergoing a chemical reaction (steps (1)-(2)) and in the preparation of the first coating layer suspension and the second coating layer suspension, by selecting an appropriate reaction temperature and reaction time as above, the following situations can be avoided: if the reaction temperature is too low, the reaction cannot take place or the reaction rate is relatively low; if the temperature is too high, the product decomposes or forms an impurity phase; if the reaction time is too long, the particle size of the product is relatively large, which may prolong the time and increase the difficulty of the subsequent processes; and if the reaction time is too short, the reaction is incomplete and fewer products are obtained.

Optionally, in the second coating step, sintering may be carried out at about 550°C, about 600°C, or about 700°C for about 6 hours, about 7 hours, about 8 hours, about 9 hours, or about 10 hours; and optionally, the sintering temperature and sintering time may be in any range of any of the above values.

In the second coating step, by controlling the sintering temperature and time within the above range, the following situations can be avoided: if the sintering temperature is too low and the sintering time is too short in the second coating step, the crystallinity of the second coating layer will be low, the amorphous state will be more, and the performance of reducing the surface reactivity of the material will decrease, thereby affecting the performances, such as cycling and high-temperature storage performance, of the secondary battery; if the sintering temperature is too high, impurity phases will appear in the second coating layer, which will also affect its effect of reducing the surface reactivity of the material, thereby affecting the performances, such as cycling and high-temperature storage performance, of the secondary battery; and if the sintering time is too long, the thickness of the second coating layer will increase, which will affect the voltage platform of the material, thereby reducing the energy density of the material.

In some embodiments of the first to third aspects, the sintering in the third coating step is carried out at 700-800°C for 6-10 hours. Optionally, in the third coating step, sintering may be carried out at about 700°C, about 750°C, or about 800°C for about 6 hours, about 7 hours, about 8 hours, about 9 hours, or about 10 hours; and optionally, the sintering temperature and sintering time may be in any range of any of the above values.

In the third coating step, by controlling the sintering temperature and time within the above ranges, the following situations can be avoided: if the sintering temperature in the third coating step is too low, the degree of graphitization of the third coating layer will be reduced, which will affect the electrical conductivity of the third coating layer, thereby affecting the gram capacity of the material; if the sintering temperature is too high, the degree of graphitization of the third coating layer will be too high, which will affect the transmission of Li⁺, thereby affecting the performances, such as gram capacity, of the material; if the sintering time is too short, the coating layer will be too thin, which will affect the electrical conductivity of the coating layer, thereby affecting the gram capacity of the material; and if the sintering time is too long, the coating layer will be too thick, which will affect the performances, such as compacted density, of the material.

In the first coating step, the second coating step, and the third coating step described above, the drying temperature is 100°C to 200°C, optionally 110°C to 190°C, more optionally 120°C to 180°C, even more optionally 120°C to 170°C, and most optionally 120°C to 160°C, and the drying time is 3-9 h, optionally 4-8 h, more optionally 5-7 h, and most optionally about 6 h.

The dissolution of Mn and Mn-site doping elements of the secondary battery prepared from the first positive electrode active material prepared by the method for preparing a first positive electrode active material of the present application is reduced after cycling, and the high-temperature stability, high-temperature cycling performance and rate performance are improved. In addition, the extensive source of raw materials, the low cost, and the simple process are conducive to the realization of industrialization.

### [Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g., sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application and can be selected according to actual requirements. For example, the electrolyte may be in a liquid state, a gel state or an all-solid state.

In some embodiments, the electrolyte is liquid and comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. As an example, the additive may comprise a negative electrode film-forming additive and a positive electrode film-forming additive and may further comprise an additive that can improve some performance of the battery, such as an additive that improves overcharge performance of the battery, or an additive that improves high-temperature performance or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The shape of the secondary battery is not particularly limited in the present application, and may be cylindrical, square or of any other shape. For example, FIG. 2 shows a secondary battery 5 with a square structure as an example.

In some embodiments, referring to FIG. 3, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a stacking process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

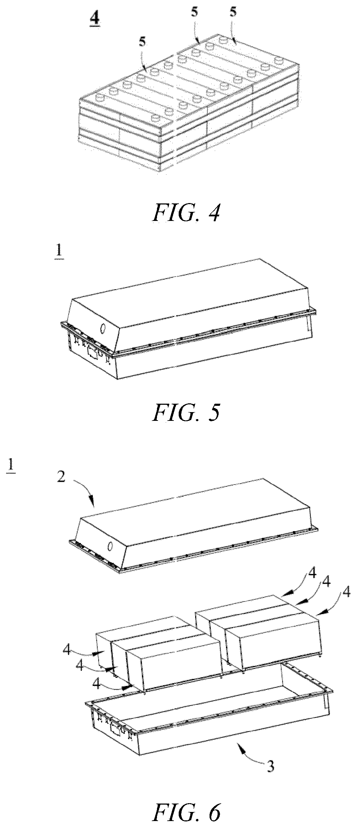

FIG. 4 shows a battery module 4 as an example. Referring to FIG. 4, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

FIG. 5 and FIG. 6 show a battery pack 1 as an example. Referring to FIG. 5 and FIG. 6, the battery pack 1 may comprise a battery case and a plurality of battery modules 4 provided in the battery case. The battery box comprises an upper box body 2 and a lower box body 3, wherein the upper box body 2 can cover the lower box body 3 to form a closed space for accommodating the battery modules 4. A plurality of battery modules 4 may be arranged in the battery case in any manner.

In addition, the present description further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, the secondary battery, battery module or battery pack can be selected according to the usage requirements thereof.

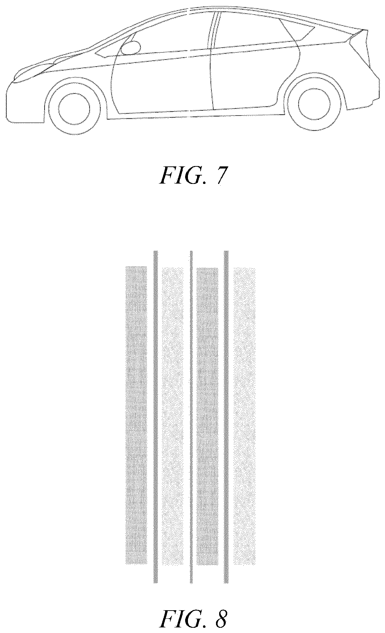

FIG. 7 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

### [Preparation examples]

Hereinafter, the preparation examples of the present description will be explained. The preparation examples described below are exemplary and are merely for explaining the present description, and should not be construed as limiting the present description. The preparation examples in which techniques or conditions are not specified are based on the techniques or conditions described in documents in the art or according to the product introduction. The reagents or instruments used therein for which manufacturers are not specified are all conventional products that are commercially available.

The sources of the raw materials involved in the preparation examples of the present description are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Materials Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Zhixin Chemical Co., Ltd. | 500 g |
| Vanadium dichloride | VCl₂ | Shanghai Jinjinle Industrial Co., Ltd. | 1 Kg |
| Oxalic acid dihydrate | C₂H₂O₄.2(H₂O) | Shanghai Jinjinle Industrial Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Dilute sulfuric acid | H₂SO₄ | Shenzhen Hisian Biotechnology Co., Ltd. | Mass fraction 60% |
| Dilute nitric acid | HNO₃ | Anhui Lingtian Fine Chemical Co., Ltd. | Mass fraction 60% |
| Siliceous acid | H₂SiO₃ | Shanghai Yuanye Biotechnology Co., Ltd. | 100 g, mass fraction 99.8% |

### Preparation of positive electrode active material and slurry thereof

### Preparation example 1

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride are mixed thoroughly for 6 h in a mixer. The resulting mixture is then transferred into a reaction kettle, 5 L of deionized water and 1260.6 g of oxalic acid dihydrate are added, heated to 80°C, then stirred thoroughly for 6 h at a rotation speed of 500 rpm and mixed uniformly until the reaction is completed (no bubbles are generated), so as to obtain an Fe, Co, and V co-doped manganese oxalate suspension. Then, the suspension is filtered, dried at 120°C and then sanded, so as to obtain manganese oxalate particles with a particle size of 100 nm.

### Step S2: Preparation of inner core Li_{0.997}Mn_{0.60}Fe_{0.393}V_{0.004}C_{00.003}P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid are added to 20 L of deionized water, fully stirred, and mixed uniformly and reacted at 80°C for 10 h to obtain a slurry. The slurry is transferred into a spray drying apparatus for spray-drying granulation, and dried at a temperature of at 250°C to obtain a powder. In a protective atmosphere (90% of nitrogen and 10% of hydrogen), the powder is sintered in a roller kiln at 700°C for 4 h to obtain an inner core material. The element content of the inner core material is detected using inductively coupled plasma (ICP) emission spectrometry, and the chemical formula of the inner core is obtained as shown above.

### Step S3: Preparation of the first coating layer suspension

Preparation of Li₂FeP₂O₇ solution: 7.4 g of lithium carbonate, 11.6 g of ferrous carbonate, 23.0 g of ammonium dihydrogen phosphate and 12.6 g of oxalic acid dihydrate are dissolved in 500 mL of deionized water, the pH is controlled to be 5, then same is stirred and reacted at room temperature for 2 h to obtain a solution, and then the solution is heated to 80°C and kept at this temperature for 4 h to obtain a first coating layer suspension.

### Step S4: Coating of the first coating layer

1571.9 g of doped lithium manganese phosphate inner core material obtained in step S2 is added to the first coating layer suspension (the content of the coating material is 15.7 g) obtained in step S3, fully stirred and mixed for 6 h; after uniformly mixing, the mixture is transferred in an oven at 120°C and dried for 6 h, and then sintered at 650°C for 6 h to obtain a pyrophosphate coated material.

### Step S5: Preparation of the second coating layer suspension

3.7 g of lithium carbonate, 11.6 g of ferrous carbonate, 11.5 g of ammonium dihydrogen phosphate and 12.6 g of oxalic acid dihydrate are dissolved in 1500 mL of deionized water, then same is stirred and reacted for 6 h to obtain a solution, and then the solution is heated to 120°C and kept at this temperature for 6 h to obtain a second coating layer suspension.

### Step S6: Coating of the second coating layer

1586.8 g of the pyrophosphate coated material obtained in step S4 is added to the second coating layer suspension (the content of the coating material is 47.1 g) obtained in step S5, fully stirred and mixed for 6 h; after uniformly mixing, the mixture is transferred in an oven at 120°C and dried for 6 h, and then sintered at 700°C for 8 h to obtain a two-layer coated material.

### Step S7: Preparation of aqueous solution of the third coating layer

37.3 g of sucrose is dissolved in 500 g of deionized water, then stirred and fully dissolved to obtain an aqueous solution of sucrose.

### Step S8: Coating of the third coating layer

1633.9 g of the two-layer coated material obtained in step S6 is added to the sucrose solution obtained in step S7, stirred together and mixed for 6 h; after uniformly mixing, the mixture is transferred in an oven at 150°C and dried for 6 h, and then sintered at 700°C for 10 h to obtain a third-layer coated material.

### Preparation examples 2 to 42, and comparative examples 1 to 17

The positive electrode active materials of preparation examples 2 to 42 and comparative examples 1 to 17 are prepared in a method similar to that of preparation example 1, and the differences in the preparation of the positive electrode active materials are shown in Tables 1-6.

In comparative examples 1-2, 4-10, and 12, the first layer is not coated, so there are no steps S3-S4; and in comparative examples 1-11, the second layer is not coated, so there are no steps S5-S6.

**Table 1: Preparation of Fe, Co, V and S co-doped manganese oxalate and preparation of inner core (Steps S1-S2)**

| No. | Chemical formula of inner core* | Raw materials used in Step S 1 | Raw materials used in Step S2 |
|---|---|---|---|
| Comparative examples 1 and 13 | LiMnPO₄ | Manganese carbonate, 1149.3 g; water, 5 L; oxalic acid dihydrate, 1260.6 g; | Manganese oxalate dihydrate obtained in step S1 (in C₂O₄Mn•2H₂O), 1789.6 g; lithium carbonate, 369.4 g; ammonium dihydrogen phosphate, 1150.1 g; water, 20 L |
| Comparative example 2 | LiMn_{0.60}Fe_{0.40}PO₄ | Manganese carbonate, 689.6 g; ferrous carbonate, 463.4 g; water, 5 L; oxalic acid dihydrate, 1260.6 g; | Iron manganese oxalate dihydrate obtained in step S1 (in C₂O₄Mn_{0.60}Fe_{0.40}•2H₂O), 1793.2 g; lithium carbonate, 369.4 g; ammonium dihydrogen phosphate, 1150.1 g; water, 20 L |
| Comparative example 3 | LiMn_{0.80}Fe_{0.20}PO₄ | Manganese carbonate, 919.4 g; ferrous carbonate, 231.7 g; water, 5 L; oxalic acid dihydrate, 1260.6 g; | Iron manganese oxalate dihydrate obtained in step S1 (in C₂O₄Mn_{0.80}Fe_{0.20}•2H₂O), 1791.4 g; lithium carbonate, 369.4 g; ammonium dihydrogen phosphate, 1150.1 g; water, 20 L |
| Comparative example 4 | LiMn_{0.70}Fe_{0.295}V_{0.005}PO₄ | Manganese carbonate, 804.5 g; ferrous carbonate, 341.8 g; vanadium dichloride, 6.1 g; water, 5 L; oxalic acid dihydrate, 1260.6 g; | Vanadium iron manganese oxalate dihydrate obtained in step S1 (in C₂O₄Mn_{0.70}Fe_{0.295}V_{0.005}•2H₂O), 1792.0 g; lithium carbonate, 369.4 g; ammonium dihydrogen phosphate, 1150.1 g; water, 20 L |
| Comparative examples 5 and 15 | LiMn_{0.60}Fe_{0.395}Mg_{0.005}PO₄ | Manganese carbonate, 689.6 g; ferrous carbonate, 457.6 g; magnesium carbonate, 4.2 g; water, 5 L; oxalic acid dihydrate, 1260.6 g; | Magnesium iron manganese oxalate dihydrate obtained in step S1 (in C₂O₄Mn_{0.60}Fe_{0.395}Mg_{0.005}•2H₂O), 1791.6 g; lithium carbonate, 369.4 g; ammonium dihydrogen phosphate, 1150.1 g; water, 20 L |
| Comparative example 6 | LiMn_{0.60}Fe_{0.35}Ni_{0.05}PO₄ | Manganese carbonate, 689.6 g; ferrous carbonate, 405.4 g; nickel carbonate, 59.3 g; water, 5 L; oxalic acid dihydrate, 1260.6 g; | Nickel manganese oxalate dihydrate obtained in step S1 (in C₂O₄Mn_{0.60}Fe_{0.35}Ni_{0.05}•2H₂O), 1794.6 g; lithium carbonate, 369.4 g; ammonium dihydrogen phosphate, 1150.1 g; water, 20 L |
| Comparative examples 7 and 9 | LiMn_{0.60}Fe_{0.395}V_{0.002}Ni_{0.003}PO₄ | Manganese carbonate, 689.6 g; ferrous carbonate, 457.6 g; vanadium dichloride, 2.4 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.60}Fe_{0.395}V_{0.002}Ni_{0.003}•2H₂O), 1793.2 g; lithium carbonate, 369.4 g; ammonium dihydrogen phosphate, 1150.1 g; water, 20 L |
| Comparative example 8 | LiMn_{0.60}0Fe_{0.395}V_{0.002}Mg_{0.003}PO₄ | Manganese carbonate, 689.6 g; ferrous carbonate, 457.6 g; vanadium dichloride, 2.4 g; magnesium carbonate, 2.53 g; water, 5 L; oxalic acid dihydrate, 1260.6 g; | Magnesium vanadium iron manganese oxalate dihydrate obtained in step S1 (in C₂O₄Mn_{0.60}FC_{0.395}V_{0.002}Mg_{0.003}•2H₂O), 1792.1 g; lithium carbonate, 369.4 g; ammonium dihydrogen phosphate, 1150.1 g; water, 20 L |
| Comparative examples 10-12, comparative examples 16-17, and preparation examples 1-10 | Li_{0.997}Mn_{0.60}Fe_{0.393}V_{0.004}Co_{0.003}P_{0.99}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}CO_{0.003} •2H₂O), 1793.1 g; lithium carbonate, 368.3 g; ammonium dihydrogen phosphate, 1146.6 g; dilute sulfuric acid, 4.9 g; water, 20 L |
| Comparative example 14 | Li_{1.2}MnP_{0.8}Si_{0.2}O₄ | Manganese carbonate, 1149.3 g; water, 5 L; oxalic acid dihydrate, 1260.6 g; | Manganese oxalate dihydrate obtained in step S1 (in C₂O₄Mn•2H₂O), 1789.6 g; lithium carbonate, 443.3 g; ammonium dihydrogen phosphate, 920.1 g; siliceous acid, 156.2 g; water, 20 L |
| Preparation example 11 | Li_{1.001}Mn_{0.60}Fe_{0.393} V_{0.004}Co_{0.003}P_{0.999}Si_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}CO_{0.003} •2H₂O), 1793.1 g; lithium carbonate, 369.8 g; ammonium dihydrogen phosphate, 1148.9 g; siliceous acid, 0.8 g; water, 20 L |
| Preparation example 12 | LiMn_{0.60}Fe_{0.393}V_{0.004}P_{0.998}N_{0.002}O₂ PO.998NO.00204 | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in Step S1 (in C₂O₄Mn_{0.60}Fe_{0.393}V_{0.004}Co_{0.003}•2H₂O), 1793.1 g; lithium carbonate, 369.4 g; ammonium dihydrogen phosphate, 1147.8 g; dilute nitric acid, 2.7 g; water, 20 L |
| Preparation example 13 | Li_{0.995}Mn_{0.65}Fe_{0.34}V_{0.004}Co_{0.005}P_{0.995}S_{0.005}O₄ | Manganese carbonate, 747.1 g; ferrous carbonate, 395.1 g; cobalt sulfate, 7.8 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.65}Fe_{0.341}V_{0.004}Co_{0.005}•2H₂O), 1792.7 g; lithium carbonate, 367.6 g; ammonium dihydrogen phosphate, 1144.3 g; dilute sulfuric acid, 8.2 g; water, 20 L |
| Preparation example 14 | Li_{1.002}Mn_{0.70}Fe_{0.293}V_{0.004}Co_{0.003}P_{0.998}Si_{0.002}O₄ | Manganese carbonate, 804.6 g; ferrous carbonate, 339.5 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.70}Fe_{0.293}V_{0.004}Co_{0.003}•2H₂O), 1792.2 g; lithium carbonate, 370.2 g; 1147.8; siliceous acid, 1.6 g; water, 20 L |
| Preparation examples 15 and 17 | LiMn_{0.60}Fe_{0.393}V_{0.004}Co_{0.003}P_{0.999}N_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.4 g; ammonium dihydrogen phosphate, 1148.9 g; dilute nitric acid, 1.4 g; water, 20 L |
| Preparation example 16 | Li_{0.997}Mn_{0.60}Fe_{0.393}V_{0.004}Co_{0.003}P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.0032}•2H₂O), 1793.1 g; lithium carbonate, 368.7 g; ammonium dihydrogen phosphate, 1146.6 g; dilute sulfuric acid, 4.9 g; water, 20 L |
| Preparation example 18 | LiMn_{0.60}Fe_{0.393}V_{0.004}Mg_{0.003}P_{0.995}N_{0.005}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Magnesium vanadium iron manganese oxalate dihydrate obtained in step S1 (in C₂O₄Mn_{0.60}Fe_{0.393}V_{0.004}Mg_{0.003}•2H₂O), 1791.1 g; lithium carbonate, 369.4 g; ammonium dihydrogen phosphate, 1144.3 g; dilute nitric acid, 7.0 g; water, 20 L |
| Preparation example 19 | Li_{0.999}Mn_{0.60}Fe_{0.393}V_{0.004}Mg_{0.003}P_{0.999}S_{0.001}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Magnesium vanadium iron manganese oxalate dihydrate obtained in step S1 (in C₂O₄Mn_{0.60}Fe_{0.393}V_{0.004}Mg_{0.003}•2H₂O), 1791.1 g; lithium carbonate, 369.0 g; ammonium dihydrogen phosphate, 1148.9 g; dilute sulfuric acid, 1.6 g; water, 20 L |
| Preparation example 20 | Li_{0.998}Mn_{0.60}Fe_{0.393}V_{0.004}Ni_{0.003}P_{0.998}5_{0.002}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1792.2 g; lithium carbonate, 368.7 g; ammonium dihydrogen phosphate, 1147.8 g; dilute sulfuric acid, 3.2 g; water, 20 L |
| Preparation examples 21-24 | Li_{1.001}Mn_{0.60}Fe_{0.393}V_{0.004}Ni_{0.003}P_{0.999}Si_{0.001} O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.8 g; ammonium dihydrogen phosphate, 1148.9 g; siliceous acid, 0.8 g; water, 20 L |
| Preparation example 25 | Li_{1.001}Mn_{0.50}Fe_{0.493}V_{0.004}Ni_{0.003}P_{0.999}Si_{0.001} O₄ | Manganese carbonate, 574.7 g; ferrous carbonate, 571.2 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.50}Fe_{0.493}V_{0.004}Ni_{0.003}•2H₂O), 1794.0 g; lithium carbonate, 369.8 g; ammonium dihydrogen phosphate, 1148.9 g; siliceous acid, 0.8 g; water, 20 L |
| Preparation example 26 | Li_{1.001}Mn_{0.999}Fe_{0.001}P_{0.999}Si_{0.001}O₄ | Manganese carbonate, 1148.2 g; ferrous carbonate, 1.2 g; water, 5 L; oxalic acid dihydrate, 1260.6 g; | Iron manganese oxalate dihydrate obtained in step S1 (in C₂O₄Mn_{0.999}Fe_{0.001}•2H₂O), 1789.6 g; lithium carbonate, 369.8 g; ammonium dihydrogen phosphate, 1148.9 g; siliceous acid, 0.8 g; water, 20 L |
| Preparation example 27 | LiMn_{0.60}Fe_{0.393}V_{0.004}Ni_{0.003}P_{0.9}N_{0.100}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.4 g; ammonium dihydrogen phosphate, 1035.1 g; dilute nitric acid, 140.0 g; water, 20 L |
| Preparation example 28 | Li_{1.001}Mn_{0.40}Fe_{0.593}V_{0.004}Ni_{0.003}P_{0.999}Si_{0.001} O₄ | Manganese carbonate, 459.7 g; ferrous carbonate, 686.9 g; vanadium dichloride, 4.8 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.40}Fe_{0.593}V_{0.004}Ni_{0.003}•2H₂O), 1794.9 g; lithium carbonate, 369.8 g; ammonium dihydrogen phosphate, 1148.9 g; siliceous acid, 0.8 g; water, 20 L |
| Preparation example 29 | Li_{1.001}Mn_{0.40}Fe_{0.393}Vo_{0.204}Ni_{0.003}P_{0.999}Si_{0.00}O₄ | Manganese carbonate, 459.7 g; ferrous carbonate, 455.2 g; vanadium dichloride, 248.6 g; nickel carbonate, 3.6 g; water, 5 L; oxalic acid dihydrate, 1260.6 g; | Nickel vanadium iron mangancsc oxalate dihydrate obtained in step S1 (in C₂O₄Mn_{0.40}Fe_{0.393}V_{0.204}Ni_{0.003}•2H₂O), 1785.1 g; lithium carbonate, 369.8 g; ammonium dihydrogen phosphate, 1148.9 g; siliceous acid, 0.8 g; water, 20 L |

| | | | |
|---|---|---|---|
| *For the determination method, please refer to the "Performance test of positive electrode active material" section below for details. | | | |

**Table 2: Preparation of first coating layer suspension (Step S3)**

| No. | Coating material of first coating layer* | Preparation of first coating layer suspension |
|---|---|---|
| Comparative examples 3 and 16 | Amorphous Li₂FeP₂O₇ | Allowing 7.4 g of lithium carbonate; 11.6 g of ferrous carbonate; 23.0 g of ammonium dihydrogen phosphate; 12.6 g of oxalic acid dihydrate; controlling the pH to be 5 |
| Comparative examples 11, 13-15, and 17, and preparation examples 1-14, 19, and 21-29 | Crystalline Li₂FeP₂O₇ | 7.4 g of lithium carbonate; 11.6 g of ferrous carbonate; 23.0 g of ammonium dihydrogen phosphate; 12.6 g of oxalic acid dihydrate; controlling the pH to be 5 |
| Preparation examples 15-16 | Crystalline Al₄(P₂O₇)₃ | 53.3 g of aluminum chloride; 34.5 g of ammonium dihydrogen phosphate; 18.9 g of oxalic acid dihydrate; controlling the pH to be 4 |
| Preparation examples 17-18 and 20 | Crystalline Li₂NiP₂O₇ | 7.4 g of lithium carbonate; 11.9 g of nickel carbonate; 23.0 g of ammonium dihydrogen phosphate; 12.6 g of oxalic acid dihydrate; controlling the pH to be 5 |
| Preparation example 30 | Li₂Mg P₂O₇ | 7.4 g of lithium carbonate; 8.4 g of magnesium carbonate; 23.0 g of ammonium dihydrogen phosphate; 12.6 g of oxalic acid dihydrate |
| Preparation example 31 | Li₂Co P₂O₇ | 7.4 g of lithium carbonate, 15.5 g of cobalt sulfate; 23.0 g of ammonium dihydrogen phosphate; 12.6 g of oxalic acid dihydrate |
| Preparation example 32 | Li₂Cu P₂O₇ | 7.4 g of lithium carbonate, 16.0 g of copper sulfate; 23.0 g of ammonium dihydrogen phosphate; 12.6 g of oxalic acid dihydrate |
| Preparation example 33 | Li₂Zn P₂O₇ | 7.4 g of lithium carbonate, 12.5 g of zinc carbonate; 23.0 g of ammonium dihydrogen phosphate; 12.6 g of oxalic acid dihydrate |
| Preparation example 34 | TiP₂O₇ | 24.0 g of titanium sulfate, 23.0 g of ammonium dihydrogen phosphate; 12.6 g of oxalic acid dihydrate |
| Preparation example 35 | Ag₄P₂O₇ | 67.9 g of silver nitrate, 23.0 g of ammonium dihydrogen phosphate, and 25.2 g of oxalic acid dihydrate |
| Preparation example 36 | ZrP₂O₇ | 56.6 g of zirconium sulfate, 23.0 g of ammonium dihydrogen phosphate, and 25.2 g of oxalic acid dihydrate |

| | | |
|---|---|---|
| *For the determination method, please refer to the "Performance test of positive electrode active material" section below for details. | | |

**Table 3: Coating of first coating layer (Step S4)**

| No. | Coating material of first coating layer and amount thereof* (based on the weight of the inner core) | Amount of inner core added in step S4 | Step S4: Coating of first coating layer | | | | |
|---|---|---|---|---|---|---|---|
| | | | Amount of corresponding coating material in first coating layer suspension | Mixing time (h) | Drying temperature (°C) | Sintering temperature (°C) | Sintering time (h) |
| Comparative example 3 | 2% of amorphous Li₂FeP₂O₇ | 1570.4 g | 31.4 g | 6 | 120 | 500 | 4 |
| Comparative example 11 | 1% of crystalline Li₂FeP₂O₇ | 1571.1 g | 15.7 g | 6 | 120 | 650 | 6 |
| Comparative example 13 | 2% of crystalline Li₂FeP₂O₇ | 1568.5 g | 31.4 g | 6 | 120 | 650 | 6 |
| Comparative example 14 | 2% of crystalline Li₂FeP₂O₇ | 1562.8 g | 31.2 g | 6 | 120 | 650 | 6 |
| Comparative example 15 | 2% of crystalline Li₂FeP₂O₇ | 1570.6 g | 31.4 g | 6 | 120 | 650 | 6 |
| Comparative example 16 | 2% of amorphous Li₂FeP₂O₇ | 1571.1 g | 31.4 g | 6 | 120 | 500 | 4 |
| Comparative example 17 | 2% of crystalline Li₂FeP₂O₇ | 1571.1 g | 31.4 g | 6 | 120 | 650 | 6 |
| Preparation examples 1-4 and 8-10 | 1% of Li₂FeP₂O₇ | 1571.9 g | 15.7 g | 6 | 120 | 650 | 6 |
| Preparation example 5 | 2% of Li₂FeP₂O₇ | 1571.9 g | 31.4 g | 6 | 120 | 650 | 6 |
| Preparation example 6 | 3% of Li₂FeP₂O₇ | 1571.1 g | 47.1 g | 6 | 120 | 650 | 6 |
| Preparation example 7 | 5% of Li₂FeP₂O₇ | 1571.9 g | 78.6 g | 6 | 120 | 650 | 6 |
| Preparation example 11 | 1% of Li₂FeP₂O₇ | 1572.1 g | 15.7 g | 6 | 120 | 650 | 6 |
| Preparation example 12 | 1% of Li₂FeP₂O₇ | 1571.7 g | 15.7 g | 6 | 120 | 650 | 6 |
| Preparation example 13 | 2% of Li₂FeP₂O₇ | 1571.4 g | 31.4 g | 6 | 120 | 650 | 6 |
| Preparation example 14 | 2.5% of Li₂FeP₂O₇ | 1571.9 g | 39.3 g | 6 | 120 | 650 | 6 |
| Preparation example 15 | 2% of Al₄(P₂O₇)₃ | 1571.9 g | 31.4 g | 6 | 120 | 680 | 8 |
| Preparation example 16 | 3% of Al₄(P₂O₇)₃ | 1571.9 g | 47.2 g | 6 | 120 | 680 | 8 |
| Preparation example 17 | 1.5% of Li₂NiP₂O₇ | 1571.9 g | 23.6 g | 6 | 120 | 630 | 6 |
| Preparation example 18 | 1% of Li₂NiP₂O₇ | 1570.1 g | 15.7 g | 6 | 120 | 630 | 6 |
| Preparation example 19 | 2% of Li₂FeP₂O₇ | 1571.0 g | 31.4 g | 6 | 120 | 650 | 6 |
| Preparation example 20 | 1% of Li₂NiP₂O₇ | 1571.9 g | 15.7 g | 6 | 120 | 630 | 6 |
| Preparation examples 21, 23, and 24 | 2% of Li₂FeP₂O₇ | 1572.1 g | 31.4 g | 6 | 120 | 650 | 6 |
| Preparation example 22 | 5.50% of Li₂FeP₂O₇ | 1572.1 g | 86.5 g | 6 | 120 | 650 | 6 |
| Preparation example 25 | 1% of Li₂FeP₂O₇ | 1573.0 g | 15.7 g | 6 | 120 | 650 | 6 |
| Preparation example 26 | 1% of Li₂FeP₂O₇ | 1568.6 g | 15.7 g | 6 | 120 | 650 | 6 |
| Preparation example 27 | 1% of Li₂FeP₂O₇ | 1569.2 g | 15.7 g | 6 | 120 | 650 | 6 |
| Preparation example 28 | 2% of crystalline Li₂FeP₂O₇ | 1573.9 g | 31.4 g | 6 | 120 | 650 | 6 |
| Preparation example 29 | 2% of crystalline Li₂FeP₂O₇ | 1564.1 g | 31.2 g | 6 | 120 | 650 | 6 |

| | | | | | | | |
|---|---|---|---|---|---|---|---|
| *For the determination method, please refer to the "Performance test of positive electrode active material" section below for details. | | | | | | | |

**Table 4: Preparation of second coating layer suspension (Step S5)**

| No. | Second coating layer material* | Step S5: Preparation of second coating layer suspension |
|---|---|---|
| Comparative example 12, and preparation examples 1-14, 18-19, and 25-27 | Crystalline LiFePO₄ | 3.7 g of lithium carbonate; 11.6 g of ferrous carbonate; 11.5 g of ammonium dihydrogen phosphate; 12.6 g of oxalic acid dihydrate |
| Comparative examples 13-16; Preparation examples 15, 17, 20, 21-24, and 28-29 | Crystalline LiCoPO₄ | 3.7 g of lithium carbonate; 15.5 g of cobalt sulfate; 11.5 g of ammonium dihydrogen phosphate; 12.6 g of oxalic acid dihydrate |
| Comparative example 17 | Amorphous LiCoPO₄ | 3.7 g of lithium carbonate; 15.5 g of cobalt sulfate; 11.5 g of ammonium dihydrogen phosphate; 12.6 g of oxalic acid dihydrate |
| Preparation example 16 | Crystalline LiNiPO₄ | 3.7 g of lithium carbonate; 11.9 g of nickel carbonate; 11.5 g of ammonium dihydrogen phosphate; 12.6 g of oxalic acid dihydrate |
| Preparation example 37 | Cu₃(PO₄)₂ | 48.0 g of copper sulfate; 23.0 g of ammonium dihydrogen phosphate; 37.8 g of oxalic acid dihydrate |
| Preparation example 38 | Zn₃(PO₄)₂ | 37.6 g of zinc carbonate; 23.0 g of ammonium dihydrogen phosphate; 37.8 g of oxalic acid dihydrate |
| Preparation example 39 | Ti₃(PO₄)₄ | 72.0 g of titanium sulfate; 46.0 g of ammonium dihydrogen phosphate; 75.6 g of oxalic acid dihydrate |
| Preparation example 40 | Ag₃PO₄ | 50.9 g of silver nitrate; 11.5 g of ammonium dihydrogen phosphate; 18.9 g of oxalic acid dihydrate |
| Preparation example 41 | Zr₃(PO₄)₄ | 85.0 g of zirconium sulfate; 46.0 g of ammonium dihydrogen phosphate; 37.8 g of oxalic acid dihydrate |
| Preparation example 42 | AlPO₄ | 13.3 g of aluminum chloride; 11.5 g of ammonium dihydrogen phosphate; 18.9 g of oxalic acid dihydrate |

| | | |
|---|---|---|
| *For the determination method, please refer to the "Performance test of positive electrode active material" section below for details. | | |

**Table 5: Coating of second coating layer (Step S6)**

| No. | Second coating layer material and amount thereof (based on weight of inner core)* | Amount of pyrophosphate-coated material added in step S6 (wherein comparative example 12 is amount of inner core added) (g) | Step S6: Coating of second coating layer | | | | |
|---|---|---|---|---|---|---|---|
| | | | Amount of corresponding coating material in second coating layer suspension (g) | Mixing time (h) | Drying temperature (°C) | Sintering temperature (°C) | Sintering time (h) |
| Comparative example 12 | 3% of LiFePO₄ | 1571.1 | 47.1 | 6 | 120 | 700 | 8 |
| Comparative example 13 | 4% of LiCoPO₄ | 1599.9 | 62.7 | 6 | 120 | 750 | 8 |
| Comparative example 14 | 4% of LiCoPO₄ | 1594.0 | 62.5 | 6 | 120 | 750 | 8 |
| Comparative example 15 | 4% of LiCoPO₄ | 1602.0 | 62.8 | 6 | 120 | 750 | 8 |
| Comparative example 16 | 4% of LiCoPO₄ | 1602.5 | 62.8 | 6 | 120 | 750 | 8 |
| Comparative example 17 | 4% of amorphous LiCoPO₄ | 1602.5 | 62.8 | 6 | 120 | 650 | 8 |
| Preparation examples 1-4 | 3% of LiFePO₄ | 1586.8 | 47.1 | 6 | 120 | 700 | 8 |
| Preparation example 5 | 3% of LiFePO₄ | 1602.5 | 47.1 | 6 | 120 | 700 | 8 |
| Preparation example 6 | 3% of LiFePO₄ | 1618.2 | 47.1 | 6 | 120 | 700 | 8 |
| Preparation example 7 | 3% of LiFePO₄ | 1649.6 | 47.1 | 6 | 120 | 700 | 8 |
| Preparation example 8 | 1% of LiFePO₄ | 1586.8 | 15.7 | 6 | 120 | 700 | 8 |
| Preparation example 9 | 4% of LiFePO₄ | 1586.8 | 62.8 | 6 | 120 | 700 | 8 |
| Preparation example 10 | 5% of LiFePO₄ | 1586.8 | 78.6 | 6 | 120 | 700 | 8 |
| Preparation example 11 | 2.50% of LiFePO₄ | 1587.8 | 39.3 | 6 | 120 | 700 | 8 |
| Preparation example 12 | 3% of LiFePO₄ | 1587.4 | 47.2 | 6 | 120 | 700 | 8 |
| Preparation example 13 | 2% of LiFePO₄ | 1602.8 | 31.4 | 6 | 120 | 700 | 8 |
| Preparation example 14 | 3.50% of LiFePO₄ | 1610.5 | 55.0 | 6 | 120 | 700 | 8 |
| Preparation example 15 | 2.5% of LiCoPO₄ | 1603.3 | 39.3 | 6 | 120 | 750 | 8 |
| Preparation example 16 | 3% of LiNiPO₄ | 1619.0 | 47.2 | 6 | 120 | 680 | 8 |
| Preparation example 17 | 2.5% of LiCoPO₄ | 1595.5 | 39.3 | 6 | 120 | 750 | 8 |
| Preparation example 18 | 3% of LiFePO₄ | 1585.9 | 47.1 | 6 | 120 | 700 | 8 |
| Preparation example 19 | 4% of LiFePO₄ | 1602.4 | 62.8 | 6 | 120 | 700 | 8 |
| Preparation example 20 | 3% of LiCoPO₄ | 1587.7 | 47.2 | 6 | 120 | 750 | 8 |
| Preparation example 21 | 4% of LiCoPO₄ | 1603.5 | 62.9 | 6 | 120 | 750 | 8 |
| Preparation example 22 | 4% of LiCoPO₄ | 1658.6 | 62.9 | 6 | 120 | 750 | 8 |
| Preparation example 23 | 5.50% of LiCoPO₄ | 1603.5 | 86.5 | 6 | 120 | 750 | 8 |
| Preparation example 24 | 4% of LiCoPO₄ | 1603.5 | 62.9 | 6 | 120 | 750 | 8 |
| Preparation example 25 | 3% of LiFePO₄ | 1588.7 | 47.2 | 6 | 120 | 700 | 8 |
| Preparation example 26 | 3% of LiFePO₄ | 1584.3 | 47.1 | 6 | 120 | 700 | 8 |
| Preparation example 27 | 3% of LiFePO₄ | 1584.9 | 47.1 | 6 | 120 | 700 | 8 |
| Preparation example 28 | 4% of LiCoPO₄ | 1605.4 | 63.0 | 6 | 120 | 750 | 8 |
| Preparation example 29 | 4% of LiCoPO₄ | 1605.4 | 63.0 | 6 | 120 | 750 | 8 |

| | | | | | | | |
|---|---|---|---|---|---|---|---|
| *For the determination method, please refer to the "Performance test of positive electrode active material" section below for details. | | | | | | | |

**Table 6: Coating of third coating layer (Step S8)**

| No. | Third coating layer* | Molar ratio of SP2 to SP3* | Amount of two-layer coated material added in step S8 (wherein comparative examples 1-2 and 4-10 show the amount of the inner core added, and comparative example 11 shows the amount of the one-layer coated material added) (g) | Step S8: Coating of third coating layer | | | | |
|---|---|---|---|---|---|---|---|---|
| | | | | Amount of sucrose (g) | Mixing time (h) | Drying temperature (°C) | Sintering temperature (°C) | Sintering time (h) |
| Comparative example 1 | 1% of carbon | 2.5 | 1568.5 | 37.3 | 6 | 150 | 650 | 8 |
| Comparative example 2 | 2% of carbon | 2.8 | 1572.2 | 74.7 | 6 | 150 | 680 | 8 |
| Comparative example 3 | 2% of carbon | 2.7 | 1601.8 | 74.6 | 6 | 150 | 680 | 7 |
| Comparative example 4 | 1% of carbon | 2.4 | 1571.0 | 37.3 | 6 | 150 | 630 | 8 |
| Comparative example 5 | 1.5% of carbon | 2.6 | 1570.6 | 56.0 | 6 | 150 | 650 | 7 |
| Comparative example 6 | 2.5% of carbon | 2.8 | 1573.6 | 93.4 | 6 | 150 | 680 | 8 |
| Comparative example 7 | 1% of carbon | 2.7 | 1572.2 | 37.3 | 6 | 150 | 680 | 7 |
| Comparative example 8 | 1.5% of carbon | 2.9 | 1571.1 | 56.0 | 6 | 150 | 680 | 10 |
| Comparative example 9 | 1% of carbon | 2.2 | 1572.2 | 37.3 | 6 | 150 | 600 | 8 |
| Comparative example 10 | 1% of carbon | 2.4 | 1571.1 | 37.3 | 6 | 150 | 630 | 8 |
| Comparative example 11 | 1% of carbon | 2.3 | 1586.8 | 37.3 | 6 | 150 | 620 | 8 |
| Comparative example 12 | 1% of carbon | 2.1 | 1618.2 | 37.3 | 6 | 150 | 600 | 6 |
| Comparative example 13 | 1% of carbon | 2 | 1662.6 | 37.3 | 6 | 120 | 600 | 6 |
| Comparative example 14 | 1% of carbon | 1.8 | 1656.5 | 37.1 | 6 | 120 | 600 | 6 |
| Comparative example 15 | 1% of carbon | 1.7 | 1664.8 | 37.3 | 6 | 100 | 600 | 6 |
| Comparative example 16 | 1% of carbon | 3.1 | 1665.4 | 37.3 | 6 | 150 | 700 | 10 |
| Comparative example 17 | 1% of carbon | 3.5 | 1665.4 | 37.3 | 6 | 150 | 750 | 10 |
| Preparation example 1 | 1% of carbon | 2.2 | 1633.9 | 37.3 | 6 | 150 | 700 | 10 |
| Preparation example 2 | 3% of carbon | 2.3 | 1633.9 | 111.9 | 6 | 150 | 600 | 9 |
| Preparation example 3 | 4% of carbon | 2.1 | 1633.9 | 149.2 | 6 | 150 | 600 | 6 |
| Preparation example 4 | 5% of carbon | 2.4 | 1633.9 | 186.5 | 6 | 150 | 630 | 8 |
| Preparation example 5 | 1% of carbon | 2.5 | 1649.6 | 37.3 | 6 | 150 | 650 | 8 |
| Preparation example 6 | 1% of carbon | 2.5 | 1665.3 | 37.3 | 6 | 150 | 650 | 8 |
| Preparation example 7 | 1% of carbon | 2.4 | 1696.7 | 37.3 | 6 | 150 | 630 | 8 |
| Preparation example 8 | 1% of carbon | 2.3 | 1602.5 | 37.3 | 6 | 150 | 600 | 9 |
| Preparation example 9 | 1% of carbon | 2.2 | 1649.6 | 37.3 | 6 | 150 | 600 | 8 |
| Preparation example 10 | 1% of carbon | 2.2 | 1665.3 | 37.3 | 6 | 150 | 600 | 9 |
| Preparation example 11 | 1.5% of carbon | 2.3 | 1629.0 | 56.1 | 6 | 150 | 600 | 9 |
| Preparation example 12 | 2% of carbon | 2.4 | 1634.6 | 74.7 | 6 | 150 | 630 | 8 |
| Preparation example 13 | 2% of carbon | 2.5 | 1634.2 | 74.6 | 6 | 150 | 650 | 8 |
| Preparation example 14 | 2.5% of carbon | 2.7 | 1665.5 | 93.3 | 6 | 150 | 680 | 7 |
| Preparation example 15 | 2% of carbon | 2.8 | 1642.6 | 74.7 | 6 | 150 | 680 | 8 |
| Preparation example 16 | 1% of carbon | 2.7 | 1666.2 | 37.3 | 6 | 150 | 680 | 7 |
| Preparation example 17 | 1.5% of carbon | 2.3 | 1634.8 | 56.0 | 6 | 150 | 600 | 9 |
| Preparation example 18 | 1% of carbon | 2.6 | 1633.0 | 37.3 | 6 | 150 | 650 | 7 |
| Preparation example 19 | 1.5% of carbon | 2.4 | 1665.2 | 56.0 | 6 | 150 | 630 | 8 |
| Preparation example 20 | 1.5% of carbon | 2.2 | 1634.8 | 56.0 | 6 | 150 | 600 | 9 |
| Preparation example 21 | 1% of carbon | 2.2 | 1666.4 | 37.3 | 6 | 150 | 600 | 9 |
| Preparation example 22 | 1% of carbon | 2.3 | 1721.4 | 37.3 | 6 | 150 | 600 | 9 |
| Preparation example 23 | 1% of carbon | 2.4 | 1690.0 | 37.3 | 6 | 150 | 630 | 8 |
| Preparation example 24 | 5.5% of carbon | 2.6 | 1666.4 | 205.4 | 6 | 150 | 650 | 7 |
| Preparation example 25 | 1% of carbon | 2.4 | 1635.9 | 37.4 | 6 | 150 | 630 | 8 |
| Preparation example 26 | 1% of carbon | 2.3 | 1631.3 | 37.3 | 6 | 150 | 600 | 9 |
| Preparation example 27 | 1.5% of carbon | 2.1 | 1631.9 | 55.9 | 6 | 150 | 600 | 6 |
| Preparation example 28 | 1% of carbon | 0.07 | 1668.3 | 37.4 | 6 | 80 | 600 | 6 |
| Preparation example 29 | 1% of carbon | 13 | 1668.3 | 37.4 | 6 | 150 | 850 | 10 |

| | | | | | | | | |
|---|---|---|---|---|---|---|---|---|
| *For the determination method, please refer to the "Performance test of positive electrode active material" section below for details. | | | | | | | | |

### Preparation examples 43 to 62

**The positive electrode active materials of preparation examples 43 to 62 are shown in Table 7.**

**Table 7 Positive electrode active materials of preparation examples 43 to 62**

| | Positive electrode active material | Mass content of carbon | Manufacturer |
|---|---|---|---|
| Preparation example 43 | Carbon-coated LiFePO₄ | 1% | Dynanonic Co., Ltd. |
| Preparation example 44 | Mixing positive electrode active material of example 1-1 with that of example 1-34 in mass ratio of 1 : 1 | - | - |
| Preparation example 45 | Carbon-coated LiFe_{0.99} Mg_{0.01}PO₄ | 1% | Dynanonic Co., Ltd. |
| Preparation example 46 | Mixing positive electrode active material of example 1-1 with that of example 1-36 in mass ratio of 1 : 1 | - | - |
| Preparation example 47 | Carbon-coated LiFePO₄ | 0.10% | Dynanonic Co., Ltd. |
| Preparation example 48 | Carbon-coated LiFePO₄ | 4% | Dynanonic Co., Ltd. |
| Preparation example 49 | Carbon-coated LiFe_{0.99} Mg_{0.01}PO₄ | 0.1% | Dynanonic Co., Ltd. |
| Preparation example 50 | Carbon-coated LiFe_{0.99} Mg_{0.01}PO₄ | 4% | Dynanonic Co., Ltd. |
| Preparation example 51 | Carbon-coated LiFe_{0.999} Mg_{0.001}PO₄ | 1% | Dynanonic Co., Ltd. |
| Preparation example 52 | Carbon-coated LiFe_{0.99} Mg_{0.01}PO₄ | 1% | Dynanonic Co., Ltd. |
| Preparation example 53 | Carbon-coated LiFe_{0.995}V_{0.005}PO₄ | 1% | Dynanonic Co., Ltd. |
| Preparation example 54 | Carbon-coated LiFe_{0.995}Al_{0.005}PO₄ | 1% | Dynanonic Co., Ltd. |
| Preparation examples 55-62 | Mixing positive electrode active material of preparation example 1 with those of preparation examples 47-54 in mass ratio of 1 : 1, respectively | - | - |

### Preparation examples 63 to 75

The positive electrode active materials of preparation examples 63 to 75 are prepared in a method similar to that of preparation example 1, and the differences in the preparation of the positive electrode active materials are shown in Tables 8-9.

**Table 8: Investigation of first coating layer material (preparation examples 63-69)**

| No. | Coating material of first coating layer | Preparation of coating layer suspension |
|---|---|---|
| Preparation example 63 | Li2MgP₂O₇ | 7.4 g of lithium carbonate, 8.4 g of magnesium carbonate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Preparation example 64 | Li₂CoP₂O₇ | 7.4 g of lithium carbonate, 15.5 g of cobalt sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Preparation example 65 | Li₂CuP₂O₇ | 7.4 g of lithium carbonate, 16.0 g of copper sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Preparation example 66 | Li₂ZnP₂O₇ | 7.4 g of lithium carbonate, 12.5 g of zinc carbonate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Preparation example 67 | TiP₂O₇ | 24.0 g of titanium sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Preparation example 68 | Ag₄P₂O₇ | 67.9 g of silver nitrate, 23.0 g of ammonium dihydrogen phosphate and 25.2 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Preparation example 69 | ZrP₂O₇ | 56.6 g of zirconium sulfate, 23.0 g of ammonium dihydrogen phosphate and 25.2 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |

**Table 9: Investigation of second coating layer material (preparation examples 70-75)**

| No. | Crystalline material of second coating layer | Preparation of coating layer suspension |
|---|---|---|
| Preparation example 70 | CU₃(PO₄)₂ | 48.0 g of copper sulfate, 23.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Preparation example 71 | Zn₃(PO₄)₂ | 37.6 g of zinc carbonate, 23.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Preparation example 72 | Ti₃(PO₄)₄ | 72.0 g of titanium sulfate, 46.0 g of ammonium dihydrogen phosphate and 75.6 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Preparation example 73 | Ag₃PO₄ | 50.9 g of silver nitrate, 11.5 g of ammonium dihydrogen phosphate and 18.9 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Preparation example 74 | Zr3(PO₄)₄ | 85.0 g of zirconium sulfate, 46.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Preparation example 75 | AlPO₄ | 13.3 g of aluminum chloride, 11.5 g of ammonium dihydrogen phosphate and 18.9 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |

The positive electrode active material prepared above, a conductive agent superconducting carbon black (Super-P) and a binder polyvinylidene fluoride (PVDF) are added to N-methylpyrrolidone (NMP) in a weight ratio of 92 : 2.5 : 5.5, followed by stirring and uniformly mixing to obtain a slurry of the positive electrode active material with a solid content of 60% w/w.

### Preparation of positive electrode plate

### Example 1

The slurry of positive electrode active material of preparation example 1 is evenly coated on both sides of the aluminum foil of the current collector at a coating amount of 0.019 g/cm², vacuum-dried at a high temperature of 100-120°C for 14 h, and compacted by a roller press to obtain the positive electrode plate P1.

### Example 2

The slurry of positive electrode active material of preparation example 43 is evenly coated on both sides of the aluminum foil of the current collector at a coating amount of 0.019 g/cm², vacuum-dried at a high temperature of 100-120°C for 14 h, and compacted by a roller press to obtain the positive electrode plate P2.

### Example 3

The slurry of positive electrode active material of preparation example 1 is evenly coated on one side of the aluminum foil of the current collector at a coating amount of 0.019 g/cm², and the slurry of positive electrode active material of preparation example 43 is evenly coated on the other side of the aluminum foil at a coating amount of 0.2 g/cm², vacuum-dried at a high temperature of 100-120°C for 14 h, and compacted by a roller press to obtain the positive electrode plate P3.

### Example 4

The slurry of positive electrode active material of preparation example 44 is evenly coated on both sides of the aluminum foil of the current collector at a coating amount of 0.019 g/cm², and the others are the same as those in example 3, thereby obtaining the positive electrode plate P4.

### Example 5

The slurry of positive electrode active material of preparation example 1 is evenly coated on one side of the aluminum foil at a coating amount of 0.019 g/cm², and the slurry of positive electrode active material of preparation example 44 is evenly coated on the other side of the aluminum foil at a coating amount of 0.019 g/cm², and the others are the same as those in example 3, thereby obtaining the positive electrode plate P5.

### Example 6

The slurry of positive electrode active material of preparation example 43 is evenly coated on one side of the aluminum foil at a coating amount of 0.019 g/cm², and the slurry of positive electrode active material of preparation example 44 is evenly coated on the other side of the aluminum foil at a coating amount of 0.019 g/cm², and the others are the same as those in example 3, thereby obtaining the positive electrode plate P6.

### Example 7

The slurry of positive electrode active material of preparation example 1 and the slurry of positive electrode active material of preparation example 43 are successively coated on both sides of the aluminum foil at a coating amount of 0.010 g/cm² for each layer of the slurry, then vacuum-dried at a high temperature of 100-120°C for 14 h, and compacted by a roller press to obtain the positive electrode plate P7.

### Example 8

The slurry of positive electrode active material of preparation example 43 and the slurry of positive electrode active material of preparation example 1 are successively coated on both sides of the aluminum foil at a coating amount of 0.010 g/cm² for each layer of the slurry, and the others are the same as those in example 7, thereby obtaining the positive electrode plate P8.

### Example 9

The slurry of positive electrode active material of preparation example 1 and the slurry of positive electrode active material of preparation example 44 are successively coated on both sides of the aluminum foil at a coating amount of 0.010 g/cm² for each layer of the slurry, and the others are the same as those in example 7, thereby obtaining the positive electrode plate P9.

### Example 10

The slurry of positive electrode active material of preparation example 44 and the slurry of positive electrode active material of preparation example 1 are successively coated on both sides of the aluminum foil at a coating amount of 0.010 g/cm² for each layer of the slurry, and the others are the same as those in example 7, thereby obtaining the positive electrode plate P10.

### Example 11

The slurry of positive electrode active material of reparation example 43 and the slurry of positive electrode active material of preparation example 44 are successively coated on both sides of the aluminum foil at a coating amount of 0.010 g/cm² for each layer of the slurry, and the others are the same as those in example 7, thereby obtaining the positive electrode plate P11.

### Example 12

The slurry of positive electrode active material of preparation example 44 and the slurry of positive electrode active material of preparation example 43 are successively coated on both sides of the aluminum foil at a coating amount of 0.010 g/cm² for each layer of the slurry, and the others are the same as those in example 7, thereby obtaining the positive electrode plate P12.

### Example 13

The slurry of positive electrode active material of preparation example 1 and the slurry of positive electrode active material of preparation example 43 are successively coated on the A side of the aluminum foil at a coating amount of 0.010 g/cm² for each layer of the slurry, and the slurry of positive electrode active material of preparation example 1 is evenly coated on the B side of the aluminum foil at a coating amount of 0.020 g/cm², then vacuum-dried at a high temperature of 100-120°C for 14 h, and compacted by a roller press to obtain the positive electrode plate P13.

### Example 14

The slurry of positive electrode active material of preparation example 1 and the slurry of positive electrode active material of preparation example 43 are successively coated on the A side of the aluminum foil at a coating amount of 0.010 g/cm² for each layer of the slurry, the slurry of positive electrode active material of preparation example 43 is evenly coated on the B side of the aluminum foil at a coating amount of 0.020 g/cm², and the others are the same as those in example 13, thereby obtaining the positive electrode plate P14.

### Example 15

The slurry of positive electrode active material of preparation example 1 and the slurry of positive electrode active material of preparation example 43 are successively coated on the A side of the aluminum foil at a coating amount of 0.010 g/cm² for each layer of the slurry, the slurry of positive electrode active material of preparation example 44 is evenly coated on the B side of the aluminum foil at a coating amount of 0.020 g/cm², and the others are the same as those in example 13, thereby obtaining the positive electrode plate P15.

### Example 16

The slurry of positive electrode active material of preparation example 43 and the slurry of positive electrode active material of preparation example 1 are successively coated on the A side of the aluminum foil at a coating amount of 0.010 g/cm² for each layer of the slurry, the slurry of positive electrode active material of preparation example 1 is evenly coated on the B side of the aluminum foil at a coating amount of 0.020 g/cm², and the others are the same as those in example 13, thereby obtaining the positive electrode plate P16.

### Example 17

The slurry of positive electrode active material of preparation example 43 and the slurry of positive electrode active material of preparation example 1 are successively coated on the A side of the aluminum foil at a coating amount of 0.010 g/cm² for each layer of the slurry, the slurry of positive electrode active material of preparation example 43 is evenly coated on the B side of the aluminum foil at a coating amount of 0.020 g/cm², and the others are the same as those in example 13, thereby obtaining the positive electrode plate P17.

### Example 18

The slurry of positive electrode active material of preparation example 43 and the slurry of positive electrode active material of preparation example 1 are successively coated on the A side of the aluminum foil at a coating amount of 0.010 g/cm² for each layer of the slurry, the slurry of positive electrode active material of preparation example 44 is evenly coated on the B side of the aluminum foil at a coating amount of 0.020 g/cm², and the others are the same as those in example 13, thereby obtaining the positive electrode plate P18.

### Example 19

The slurry of positive electrode active material of preparation example 1 and the slurry of positive electrode active material of preparation example 44 are successively coated on the A side of the aluminum foil at a coating amount of 0.010 g/cm² for each layer of the slurry, the slurry of positive electrode active material of preparation example 1 is evenly coated on side B of the aluminum foil at a coating amount of 0.020 g/cm², and the others are the same as those in example 13, thereby obtaining the positive electrode plate P19.

### Example 20

The slurry of positive electrode active material of preparation example 1 and the slurry of positive electrode active material of preparation example 44 are successively coated on the A side of the aluminum foil at a coating amount of 0.010 g/cm² for each layer of the slurry, the slurry of positive electrode active material of preparation example 43 is evenly coated on the B side of the aluminum foil at a coating amount of 0.020 g/cm², and the others are the same as those in example 13, thereby obtaining the positive electrode plate P20.

### Example 21

The slurry of positive electrode active material of preparation example 1 and the slurry of positive electrode active material of preparation example 44 are successively coated on the A side of the aluminum foil at a coating amount of 0.010 g/cm² for each layer of the slurry, the slurry of positive electrode active material of preparation example 44 is evenly coated on the B side of the aluminum foil at a coating amount of 0.020 g/cm², and the others are the same as those in example 13, thereby obtaining the positive electrode plate P21.

### Example 22

The slurry of positive electrode active material of preparation example 44 and the slurry of positive electrode active material of preparation example 1 are successively coated on the A side of the aluminum foil at a coating amount of 0.010 g/cm² for each layer of the slurry, the slurry of positive electrode active material of preparation example 1 is evenly coated on the B side of the aluminum foil at a coating amount of 0.020 g/cm², and the others are the same as those in example 13, thereby obtaining the positive electrode plate P22.

### Example 23

The slurry of positive electrode active material of preparation example 44 and the slurry of positive electrode active material of preparation example 1 are successively coated on the A side of the aluminum foil at a coating amount of 0.010 g/cm² for each layer of the slurry, the slurry of positive electrode active material of preparation example 43 is evenly coated on the B side of the aluminum foil at a coating amount of 0.020 g/cm², and the others are the same as those in example 13, thereby obtaining the positive electrode plate P23.

### Example 24

The slurry of positive electrode active material of preparation example 44 and the slurry of positive electrode active material of preparation example 1 are successively coated on the A side of the aluminum foil at a coating amount of 0.010 g/cm² for each layer of the slurry, the slurry of positive electrode active material of preparation example 44 is evenly coated on the B side of the aluminum foil at a coating amount of 0.020 g/cm², and the others are the same as those in example 13, thereby obtaining the positive electrode plate P24.

### Example 25

The slurry of positive electrode active material of preparation example 43 and the slurry of positive electrode active material of preparation example 44 are successively coated on the A side of the aluminum foil at a coating amount of 0.010 g/cm² for each layer of the slurry, the slurry of positive electrode active material of preparation example 1 is evenly coated on the B side of the aluminum foil at a coating amount of 0.020 g/cm², and the others are the same as those in example 13, thereby obtaining the positive electrode plate P25.

### Example 26

The slurry of positive electrode active material of preparation example 43 and the slurry of positive electrode active material of preparation example 44 are successively coated on the A side of the aluminum foil at a coating amount of 0.010 g/cm² for each layer of the slurry, the slurry of positive electrode active material of preparation example 43 is evenly coated on the B side of the aluminum foil at a coating amount of 0.020 g/cm², and the others are the same as those in example 13, thereby obtaining the positive electrode plate P26.

### Example 27

The slurry of positive electrode active material of preparation example 43 and the slurry of positive electrode active material of preparation example 44 are successively coated on the A side of the aluminum foil at a coating amount of 0.010 g/cm² for each layer of the slurry, the slurry of positive electrode active material of preparation example 44 is evenly coated on the B side of the aluminum foil at a coating amount of 0.020 g/cm², and the others are the same as those in example 13, thereby obtaining the positive electrode plate P27.

### Example 28

The slurry of positive electrode active material of preparation example 44 and the slurry of positive electrode active material of preparation example 43 are successively coated on the A side of the aluminum foil at a coating amount of 0.010 g/cm² for each layer of the slurry, the slurry of positive electrode active material of preparation example 1 is evenly coated on the B side of the aluminum foil at a coating amount of 0.020 g/cm², and the others are the same as those in example 13, thereby obtaining the positive electrode plate P28.

### Example 29

The slurry of positive electrode active material of preparation example 44 and the slurry of positive electrode active material of preparation example 43 are successively coated on the A side of the aluminum foil at a coating amount of 0.010 g/cm² for each layer of the slurry, the slurry of positive electrode active material of preparation example 43 is evenly coated on the B side of the aluminum foil at a coating amount of 0.020 g/cm², and the others are the same as those in example 13, thereby obtaining the positive electrode plate P29.

### Example 30

The slurry of positive electrode active material of preparation example 44 and the slurry of positive electrode active material of preparation example 43 are successively coated on the A side of the aluminum foil at a coating amount of 0.010 g/cm² for each layer of the slurry, the slurry of positive electrode active material of preparation example 44 is evenly coated on the B side of the aluminum foil at a coating amount of 0.020 g/cm², and the others are the same as those in example 13, thereby obtaining the positive electrode plate P30.

### Example 31

The slurry of positive electrode active material of preparation example 45 is evenly coated on both sides of the aluminum foil of the current collector at a coating amount of 0.019 g/cm², vacuum-dried at a high temperature of 100-120°C for 14 h, and compacted by a roller press to obtain the positive electrode plate P31.

### Example 32

The slurry of positive electrode active material of preparation example 46 is evenly coated on both sides of the aluminum foil of the current collector at a coating amount of 0.019 g/cm², vacuum-dried at a high temperature of 100-120°C for 14 h, and compacted by a roller press to obtain the positive electrode plate P32.

### Example 33

The slurry of positive electrode active material of preparation example 47 is evenly coated on both sides of the aluminum foil of the current collector at a coating amount of 0.019 g/cm², vacuum-dried at a high temperature of 100-120°C for 14 h, and compacted by a roller press to obtain the positive electrode plate P33.

### Example 34

The slurry of positive electrode active material of preparation example 48 is evenly coated on both sides of the aluminum foil of the current collector at a coating amount of 0.019 g/cm², vacuum-dried at a high temperature of 100-120°C for 14 h, and compacted by a roller press to obtain the positive electrode plate P34.

### Example 35

The slurry of positive electrode active material of preparation example 49 is evenly coated on both sides of the aluminum foil of the current collector at a coating amount of 0.019 g/cm², vacuum-dried at a high temperature of 100-120°C for 14 h, and compacted by a roller press to obtain the positive electrode plate P35.

### Example 36

The slurry of positive electrode active material of preparation example 50 is evenly coated on both sides of the aluminum foil of the current collector at a coating amount of 0.019 g/cm², vacuum-dried at a high temperature of 100-120°C for 14 h, and compacted by a roller press to obtain the positive electrode plate P36.

### Example 37

The slurry of positive electrode active material of preparation example 51 is evenly coated on both sides of the aluminum foil of the current collector at a coating amount of 0.019 g/cm², vacuum-dried at a high temperature of 100-120°C for 14 h, and compacted by a roller press to obtain the positive electrode plate P37.

### Example 38

The slurry of positive electrode active material of preparation example 52 is evenly coated on both sides of the aluminum foil of the current collector at a coating amount of 0.019 g/cm², vacuum-dried at a high temperature of 100-120°C for 14 h, and compacted by a roller press to obtain the positive electrode plate P38.

### Example 39

The slurry of positive electrode active material of preparation example 53 is evenly coated on both sides of the aluminum foil of the current collector at a coating amount of 0.019 g/cm², vacuum-dried at a high temperature of 100-120°C for 14 h, and compacted by a roller press to obtain the positive electrode plate P39.

### Example 40

The slurry of positive electrode active material of preparation example 54 is evenly coated on both sides of the aluminum foil of the current collector at a coating amount of 0.019 g/cm², vacuum-dried at a high temperature of 100-120°C for 14 h, and compacted by a roller press to obtain the positive electrode plate P40.

### Example 41

The slurry of positive electrode active material of preparation example 55 is evenly coated on both sides of the aluminum foil of the current collector at a coating amount of 0.019 g/cm², vacuum-dried at a high temperature of 100-120°C for 14 h, and compacted by a roller press to obtain the positive electrode plate P41.

### Example 42

The slurry of positive electrode active material of preparation example 56 is evenly coated on both sides of the aluminum foil of the current collector at a coating amount of 0.019 g/cm², vacuum-dried at a high temperature of 100-120°C for 14 h, and compacted by a roller press to obtain the positive electrode plate P42.

### Example 43

The slurry of positive electrode active material of preparation example 57 is evenly coated on both sides of the aluminum foil of the current collector at a coating amount of 0.019 g/cm², vacuum-dried at a high temperature of 100-120°C for 14 h, and compacted by a roller press to obtain the positive electrode plate P43.

### Example 44

The slurry of positive electrode active material of preparation example 58 is evenly coated on both sides of the aluminum foil of the current collector at a coating amount of 0.019 g/cm², vacuum-dried at a high temperature of 100-120°C for 14 h, and compacted by a roller press to obtain the positive electrode plate P44.

### Example 45

The slurry of positive electrode active material of preparation example 59 is evenly coated on both sides of the aluminum foil of the current collector at a coating amount of 0.019 g/cm², vacuum-dried at a high temperature of 100-120°C for 14 h, and compacted by a roller press to obtain the positive electrode plate P45.

### Example 46

The slurry of positive electrode active material of preparation example 60 is evenly coated on both sides of the aluminum foil of the current collector at a coating amount of 0.019 g/cm², vacuum-dried at a high temperature of 100-120°C for 14 h, and compacted by a roller press to obtain the positive electrode plate P46.

### Example 47

The slurry of positive electrode active material of preparation example 61 is evenly coated on both sides of the aluminum foil of the current collector at a coating amount of 0.019 g/cm², vacuum-dried at a high temperature of 100-120°C for 14 h, and compacted by a roller press to obtain the positive electrode plate P47.

### Example 48

The slurry of positive electrode active material of preparation example 62 is evenly coated on both sides of the aluminum foil of the current collector at a coating amount of 0.019 g/cm², vacuum-dried at a high temperature of 100-120°C for 14 h, and compacted by a roller press to obtain the positive electrode plate P48.

The parameters of each of the positive electrode plates above are shown in Table 10.

**Table 10 Parameters of positive electrode plates**

| Positive electrode plate | Number of positive electrode film layers on A side of aluminum foil | Positive electrode active material on A side of aluminum foil | Number of positive electrode film layers on B side of aluminum foil | Positive electrode active material on B side of aluminum foil | Thickness of positive electrode plate (mm) | Density of positive electrode plate (g/cm³) | Mass content of first positive electrode active material in positive electrode active material# | Mass content of second positive electrode active material in positive electrode active material# |
|---|---|---|---|---|---|---|---|---|
| Positive electrode plate P1 | 1 | Preparation example 1 | 1 | Preparation example 1 | 0.25 | 2.5 | 100% | - |
| Positive electrode plate P2 | 1 | Preparation example 43 | 1 | Preparation example 43 | 0.25 | 2.5 | - | 100% |
| Positive electrode plate P3 | 1 | Preparation example 1 | 1 | Preparation example 43 | 0.25 | 2.5 | 50% | 50% |
| Positive electrode plate P4 | 1 | Preparation example 44 | 1 | Preparation example 44 | 0.25 | 2.5 | 50% | 50% |
| Positive electrode plate P5 | 1 | Preparation example 1 | 1 | Preparation example 44 | 0.25 | 2.5 | 75% | 25% |
| Positive electrode plate P6 | 1 | Preparation example 43 | 1 | Preparation example 44 | 0.25 | 2.5 | 25% | 75% |
| Positive electrode plate P7 | 2 | 1st layer*: Preparation example 1 | 2 | 1st layer: Preparation example 1 | 0.25 | 2.5 | 50% | 50% |
| | | 2nd layer*: Preparation example 43 | | 2nd layer: Preparation example 43 | | | | |
| Positive electrode plate P8 | 2 | 1st layer: Preparation example 43 | 2 | 1st layer: Preparation example 43 | 0.25 | 2.5 | 50% | 50% |
| | | 2nd layer: Preparation example 1 | | 2nd layer: Preparation example 1 | | | | |
| Positive electrode plate P9 | 2 | 1st layer: Preparation example 1 | 2 | 1st layer: Preparation example 1 | 0.25 | 2.5 | 75% | 25% |
| | | 2nd layer: Preparation example 44 | | 2nd layer: Preparation example 44 | | | | |
| Positive electrode plate P10 | 2 | 1st layer: Preparation example 44 | 2 | 1st layer: Preparation example 44 | 0.25 | 2.5 | 75% | 25% |
| | | 2nd layer: Preparation example 1 | | 2nd layer: Preparation example 1 | | | | |
| Positive electrode plate P11 | 2 | 1st layer: Preparation example 43 | 2 | 1st layer: Preparation example 43 | 0.25 | 2.5 | 25% | 75% |
| | | 2nd layer: Preparation example 44 | | 2nd layer: Preparation example 44 | | | | |
| Positive electrode plate P12 | 2 | 1st layer: Preparation example 44 | 2 | 1st layer: Preparation example 44 | 0.25 | 2.5 | 25% | 75% |
| | | 2nd layer: Preparation example 43 | | 2nd layer: Preparation example 43 | | | | |
| Positive electrode plate P13 | 2 | 1st layer: Preparation example 1 | 1 | Preparation example 1 | 0.25 | 2.5 | 75% | 25% |
| | | 2nd layer: Preparation example 43 | | | | | | |
| Positive electrode plate P14 | 2 | 1st layer: Preparation example 1 | 1 | Preparation example 43 | 0.25 | 2.5 | 25% | 75% |
| | | 2nd layer: Preparation example 43 | | | | | | |
| Positive electrode plate P15 | 2 | 1st layer: Preparation example 1 | 1 | Preparation example 44 | 0.25 | 2.5 | 50% | 50% |
| | | 2nd layer: Preparation example 43 | | | | | | |
| Positive electrode plate P16 | 2 | 1st layer: Preparation example 43 | 1 | Preparation example 1 | 0.25 | 2.5 | 75% | 25% |
| | | 2nd layer: Preparation example 1 | | | | | | |
| Positive electrode plate P17 | 2 | 1st layer: Preparation example 43 | 1 | Preparation example 43 | 0.25 | 2.5 | 25% | 75% |
| | | 2nd layer: Preparation example 1 | | | | | | |
| Positive electrode plate P18 | 2 | 1st layer: Preparation example 43 | 1 | Preparation example 44 | 0.25 | 2.5 | 50% | 50% |
| | | 2nd layer: Preparation example 1 | | | | | | |
| Positive electrode plate P19 | 2 | 1st layer: Preparation example 1 | 1 | Preparation example 1 | 0.25 | 2.5 | 87.5% | 12.5% |
| | | 2nd layer: Preparation example 44 | | | | | | |
| Positive electrode plate P20 | 2 | 1st layer: Preparation example 1 | 1 | Preparation example 43 | 0.25 | 2.5 | 37.5% | 62.5% |
| | | 2nd layer: Preparation example 44 | | | | | | |
| Positive electrode plate P21 | 2 | 1st layer: Preparation example 1 | 1 | Preparation example 44 | 0.25 | 2.5 | 62.5% | 37.5% |
| | | 2nd layer: Preparation example 44 | | | | | | |
| Positive electrode plate P22 | 2 | 1st layer: Preparation example 44 | 1 | Preparation example 1 | 0.25 | 2.5 | 87.5% | 12.5% |
| | | 2nd layer: Preparation example 1 | | | | | | |
| Positive electrode plate P23 | 2 | 1st layer: Preparation example 44 | 1 | Preparation example 43 | 0.25 | 2.5 | 37.5% | 62.5% |
| | | 2nd layer: Preparation example 1 | | | | | | |
| Positive electrode plate P24 | 2 | 1st layer: Preparation example 44 | 1 | Preparation example 44 | 0.25 | 2.5 | 62.5% | 37.5% |
| | | 2nd layer: Preparation example 1 | | | | | | |
| Positive electrode plate P25 | 2 | 1st layer: Preparation example 43 | 1 | Preparation example 1 | 0.25 | 2.5 | 62.5% | 37.5% |
| | | 2nd layer: Preparation example 44 | | | | | | |
| Positive electrode plate P26 | 2 | 1st layer: Preparation example 43 | 1 | Preparation example 43 | 0.25 | 2.5 | 12.5% | 87.5% |
| | | 2nd layer: Preparation example 44 | | | | | | |
| Positive electrode plate P27 | 2 | 1st layer: Preparation example 43 | 1 | Preparation example 44 | 0.25 | 2.5 | 37.5% | 62.5% |
| | | 2nd layer: Preparation example 44 | | | | | | |
| Positive electrode plate P28 | 2 | 1st layer: Preparation example 44 | 1 | Preparation example 1 | 0.25 | 2.5 | 62.5% | 37.5% |
| | | 2nd layer: Preparation example 43 | | | | | | |
| Positive electrode plate P29 | 2 | 1st layer: Preparation example 44 | 1 | Preparation example 43 | 0.25 | 2.5 | 12.5% | 87.5% |
| | | 2nd layer: Preparation example 43 | | | | | | |
| Positive electrode plate P30 | 2 | 1st layer: Preparation example 44 | 1 | Preparation example 44 | 0.25 | 2.5 | 37.5% | 62.5% |
| | | 2nd layer: Preparation example 43 | | | | | | |
| Positive electrode plate P31 | 1 | Preparation example 45 | 1 | Preparation example 45 | 0.25 | 2.5 | - | 100% |
| Positive electrode plate P32 | 1 | Preparation example 46 | 1 | Preparation example 46 | 0.25 | 2.5 | 50% | 50% |
| Positive electrode plate P33 | 1 | Preparation example 47 | 1 | Preparation example 47 | 0.25 | 2.5 | - | 100% |
| Positive electrode plate P34 | 1 | Preparation example 48 | 1 | Preparation example 48 | 0.25 | 2.5 | - | 100% |
| Positive electrode plate P35 | 1 | Preparation example 49 | 1 | Preparation example 49 | 0.25 | 2.5 | - | 100% |
| Positive electrode plate P36 | 1 | Preparation example 50 | 1 | Preparation example 50 | 0.25 | 2.5 | - | 100% |
| Positive electrode plate P37 | 1 | Preparation example 51 | 1 | Preparation example 51 | 0.25 | 2.5 | - | 100% |
| Positive electrode plate P38 | 1 | Preparation example 52 | 1 | Preparation example 52 | 0.25 | 2.5 | - | 100% |
| Positive electrode plate P39 | 1 | Preparation example 53 | 1 | Preparation example 53 | 0.25 | 2.5 | - | 100% |
| Positive electrode plate P40 | 1 | Preparation example 54 | 1 | Preparation example 54 | 0.25 | 2.5 | - | 100% |
| Positive electrode plate P41 | 1 | Preparation example 55 | 1 | Preparation example 55 | 0.25 | 2.5 | 50% | 50% |
| Positive electrode plate P42 | 1 | Preparation example 56 | 1 | Preparation example 56 | 0.25 | 2.5 | 50% | 50% |
| Positive electrode plate P43 | 1 | Preparation example 57 | 1 | Preparation example 57 | 0.25 | 2.5 | 50% | 50% |
| Positive electrode plate P44 | 1 | Preparation example 58 | 1 | Preparation example 58 | 0.25 | 2.5 | 50% | 50% |
| Positive electrode plate P45 | 1 | Preparation example 59 | 1 | Preparation example 59 | 0.25 | 2.5 | 50% | 50% |
| Positive electrode plate P46 | 1 | Preparation example 60 | 1 | Preparation example 60 | 0.25 | 2.5 | 50% | 50% |
| Positive electrode plate P47 | 1 | Preparation example 61 | 1 | Preparation example 61 | 0.25 | 2.5 | 50% | 50% |
| Positive electrode plate P48 | 1 | Preparation example 62 | 1 | Preparation example 62 | 0.25 | 2.5 | 50% | 50% |

| | | | | | | | | |
|---|---|---|---|---|---|---|---|---|
| "*": The 1st layer refers to a layer in contact with the surface of the aluminum foil, and the 2nd layer refers to a layer provided on the 1st layer. "#": The first positive electrode active material is the positive electrode active material prepared in preparation example 1, and the second positive electrode active material is the positive electrode active materials in preparation example 43, preparation example 45, and preparation examples 47-54. | | | | | | | | |

### Preparation of negative electrode plate

A negative electrode active material artificial graphite, a conductive agent superconducting carbon black (Super-P), a binder styrene butadiene rubber (SBR) and a thickening agent sodium carboxymethylcellulose (CMC-Na) are dissolved in deionized water in a mass ratio of 95% : 1.5% : 1.8% : 1.7%, followed by fully stirring and uniformly mixing to obtain a negative electrode slurry with a viscosity of 3000 mPa·s and a solid content of 52%; the negative electrode slurry is coated on a negative electrode current collector copper foil having a thickness of 6 µm, and then baked at 100°C for 4 hours for drying, followed by roll pressing to obtain the negative electrode plate with a compacted density of 1.75 g/cm3.

### Separator

a polypropylene film is used.

### Preparation of electrolyte solution

Ethylene carbonate, dimethyl carbonate and 1,2-propylene glycol carbonate are mixed in a volume ratio of 1 : 1 : 1, and then LiPF₆ is evenly dissolved in the above solution to obtain an electrolyte solution. In the electrolyte solution, the concentration of LiPF₆ is 1 mol/L.

### Preparation of full battery

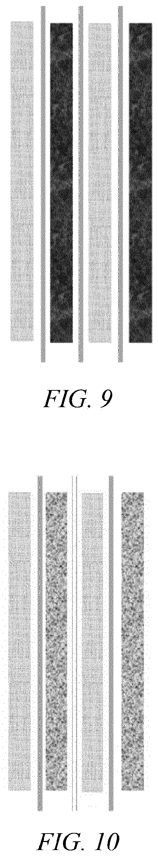

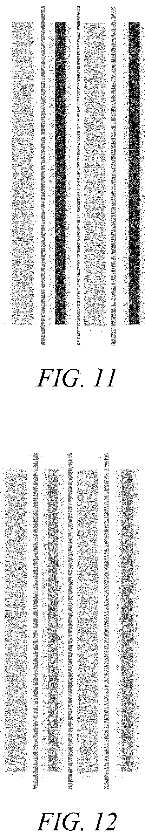

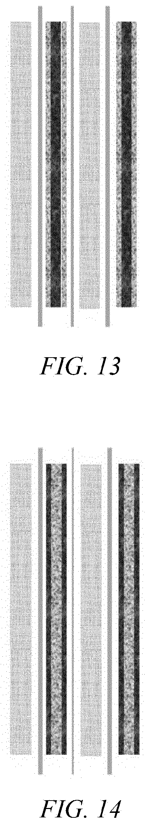

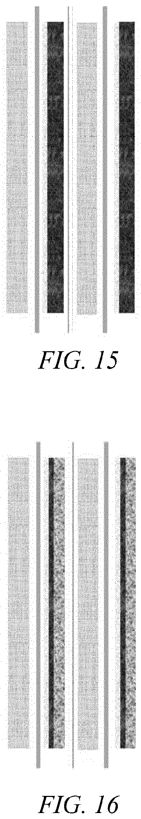

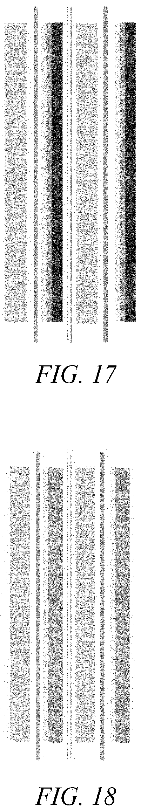

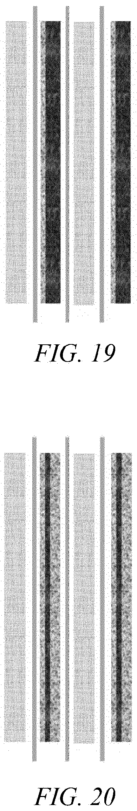

the above positive electrode plate is used, and a bare cell is formed by a winding method according to the sequence of a negative electrode plate, a separator, and a positive electrode plate, and aluminum tabs and copper tabs are respectively punched out to obtain the bare cell; Copper and copper tabs, and aluminum and aluminum tabs of two bare cells are welded together to the top cover of the battery via an adapter. After the bare cells are wrapped and insulated, the bare cells are put into an aluminum shell, and the top cover and the aluminum shell are welded to form a dry cell. The dry cell is baked to remove water and then injected with an electrolyte solution, and the battery is formed and aged to obtain a full battery accordingly. The structure of the battery made of the positive electrode plates P1, P2, P3, P8, P10, P11, P12, P17, P18, P23, P24, P26, and P27 is shown in FIGs. 8-20.

### Preparation of button battery

The above positive electrode plate, negative electrode and electrolyte solution are assembled together into a button battery in a button battery box.

### I. Performance test of positive electrode active material

### 1. Testing method of lattice change rate:

In a constant-temperature environment at 25°C, a positive electrode active material sample is placed in an XRD (model: Bruker D8 Discover) and tested at 1°/min, and the test data are organized and analysed; and with reference to the standard PDF card, lattice constants a0, b0, c0 and v0 at this moment are calculated (a0, b0 and c0 represent the lengths of a unit cell on all sides, and v0 represents the volume of the unit cell, which may be obtained directly from XRD refinement results).

By using the method for preparing a button battery described above, the positive electrode active material sample is made into the button battery, and the button battery is charged at a small rate of 0.05C until the current is reduced to 0.01C. Then a positive electrode plate in the button battery is taken out and soaked in dimethyl carbonate (DMC) for 8 h. Then the positive electrode plate is dried, powder is scraped off, and particles with a particle size of less than 500 nm are screened out. Sampling is performed, and a unit cell volume v1 is calculated in the same way as that for testing the fresh sample as described above. (v0 - v1)/v0 x 100% is as a lattice change rate (unit cell volume change rate) of the sample before and after complete lithium intercalation-deintercalation.

### 2. Determination of Li/Mn antisite defect concentration:

The XRD results determined in the "Method for measuring lattice change rate" are compared with the PDF (Powder Diffraction File) card of a standard crystal, so as to obtain a Li/Mn antisite defect concentration. Specifically, the XRD results determined in the "Method for measuring lattice change rate" are imported into a general structure analysis system (GSAS) software, and refinement results are obtained automatically, including the occupancies of different atoms; and a Li/Mn antisite defect concentration is obtained by reading the refinement results.

### 3. Determination of compacted density:

5 g of positive electrode active material powder prepared above is put into a compaction dedicated mold (U.S. CARVER mold, model: 13 mm), and then the mold is placed on a compacted density instrument. A pressure of 3 T is applied, the thickness of the powder under pressure (thickness after pressure relief) is read on the device, and the compacted density is calculated with ρ = m/v, wherein the area value used is the standard small picture area of 1540.25 mm².

### 4. Determination of 3C charge constant current rate:

In a constant-temperature environment at 25°C, the fresh full battery prepared in each of the preparation examples and comparative examples described above is allowed to stand for 5 min, and discharged at 1/3C to 2.5 V. The full battery is allowed to stand for 5 min, charged at 1/3C to 4.3 V, and then charged at a constant voltage of 4.3 V until the current is less than or equal to 0.05 mA. The full battery is allowed to stand for 5 min, and the charge capacity at this moment is recorded as C0. The full battery is discharged at 1/3C to 2.5 V, allowed to stand for 5 min, then charged at 3C to 4.3 V, and allowed to stand for 5 min, and the charge capacity at this moment is recorded as C1. The 3C charge constant current rate is C1/C0 x 100%.

A higher 3C charge constant current rate indicates a better rate performance of the secondary battery.

### 5. Dissolution test of transition metal Mn (and Fe doping Mn position):

After cycling at 45°C until the capacity is fading to 80%, the full battery prepared from the positive electrode active material of each of the preparation examples and comparative examples described above is discharged to a cut-off voltage of 2.0 V at a rate of 0.1C. Then the battery is disassembled, a negative electrode plate is taken out, a round piece of 30 unit areas (1540.25 mm²) is randomly taken from the negative electrode plate, and inductively coupled plasma (ICP) emission spectroscopy is tested with Agilent ICP-OES730. The amounts of Fe (if the Mn position of the positive electrode active material is doped with Fe) and Mn therein are calculated according to the ICP results, and then the dissolution of Mn (and Fe doping the Mn position) after cycling is calculated. The testing standard is in accordance with EPA-6010D-2014.

### 6. Determination of surface oxygen valence state:

5 g of the positive electrode active material sample prepared above is made into a button battery according to the above method for preparing a button battery. The button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. The obtained particles are measured with electron energy loss spectroscopy (EELS, instrument model used: Talos F200S), so as to obtain an energy loss near-edge structure (ELNES) which reflects the density of states and energy level distribution of an element. According to the density of states and energy level distribution, the number of occupied electrons is calculated by integrating the data of valence-band density of states, and then a valence state of surface oxygen after the charging is extrapolated.

### 7. Measurement of manganese and phosphorus elements in positive electrode active material:

5 g of the positive electrode active material prepared above is dissolved in 100 ml of inverse aqua regia (concentrated hydrochloric acid : concentrated nitric acid = 1 : 3) (concentrated hydrochloric acid concentration is about37%, concentrated nitric acid concentration is about 65%). The content of each element in the solution is tested by ICP, and then the content of a manganese element or a phosphorus element is measured and converted (the amount of the manganese element or the phosphorus element/the amount of the positive electrode active material * 100%) to obtain its weight ratio.

### 8. Method for measuring initial gram capacity of button battery:

At 2.5-4.3 V, the button battery prepared in each of the preparation examples and comparative examples described above is charged at 0.1C to 4.3 V, then charged at a constant voltage of 4.3 V until the current is less than or equal to 0.05 mA, allowed to stand for 5 min, and then discharged at 0.1C to 2.0 V; and the discharge capacity at this moment is the initial gram capacity, which is recorded as D0.

### 9. Cell expansion test of full battery stored at 60°C for 30 days:

The full battery prepared in each of the preparation examples and comparative examples described above is stored at 60°C with 100% state of charge (SOC). Before and after and during the storage, the open-circuit voltage (OCV) and AC internal impedance (IMP) of a cell are measured for monitoring the SOC, and the volume of the cell is measured. Herein, the full battery is taken out after every 48 h of storage, and allowed to stand for 1 h, then the OCV and internal IMP are measured, and the cell volume is measured with the displacement method after the full battery is cooled to room temperature. The displacement method means that the gravity F₁ of the cell is measured separately using a balance of which the on-board data is subjected to automatic unit conversion, then the cell is completely placed in deionized water (with a density known as 1 g/cm³), the gravity F₂ of the cell at this moment is measured, the buoyancy F_{buoyancy} on the cell is F₁ - F₂, and then the cell volume is calculated as V = (F₁ - F₂)/(ρ × g) according to the Archimedes principle F_{buoyancy} = p × g × V_{displaced}.

From the test results of OCV and IMP, the battery of all the example always maintains a SOC of no less than 99% in the experimental process till the end of the storage.

After 30 days of storage, the cell volume is measured, and a percentage increase in cell volume after the storage relative to the cell volume before the storage is calculated.

### 10. Test of cycling performance of full battery at 45°C:

In a constant-temperature environment at 45°C, at 2.5-4.3 V, a full battery is charged at 1C to 4.3 V, and then charged at a constant voltage of 4.3 V until the current is ≤ 0.05 mA, allowed to stand for 5 min, then discharged at 1C to 2.5 V, and the capacity is recorded as Dₙ (n = 0, 1, 2, ......). The above-mentioned process is repeated until the capacity is fading to 80%, and the number of repetitions at this moment is recorded, which is the number of cycles corresponding to the 80% capacity retention rate at 45°C.

### 11. Test of interplanar spacing and angle:

1 g of each positive electrode active material powder prepared above is placed in a 50 mL test tube, and 10 mL of alcohol with a mass fraction of 75% is injected into the test tube, then fully stirred and dispersed for 30 min, and then a clean disposable plastic straw is used to take an appropriate amount of the solution, which is dripped on a 300-mesh copper mesh, at this moment, part of the powder will remain on the copper mesh. The copper mesh and the sample are transferred to TEM (Talos F200s G2) sample chamber for testing, the original picture of the TEM test is obtained and the original picture format (xx.dm3) is saved.

The original picture obtained from the above TEM test is opened in Digital Micrograph software, and Fourier transform (automatically completed by the software after the clicking operation) is performed to obtain a diffraction pattern, and the distance from the diffraction spot to the central position in the diffraction pattern is measured to obtain the interplanar spacing, and the angle is calculated according to the Bragg equation.

By comparing the obtained interplanar spacing and corresponding angle data with their standard values, the materials and crystalline states of different coating layers may be identified.

### 12. Test of the coating layer thickness:

The test of the coating layer thickness mainly comprises cutting a thin slice with a thickness of about 100 nm from the middle of the single particle of the positive electrode active material prepared above by FIB, and then performing a TEM test on the thin slice to obtain the original picture of the TEM test, and saving the original picture format (xx.dm3).

The original picture obtained from the above TEM test is opened in Digital Micrograph software, the coating layer is identified with the lattice spacing and angle information, and the thickness of the coating layer is measured.

The thickness is measured at three locations on the selected particle and the average value is taken.

### 13. Determination of the molar ratio of SP2 form to SP3 form of the carbon in the third coating layer:

This test is performed by Raman spectroscopy. By splitting the energy spectrum of the Raman test, Id/Ig is obtained, wherein Id is the peak intensity of SP3-form carbon, and Ig is the peak intensity of SP2-form carbon, thereby determining the molar ratio of the two.

### 14. Determination of the chemical formula of the inner core and the composition of different coating layers:

A spherical aberration corrected transmission electron microscope (ACSTEM) is used to characterize the internal microstructure and surface structure of the positive electrode active material with high spatial resolution, and is combined with three-dimensional reconstruction technology to obtain the chemical formula of the inner core and the composition of different coating layers of the positive electrode active material.

The results of performance test of the positive electrode active materials in preparation examples and comparative examples are shown in the Table below.

**Table 11: Powder properties of positive electrode active materials and performances of batteries in preparation examples 1-29 and comparative examples 1-17**

| No. | Powder properties of positive electrode active material | | | | | | Performances of batteries | | |
|---|---|---|---|---|---|---|---|---|---|
| | Lattice change rate (%) | Li/Mn antisite defect concentration (%) | Compacted density (g/cm³) | Surface oxygen valence state | 3C charge constant current rate (%) | Dissolution of Mn and Fe after cycling (ppm) | Capacity of button battery at 0.1C (mAh/g) | Expansion of cell when stored at 60°C for 30 d (%) | Number of cycles for capacity retention rate of 80% at 45°C |
| Comparative example 1 | 11.4 | 5.2 | 1.5 | *-1.55* | 50.1 | 2060 | 125.6 | 48.6 | 185 |
| Comparative example 2 | 10.6 | 3.3 | 1.67 | -1.51 | 54.9 | 1810 | 126.4 | 47.3 | 243 |
| Comparative example 3 | 10.8 | 3.4 | 1.64 | -1.64 | 52.1 | 1728 | 144.7 | 41.9 | 378 |
| Comparative example 4 | 4.3 | 2.8 | 1.69 | -1.82 | 56.3 | 1096 | 151.2 | 8.4 | *551* |
| Comparative example 5 | 2.8 | 2.5 | 1.65 | -1.85 | 58.2 | 31 | 148.4 | 7.5 | 668 |
| Comparative example 6 | 3.4 | 2.4 | 1.61 | -1.86 | 58.4 | 64 | 149.6 | 8.6 | 673 |
| Comparative example 7 | 4.5 | 2.4 | 1.73 | -1.83 | 59.2 | 85 | 148.6 | 8.3 | 669 |
| Comparative example 8 | 2.3 | 2.4 | 1.68 | -1.89 | 59.3 | 30 | 152.3 | 7.3 | 653 |
| Comparative example 9 | 2.3 | 2.4 | 1.75 | -1.89 | 59.8 | 30 | 152.3 | 7.3 | 672 |
| Comparative example 10 | 2.3 | 2.2 | 1.81 | -1.9 | 64.1 | 28 | 154.2 | 7.2 | 685 |
| Comparative example 11 | 2.3 | 2.2 | 1.92 | -1.92 | 65.4 | 12 | 154.3 | 5.4 | 985 |
| Comparative example 12 | 2.3 | 2.1 | 1.95 | -1.95 | 65.5 | 18 | 154.6 | 4.2 | 795 |
| Comparative example 13 | 11.4 | 5.2 | 1.63 | -1.96 | 52.4 | 56 | 130.2 | 5.4 | 562 |
| Comparative example 14 | 8.1 | 3.8 | 1.76 | -1.96 | 58.3 | 41 | 135.1 | 5.1 | 631 |
| Comparative example 15 | 2 | 1.8 | 2.13 | -1.96 | 61.3 | 8 | 154.3 | 3.7 | 1126 |
| Comparative example 16 | 2 | 1.9 | 1.95 | -1.96 | 60.5 | 18 | 152.7 | 4.5 | 1019 |
| Comparative example 17 | 2 | 1.9 | 1.9 | -1.89 | 60.4 | 24 | 152.4 | 5.1 | 897 |
| Preparation example 1 | 2.5 | 1.8 | 2.35 | -1.93 | 70.3 | 7 | 157.2 | 4.2 | 1128 |
| Preparation example 2 | 2.5 | 1.8 | 2.24 | -1.94 | 70.2 | 6 | 156.3 | 3.7 | 1253 |
| Preparation example 3 | 2.5 | 1.8 | 2.22 | -1.94 | 70.1 | 5 | 155.4 | 3.4 | 1374 |
| Preparation example 4 | 2.5 | 1.8 | 2.21 | -1.95 | 70.2 | 3 | 153.7 | 2.9 | 1406 |
| Preparation example 5 | 2.5 | 1.8 | 2.33 | -1.93 | 70.1 | 5 | 156.7 | 3.1 | 1501 |
| Preparation example 6 | 2.5 | 1.8 | 2.31 | -1.93 | 69.7 | 4 | 156.2 | 2.8 | 1576 |
| Preparation example 7 | 2.5 | 1.8 | 2.28 | -1.93 | 68.4 | 3 | 155.8 | 2.5 | 1647 |
| Preparation example 8 | 2.5 | 1.8 | 2.29 | -1.93 | 69.1 | 9 | 156.4 | 3.4 | 1058 |
| Preparation example 9 | 2.5 | 1.8 | 2.46 | -1.98 | 73.4 | 6 | 157.6 | 2.9 | 1286 |
| Preparation example 10 | 2.5 | 1.8 | 2.49 | -1.98 | 75.4 | 5 | 157.8 | 2.5 | 1486 |
| Preparation example 11 | 2.6 | 1.9 | 2.38 | -1.97 | 72.4 | 6 | 157.3 | 3.5 | 1026 |
| Preparation example 12 | 2.4 | 1.8 | 2.41 | -1.97 | 74.5 | 4 | 156.3 | 2.5 | 1136 |
| Preparation example 13 | 2.7 | 1.9 | 2.42 | -1.97 | 75.3 | 5 | 156.6 | 3.5 | 1207 |
| Preparation example 14 | 2.8 | 1.9 | 2.45 | -1.97 | 76.5 | 3 | 153.8 | 3.7 | 1308 |
| Preparation example 15 | 2.2 | 1.9 | 2.46 | -1.97 | 74.3 | 3 | 153.8 | 3.7 | 1109 |
| Preparation example 16 | 2.1 | 1.9 | 2.47 | -1.98 | 73.1 | 5 | 154.2 | 3.8 | 1132 |
| Preparation example 17 | 2.5 | 1.7 | 2.41 | -1.98 | 75.3 | 4 | 155.4 | 4.5 | 1258 |
| Preparation example 18 | 2.3 | 1.6 | 2.42 | -1.97 | 76.1 | 4 | 154.3 | 4.7 | 1378 |
| Preparation example 19 | 2.2 | 1.7 | 2.43 | -1.97 | 76.8 | 4 | 154.3 | 4.7 | 1328 |
| Preparation example 20 | 2.6 | 1.8 | 2.42 | -1.94 | 75.4 | 4 | 153.9 | 3.3 | 1458 |
| Preparation example 21 | 2.4 | 1.7 | 2.41 | -1.97 | 76.1 | 4 | 154.5 | 3.5 | 1327 |
| Preparation example 22 | 2.4 | 1.8 | 2.32 | -1.95 | 72.1 | 2 | 152.1 | 2.7 | 1556 |
| Preparation example 23 | 2.3 | 1.7 | 2.46 | -1.96 | 76.4 | 3 | 151.4 | 2.4 | 1645 |
| Preparation example 24 | 2.2 | 1.8 | 2.47 | -1.95 | 76.3 | 3 | 152.1 | 2.5 | 1548 |
| Preparation example 25 | 2.1 | 1.7 | 2.49 | -1.98 | 78.4 | 3 | 158.6 | 2.9 | 1538 |
| Preparation example 26 | 3.6 | 2.5 | 2.21 | -1.97 | 56.4 | 8 | 152.3 | 4.8 | 1017 |
| Preparation example 27 | 2.8 | 2.1 | 2.24 | -1.98 | 74.3 | 6 | 155.4 | 3.8 | 1126 |
| Preparation example 28 | 2.5 | 1.9 | 1.95 | -1.94 | 54.7 | 9 | 154.9 | 6.4 | 986 |
| Preparation example 29 | 2.4 | 1.8 | 1.98 | -1.95 | 68.4 | 7 | 155.6 | 4.5 | 1047 |

It can be seen from Table 11 that, compared with comparative examples, these preparation examples achieve a smaller lattice change rate, a smaller Li/Mn antisite defect concentration, a larger compacted density, and a surface oxygen valence state closer to -2 valence, less Mn and Fe dissolution after cycling, and better battery performance, such as better high-temperature storage performance and high-temperature cycling performance.

**Table 12: Thickness and weight ratio of manganese element to phosphorus element of each layer of positive electrode active materials prepared in preparation examples 1-14, and comparative examples 3-4 and 12**

| No. | Inner core | First coating layer | Second coating layer | Third coating layer | Thickness of first coating layer (nm) | Thickness of second coating layer (nm) | Thickness of third coating layer (nm) | Mn element content (wt%) | Weight ratio of Mn element to P element |
|---|---|---|---|---|---|---|---|---|---|
| Comparative example 3 | LiMn_{0.80}Fe_{0.20}PO₄ | 2% of amorphous Li₂FeP₂O₇ | - | 2% of carbon | 4 | - | 10 | 26.1 | 1.383 |
| Comparative example 4 | LiMn_{0.70}Fe_{0.295}V_{0.005}PO₄ | - | - | 1% of carbon | - | - | 5 | 24.3 | 1.241 |
| Comparative example 12 | Li_{0.999}Mn_{0.60}Fe_{0.393}V_{0.004}Co _{0.003}P_{0.999}S_{0.001}O₄ | - | 3% of crystalline LiFePO₄ | 1% of carbon | - | 7.5 | 5 | 19.6 | 1.034 |
| Preparation example 1 | Li_{0.997}Mn_{0.60}Fe_{0.393}V_{0.004}Co _{0.003}P_{0.997}S_{0.003}O₄ | 1% of Li₂FeP₂O₇ | 3% of LiFePO₄ | 1% of carbon | 2 | 7.5 | 5 | 19.0 | 1.023 |
| Preparation example 2 | Li_{0.997}Mn_{0.60}Fe_{0.393}V_{0.004}Co _{0.003}P_{0.997}S_{0.003}O₄ | 1% of Li₂FeP₂O₇ | 3% of LiFePO₄ | 3% of carbon | 2 | 7.5 | 15 | 18.3 | 1.023 |
| Preparation example 3 | Li_{0.997}Mn_{0.60}Fe_{0.393}V_{0.004}Co _{0.003}P_{0.997}S_{0.003}O₄ | 1% of Li₂FeP₂O₇ | 3% of LiFePO₄ | 4% of carbon | 2 | 7.5 | 20 | 18.0 | 1.023 |
| Preparation example 4 | Li_{0.997}Mn_{0.60}Fe_{0.393}V_{0.004}Co _{0.003}P_{0.997}S_{0.003}O₄ | 1% of Li₂FeP₂O₇ | 3% of LiFePO₄ | 5% of carbon | 2 | 7.5 | 25 | 17.9 | 1.023 |
| Preparation example 5 | Li_{0.997}Mn_{0.60}Fe_{0.393}V_{0.004}Co _{0.003}P_{0.997}S_{0.003}O₄ | 2% of Li₂FeP₂O₇ | 3% of LiFePO₄ | 1% of carbon | 4 | 7.5 | 5 | 18.7 | 1.011 |
| Preparation example 6 | Li_{0.997}Mn_{0.60}Fe_{0.393}V_{0.004}Co _{0.003}P_{0.997}S_{0.003}O₄ | 3% of Li₂FeP₂O₇ | 3% of LiFePO₄ | 1% of carbon | 6 | 7.5 | 5 | 18.3 | 0.999 |
| Preparation example 7 | Li_{0.997}Mn_{0.60}Fe_{0.393}V_{0.004}Co _{0.003}P_{0.997}S_{0.003}O₄ | 5% of Li₂FeP₂O₇ | 3% of LiFePO₄ | 1% of carbon | 10 | 7.5 | 5 | 17.6 | 0.975 |
| Preparation example 8 | Li_{0.997}Mn_{0.60}Fe_{0.393}V_{0.004}Co _{0.003}P_{0.997}S_{0.003}O₄ | 1% of Li₂FeP₂O₇ | 1% of LiFePO₄ | 1% of carbon | 2 | 2.5 | 5 | 19.8 | 1.043 |
| Preparation example 9 | Li_{0.997}Mn_{0.60}Fe_{0.393}V_{0.004}Co _{0.003}P_{0.997}S_{0.003}O₄ | 1% of Li₂FeP₂O₇ | 4% of LiFePO₄ | 1% of carbon | 2 | 10 | 5 | 18.7 | 1.014 |
| Preparation example 10 | Li_{0.997}Mn_{0.60}Fe_{0.393}V_{0.004}Co _{0.003}P_{0.997}S_{0.003}O₄ | 1% of Li₂FeP₂O₇ | 5% of LiFePO₄ | 1% of carbon | 2 | 12.5 | 5 | 18.4 | 1.004 |
| Preparation example 11 | Ll_{1.001}Mn_{0.60}Fe_{0.393}V_{0.004}Co _{0.003}P_{0.999}Si_{0.001}O₄ | 1% of Li₂FeP₂O₇ | 2.50% of LiFePO₄ | 1.5% of carbon | 2 | 6.3 | 7.5 | 19.0 | 1.026 |
| Preparation example 13 | Li_{0.995}Mn_{0.65}Fe_{0.341}V_{0.004}Co _{0.005}P_{0.995}S_{0.005}O₄ | 2% of Li₂FeP₂O₇ | 2% of LiFePO₄ | 2% of carbon | 4 | 5 | 10 | 18.7 | 1.108 |
| Preparation example 14 | Li_{1.002}Mn_{0.70}Fe_{0.293}V_{0.004}Co _{0.003}P_{0.998}Si_{0.002}O₄ | 2.5% of Li₂FeP₂O₇ | 3.50% of LiFePO₄ | 2.5% of carbon | 5 | 8.8 | 12.5 | 17.8 | 1.166 |

It can be seen from Table 12 that by doping at the manganese and phosphorus sites of lithium manganese iron phosphate (containing 35% of manganese and about 20% of phosphorus) and three-layer coating, the content of the manganese element in the positive electrode active material and the weight content ratio of manganese element to phosphorus element is obviously reduced; in addition, comparing preparation examples 1-14 with comparative examples 3, 4 and 12, combined with Table 12, it can be known that the decrease of manganese element and phosphorus element in the positive electrode active material will lead to the decrease of the dissolution of manganese and iron and the improvement of the battery performance of the secondary battery prepared therefrom.

**Table 13: Powder properties of positive electrode active materials and performance of batteries in preparation example 30-42**

| Preparation example No. | Powder properties of positive electrode active material | | | | | | Performances of batteries | | |
|---|---|---|---|---|---|---|---|---|---|
| | Lattice change rate (%) | Li/Mn antisite defect concentration (%) | Compacted density (g/cm³) | Surface oxygen valence state | 3C charge constant current rate (%) | Dissolution of Mn and Fe after cycling (ppm) | Capacity of button battery at 0.1C | Expansion of cell when stored at 60°C for 30 d (%) | Number of cycles for capacity retention rate of 80% at 45°C |
| Preparation example 1 | 2.5 | 1.8 | 2.35 | -1.93 | 70.3 | 7 | 157.2 | 4.2 | 1128 |
| | | | | | | | | | |
| Preparation example 30 | 2.4 | 1.9 | 2.36 | -1.97 | 68.7 | 15 | 156.2 | 4.8 | 1018 |
| Preparation example 31 | 2.5 | 1.7 | 2.36 | -1.96 | 70.1 | 12 | 155.6 | 4.6 | 1087 |
| Preparation example 32 | 2.5 | 1.7 | 2.38 | -1.97 | 69.1 | 14 | 155.9 | 4.3 | 1054 |
| Preparation example 33 | 2.6 | 1.8 | 2.39 | -1.98 | 69.4 | 23 | 156.2 | 5.3 | 997 |
| Preparation example 34 | 2.6 | 1.9 | 2.34 | -1.96 | 71.3 | 16 | 156.4 | 4.6 | 1004 |
| Preparation example 35 | 2.4 | 1.7 | 2.36 | -1.94 | 70.9 | 11 | 157.5 | 5.1 | 1102 |
| Preparation example 36 | 2.5 | 1.9 | 2.33 | -1.92 | 71.6 | 14 | 155.8 | 5.4 | 1024 |
| | | | | | | | | | |
| Preparation example 37 | 2.5 | 1.7 | 2.34 | -1.92 | 68.4 | 18 | 156.1 | 4.9 | 1054 |
| Preparation example 38 | 2.4 | 1.9 | 2.33 | -1.95 | 67.5 | 27 | 154.7 | 5.9 | 954 |
| Preparation example 39 | 2.2 | 1.8 | 2.36 | -1.94 | 69.4 | 24 | 156.4 | 5.7 | 1017 |
| Preparation example 40 | 2.4 | 1.9 | 2.37 | -1.91 | 71.6 | 31 | 155.8 | 5.3 | 991 |
| Preparation example 41 | 2.6 | 1.9 | 2.38 | -1.94 | 70.8 | 27 | 154.8 | 5.1 | 975 |
| Preparation example 42 | 2.4 | 1.9 | 2.36 | -1.92 | 71.5 | 15 | 156.8 | 4.2 | 1154 |

It can be seen from Table 13 that the use of the first coating layer and the second coating layer comprising other elements within the scope of the present application can also obtain a positive electrode active material with good performance and achieve good battery performance results.

**Table 14: Interplanar spacing and angle between first coating layer material and second coating layer material**

| No. | Interplanar spacing of first coating layer material | Angle of crystal direction (111) of first coating layer material | Interplanar spacing of second coating layer material | Angle of crystal direction (111) of second coating layer material |
|---|---|---|---|---|
| Preparation example 1 | 0.303 | 29.496 | 0.348 | 25.562 |
| Preparation example 63 | 0.451 | 19.668 | 0.348 | 25.562 |
| Preparation example 64 | 0.297 | 30.846 | 0.348 | 25.562 |
| Preparation example 65 | 0.457 | 19.456 | 0.348 | 25.562 |
| Preparation example 66 | 0.437 | 20.257 | 0.348 | 25.562 |
| Preparation example 67 | 0.462 | 19.211 | 0.348 | 25.562 |
| Preparation example 69 | 0.450 | 19.735 | 0.348 | 25.562 |
| Preparation example 69 | 0.372 | 23.893 | 0.348 | 25.562 |
| | | | | |
| Preparation example 70 | 0.303 | 29.496 | 0.374 | 23.789 |
| Preparation example 71 | 0.303 | 29.496 | 0.360 | 24.710 |
| Preparation example 72 | 0.303 | 29.496 | 0.350 | 25.428 |
| Preparation example 73 | 0.303 | 29.496 | 0.425 | 20.885 |
| Preparation example 74 | 0.303 | 29.496 | 0.356 | 24.993 |
| Preparation example 75 | 0.303 | 29.496 | 0.244 | 36.808 |

It can be seen from Table 14 that the interplanar spacing and angle between the first coating layer and the second coating layer in the present application are both within the scope of the present application.

### II. Investigation of the influence of coating layer sintering method on on the performance of positive electrode active material

The batteries of the preparation examples and comparative examples in the Table below are prepared similarly to preparation example 1, except that the method parameters in the Table below are used. The results are shown in Table 15 below.

**Table 15: Influence of sintering temperature and sintering time on performance of positive electrode active material in steps S4, S6 and S8**

| No. | Sinter ing tempe rature in S4 (°C) | Sinter ing time in S4 (h) | Sintering temperat ure in S6 (°C) | Sinterin g time in S6 (h) | Sintering temperat ure in S8 (°C) | Sinterin g time in S8 (h) | Lattice change rate (%) | Li/Mn antisite defect concent ration | Compac ted density | 3C charge constant current rate (%) | Dissolu tion of Mn and Fe after cycling (ppm) | Surface oxygen valence state | Capacity of button battery at 0.1C (mAh/g) | Expansio n of cell when stored at 60°C for 30 d (%) | Number of cycles for capacity retention rate of 80% at 45°C |
|---|---|---|---|---|---|---|---|---|---|---|---|---|---|---|---|
| Preparation example 1 | 650 | 6 | 700 | 8 | 700 | 10 | 2.5 | 1.8 | 2.35 | 70.3 | 7 | -1.93 | 157.2 | 4.2 | 1128 |
| Preparation example II-1 | 750 | 4 | 600 | 6 | 700 | 6 | 3.0 | 2.4 | 2.24 | 64.2 | 12 | -1.95 | 154.2 | 6.4 | 894 |
| Preparation example II-2 | 800 | 4 | 600 | 6 | 700 | 6 | 3.1 | 2.4 | 2.21 | 67.3 | 12 | -1.95 | 153.2 | 6.2 | 904 |
| Preparation example II-3 | 700 | 2 | 600 | 6 | 700 | 6 | 2.9 | 2.3 | 2.20 | 62.3 | 15 | -1.96 | 151.1 | 5.8 | 846 |
| Preparation example II-4 | 700 | 3 | 600 | 6 | 700 | 6 | 2.7 | 2.1 | 2.23 | 64.3 | 14 | -1.96 | 152.8 | 5.4 | 908 |
| Preparation example II-5 | 700 | 4 | 500 | 6 | 700 | 6 | 2.5 | 1.8 | 2.31 | 62.4 | 28 | -1.95 | 153.1 | 4.7 | 798 |
| Preparation example II-6 | 700 | 4 | 700 | 6 | 700 | 6 | 2.5 | 1.8 | 2.34 | 63.5 | 14 | -1.96 | 154.3 | 5.1 | 867 |
| Preparation example II-7 | 700 | 4 | 600 | 8 | 700 | 6 | 2.5 | 1.8 | 2.31 | 67.3 | 11 | -1.95 | 156.8 | 4.7 | 959 |
| Preparation example II-8 | 700 | 4 | 600 | 10 | 700 | 6 | 2.5 | 1.8 | 2.34 | 68.5 | 10 | -1.96 | 156.2 | 4.5 | 1045 |
| Preparation example II-9 | 700 | 4 | 600 | 6 | 750 | 6 | 2.5 | 1.8 | 2.35 | 70.3 | 7 | -1.93 | 157.2 | 4.2 | 1128 |
| Preparation example II-10 | 700 | 4 | 600 | 6 | 800 | 6 | 2.5 | 1.8 | 2.35 | 70.1 | 7 | -1.93 | 156.3 | 4.4 | 1097 |
| Preparation example II-11 | 700 | 4 | 600 | 6 | 700 | 8 | 2.5 | 1.8 | 2.35 | 68.4 | 8 | -1.91 | 155.4 | 4.7 | 964 |
| Preparation example II-12 | 700 | 4 | 600 | 6 | 700 | 10 | 2.5 | 1.8 | 2.35 | 66.7 | 10 | -1.95 | 154.7 | 5 | 897 |
| Comparative example II-1 | 600 | 3 | 600 | 8 | 750 | 8 | 4.8 | 5.3 | 2.28 | 54.1 | 86 | -1.90 | 140.7 | 10.6 | 615 |
| Comparative example II-2 | 850 | 3 | 600 | 8 | 750 | 8 | 5.3 | 4.7 | 2.38 | 57.2 | 84 | -1.91 | 145.3 | 9.0 | 684 |
| Comparative example II-3 | 750 | 1.5 | 600 | 8 | 750 | 8 | 4.7 | 4.5 | 2.25 | 53.1 | 87 | -1.91 | 141.9 | 8.8 | 691 |
| Comparative example II-4 | 750 | 4.5 | 600 | 8 | 750 | 8 | 4.1 | 4.0 | 2.31 | 58.1 | 79 | -1.92 | 140.1 | 8.1 | 711 |
| Comparative example II-5 | 750 | 3 | 450 | 8 | 750 | 8 | 4.8 | 4.6 | 2.28 | 52.1 | 78 | -1.90 | 141.2 | 8.7 | 601 |
| Comparative example II-6 | 750 | 3 | 750 | 8 | 750 | 8 | 3.9 | 4.8 | 2.35 | 49.7 | 78 | -1.95 | 142.4 | 8.8 | 604 |
| Comparative example II-7 | 750 | 3 | 600 | 5.5 | 750 | 8 | 4.4 | 4.2 | 2.24 | 45.4 | 81 | -1.93 | 142.9 | 8.8 | 614 |
| Comparative example II-8 | 750 | 3 | 600 | 10.5 | 750 | 8 | 4.1 | 3.9 | 2.34 | 49.1 | 79 | -1.92 | 141.1 | 7.9 | 684 |
| Comparative example II-9 | 750 | 3 | 600 | 8 | 650 | 8 | 5.2 | 4.1 | 2.31 | 48.4 | 81 | -1.93 | 141.8 | 10.2 | 567 |
| Comparative example II-10 | 750 | 3 | 600 | 8 | 850 | 8 | 5.0 | 4.0 | 2.34 | 49.1 | 78 | -1.95 | 141.2 | 8.7 | 678 |
| Comparative example II-11 | 750 | 3 | 600 | 8 | 750 | 5.5 | 4.3 | 4.2 | 2.27 | 47.8 | 84 | -1.91 | 142.9 | 9.4 | 521 |
| Comparative example II-12 | 750 | 3 | 600 | 8 | 750 | 10.5 | 50 | 4.9 | 2.35 | 49.8 | 78 | -1.94 | 141.7 | 9.5 | 655 |

It can be seen from the above that when the sintering temperature range in step S4 is 650-800°C and the sintering time is 2-6 h, the sintering temperature in step S6 is 500-700°C and the sintering time is 6-10 h, and the sintering temperature in step S8 is 700-800°C and the sintering time is 6-10 h, smaller lattice change rate, lower Li/Mn antisite defect concentration, less dissolution of manganese and iron elements, better 3C charge constant current rate, larger battery capacity, better battery cycling performance, and better high temperature storage stability can be achieved.

In addition, compared with comparative example II-4 (the sintering temperature is 750°C and the sintering time is 4.5 h in step S4), preparation example II-1 (the sintering temperature is 750°C and the sintering time is 4 h in step S4) achieves better performance of the positive electrode active materials and the batteries, which indicates that when the sintering temperature in step S4 is 750°C or greater than 750°C, it is necessary to control the sintering time to less than 4.5 h.

### III. Investigation of the influence of reaction temperature and reaction time in preparation of inner core on the performances of positive electrode active material

The positive electrode active materials and batteries of preparation examples in the Table below are prepared similarly to preparation example 1, and for the differences in the preparation of the positive electrode active materials, please refer to the method parameters in the table below. The results are also shown in the table below.

**Table 16: Influence of reaction temperature and reaction time in preparation of inner core on performances of positive electrode active material**

| No. | Step S1 | | Step S2 | | Lattice change | Li/Mn antisite | Compa cted | 3C charge | Dissolution of Mn and | Surface oxygen | Capacity of button | Expansion of cell | Number of cycles |
|---|---|---|---|---|---|---|---|---|---|---|---|---|---|
| | Reaction | Reaction | Reaction | Reaction | | | | | | | | | |
| | temperature (°C) | time (h) | temperat ure (°C) | time (h) | rate (%) | defect concent ration (%) | density (g/cm³) | constant current rate (%) | Fe after cycling (ppm) | valence state | battery at 0.1C (mAh/g) | when stored at 60°C for 30 d (%) | for capacity retention rate of 80% at 45°C |
| Preparation example 1 | 80 | 6 | 80 | 10 | 2.5 | 1.8 | 2.35 | 70.3 | 7 | -1.93 | 157.2 | 4.2 | 1128 |
| Preparation example III-1 | 70 | 6 | 80 | 10 | 2.8 | 3.4 | 2.30 | 60.1 | 34 | -1.93 | 155.4 | 5.8 | 876 |
| Preparation example III-2 | 60 | 6 | 80 | 10 | 3.1 | 3.1 | 2.33 | 64.2 | 18 | -1.92 | 156.2 | 5.1 | 997 |
| Preparation example III-4 | 100 | 6 | 80 | 10 | 2.3 | 2.4 | 2.37 | 71.3 | 7 | -1.94 | 156.8 | 4.1 | 1137 |
| Preparation example III-5 | 120 | 6 | 80 | 10 | 2.1 | 2.2 | 2.38 | 72.1 | 5 | -1.92 | 155.4 | 4.0 | 1158 |
| Preparation example III-6 | 80 | 2 | 80 | 10 | 2.8 | 3.2 | 2.27 | 68.4 | 24 | -1.90 | 154.9 | 5.1 | 895 |
| Preparation example III-7 | 80 | 3 | 80 | 10 | 2.6 | 2.7 | 2.29 | 69.7 | 17 | -1.92 | 156.1 | 4.7 | 967 |
| Preparation example III-8 | 80 | 5 | 80 | 10 | 2.4 | 1.9 | 2.34 | 70.6 | 8 | -1.94 | 156.8 | 4.3 | 1137 |
| Preparation example III-9 | 80 | 7 | 80 | 10 | 2.5 | 1.8 | 2.35 | 68.3 | 11 | -1.94 | 156.4 | 4.8 | 987 |
| Preparation example III-10 | 80 | 9 | 80 | 10 | 2.6 | 1.8 | 2.36 | 67.2 | 15 | -1.93 | 155.9 | 5.2 | 921 |
| Preparation example III-11 | 80 | 6 | 40 | 10 | 3.2 | 3.4 | 2.28 | 67.8 | 35 | -1.94 | 156.8 | 5.4 | 894 |
| Preparation example III-12 | 80 | 6 | 60 | 10 | 2.8 | 2.9 | 2.31 | 68.7 | 18 | -1.95 | 157.0 | 4.9 | 927 |
| Preparation example III-13 | 80 | 6 | 80 | 10 | 2.5 | 2.7 | 2.35 | 70.3 | 7 | -1.93 | 157.2 | 4.2 | 1128 |
| Preparation example III-14 | 80 | 6 | 100 | 10 | 2.7 | 2.8 | 2.33 | 69.4 | 15 | -1.93 | 156.7 | 4.6 | 957 |
| Preparation example III-15 | 80 | 6 | 120 | 10 | 2.8 | 3.1 | 2.32 | 68.1 | 24 | -1.94 | 156.2 | 4.8 | 914 |
| Preparation example III-16 | 80 | 6 | 90 | 1 | 3.7 | 3.8 | 2.26 | 67.9 | 38 | -1.93 | 155.8 | 5.2 | 885 |
| Preparation example III-17 | 80 | 6 | 90 | 3 | 3.4 | 3.4 | 2.31 | 68.2 | 32 | -1.94 | 156.1 | 4.8 | 915 |
| Preparation example III-18 | 80 | 6 | 90 | 5 | 3.1 | 3.1 | 2.33 | 69.1 | 27 | -1.92 | 156.4 | 4.6 | 934 |
| Preparation example III-19 | 80 | 6 | 90 | 7 | 2.8 | 2.9 | 2.34 | 69.4 | 15 | -1.93 | 156.8 | 4.5 | 971 |
| Preparation example III-20 | 80 | 6 | 90 | 9 | 2.5 | 2.7 | 2.35 | 70.3 | 7 | -1.93 | 157.2 | 4.2 | 1128 |

It can be seen from Table 16 that when the reaction temperature range is 60-120°C and the reaction time is 2-9 hours in step S1, and the reaction temperature range is 40-120°C and the reaction time is 1-10 hours in step S2, the powder properties of the positive electrode active material (lattice change rate, Li/Mn antisite defect concentration, surface oxygen valence state, and compacted density) and the performances of the prepared battery (electric capacity, high-temperature cycling performance, and high-temperature storage performance) are all excellent.

### IV. Battery Test

The secondary batteries prepared from the positive electrode plates P2-P48 are tested as follows:
(1) according to the method in the national standard GB 38031-2020 "Electric vehicles traction battery safety requirements", the energy density of the secondary battery is determined;
(2) according to the national standard GBT31486-2015 "Electrical performance requirements and test methods for traction battery of electric vehicle", the discharge capacity retention rate at a low temperature of -20°C of the secondary battery is determined (charge-discharge cycle twice) to obtain the kinetic data of the battery;
(3) according to the standard cycle test method in the national standard GBT31484-2015 "Cycle life requirements and test methods for traction battery of electric vehicle", the normal-temperature cycle life of the secondary battery with 80% SOH is tested;
(4) referring to the standard cycle test method in the national standard GBT31484-2015 "Cycle life requirements and test methods for traction battery of electric vehicle", the temperature during the test process is adjusted to -10°C, the charge and discharge current is adjusted to 0.33C, the rest of the conditions are kept unchanged, and then the low-temperature cycle life of the secondary battery with 80% SOH is tested; and
(5) according to the national standard GBT31486-2015 "Electrical performance requirements and test methods for traction battery of electric vehicle", the specific power data of the secondary battery with 20% SOC are determined; the detailed steps are as follows:
   a) charging according to the method 6.3.4 in the national standard GBT31486-2015;
   b) at room temperature, the secondary battery being discharged at a current of 1C for 48 min, then discharged at the specified maximum discharge current for 10 s, then allowed to stand for 30 min, and then charged with the specified maximum charge current for 10 s; and
   c) calculating the specific power (W/kg) of the cell by dividing the discharge energy of 10 s charge and discharge by the 10 s charge and discharge time.

The above results are shown in Table 17.

**Table 17 Results of battery tests**

| Electrode plate for battery | Energy density (Wh/L) | | Energy density (Wh/kg) | | Discharge capacity retention rate at 0.33C at 20°C | Specific power capacity (25°C 20% SOC 10S) (W/kg) | Cycle life, Cycles (80% SOH, 25°C) | Cycle life, Cycles (80% SOH, -10°C) |
|---|---|---|---|---|---|---|---|---|
| Positive electrode plate P2 | 418.1 | Base | 186.3 | Base | 38% | 1055 | 3500 | 300 |
| Positive electrode plate P3 | 457.6 | 9.45% | 203.9 | 9.45% | 61% | 1232 | 3630 | 676 |
| Positive electrode plate P4 | 457.6 | 9.45% | 203.9 | 9.45% | 58% | 1597 | 3602 | 658 |
| Positive electrode plate P5 | 473.3 | 13.20% | 210.8 | 13.15% | 65% | 1701 | 3594 | 743 |
| Positive electrode plate P6 | 442.9 | 5.93% | 197.2 | 5.85% | 48% | 1443 | 3531 | 421 |
| Positive electrode plate P7 | 457.6 | 9.45% | 203.9 | 9.45% | 56% | 1639 | 3626 | 661 |
| Positive electrode plate P8 | 457.6 | 9.45% | 203.9 | 9.45% | 55% | 1372 | 3532 | 530 |
| Positive electrode plate P9 | 473.3 | 13.20% | 210.8 | 13.15% | 71% | 1799 | 3880 | 768 |
| Positive electrode plate P10 | 473.3 | 13.20% | 210.8 | 13.15% | 69% | 1801 | 3812 | 772 |
| Positive electrode plate P11 | 442.9 | 5.93% | 197.2 | 5.85% | 50% | 1518 | 3810 | 637 |
| Positive electrode plate P12 | 442.9 | 5.93% | 197.2 | 5.85% | 46% | 1551 | 3863 | 746 |
| Positive electrode plate P13 | 473.3 | 13.20% | 210.8 | 13.15% | 68% | 1696 | 3498 | 786 |
| Positive electrode plate P14 | 442.9 | 5.93% | 197.2 | 5.85% | 46% | 1422 | 3854 | 429 |
| Positive electrode plate P15 | 457.6 | 9.45% | 203.9 | 9.45% | 56% | 1646 | 3730 | 669 |
| Positive electrode plate P16 | 473.3 | 13.20% | 210.8 | 13.15% | 65% | 1454 | 3490 | 584 |
| Positive electrode plate P17 | 442.9 | 5.93% | 197.2 | 5.85% | 51% | 1307 | 3792 | 354 |
| Positive electrode plate P18 | 457.6 | 9.45% | 203.9 | 9.45% | 57% | 1448 | 3596 | 570 |
| Positive electrode plate P19 | 482.3 | 15.36% | 214.3 | 15.03% | 72% | 1696 | 3510 | 785 |
| Positive electrode plate P20 | 450.8 | 7.82% | 200.6 | 7.68% | 52% | 1358 | 3630 | 659 |
| Positive electrode plate P21 | 466.7 | 11.62% | 207.6 | 11.43% | 56% | 1698 | 3574 | 692 |
| Positive electrode plate P22 | 482.3 | 15.36% | 214.3 | 15.03% | 74% | 1761 | 3865 | 755 |
| Positive electrode plate P23 | 450.8 | 7.82% | 200.6 | 7.68% | 53% | 1350 | 3486 | 642 |
| Positive electrode plate P24 | 466.7 | 11.62% | 207.6 | 11.43% | 55% | 1613 | 3685 | 612 |
| Positive electrode plate P25 | 466.7 | 11.62% | 207.6 | 11.43% | 59% | 1692 | 3455 | 674 |
| Positive electrode plate P26 | 430.1 | 2.87% | 192 | 3.06% | 43% | 1284 | 3960 | 563 |
| Positive electrode plate P27 | 450.8 | 7.82% | 200.6 | 7.68% | 47% | 1519 | 3856 | 578 |
| Positive electrode plate P28 | 466.7 | 11.62% | 207.6 | 11.43% | 59% | 1649 | 3573 | 686 |
| Positive electrode plate P29 | 430.1 | 2.87% | 192 | 3.06% | 46% | 1329 | 3966 | 579 |
| Positive electrode plate P30 | 450.8 | 7.82% | 200.6 | 7.68% | 50% | 1554 | 3746 | 612 |
| Positive electrode plate P31 | 425 | 1.65% | 189 | 1.45% | 42% | 1086 | 4031 | 359 |
| Positive electrode plate P32 | 457.6 | 9.45% | 203.9 | 9.45% | 58% | 1698 | 3746 | 622 |
| Positive electrode plate P33 | 418.1 | 0.00% | 186.3 | 0.00% | 14% | 405 | 303 | 92 |
| Positive electrode plate P34 | 418.1 | 0.00% | 186.3 | 0.00% | 36% | 1071 | 3992 | 403 |
| Positive electrode plate P35 | 418.1 | 0.00% | 186.3 | 0.00% | 13% | 434 | 334 | 99 |
| Positive electrode plate P36 | 418.1 | 0.00% | 186.3 | 0.00% | 38% | 1193 | 4011 | 427 |
| Positive electrode plate P37 | 418.1 | 0.00% | 186.3 | 0.00% | 37% | 1031 | 3873 | 334 |
| Positive electrode plate P38 | 418.1 | 0.00% | 186.3 | 0.00% | 35% | 1089 | 3918 | 336 |
| Positive electrode plate P39 | 418.1 | 0.00% | 186.3 | 0.00% | 33% | 1052 | 4030 | 365 |
| Positive electrode plate P40 | 418.1 | 0.00% | 186.3 | 0.00% | 36% | 1032 | 3980 | 307 |
| Positive electrode plate P41 | 457.6 | 9.45% | 203.9 | 9.46% | 45% | 531 | 378 | 194 |
| Positive electrode plate P42 | 457.6 | 9.45% | 203.9 | 9.46% | 55% | 1356 | 3256 | 726 |
| Positive electrode plate P43 | 457.6 | 9.45% | 203.9 | 9.46% | 47% | 643 | 438 | 153 |
| Positive electrode plate P44 | 457.6 | 9.45% | 203.9 | 9.46% | 55% | 1348 | 3337 | 738 |
| Positive electrode plate P45 | 457.6 | 9.45% | 203.9 | 9.46% | 54% | 1358 | 3361 | 688 |
| Positive electrode plate P46 | 457.6 | 9.45% | 203.9 | 9.46% | 53% | 1373 | 3409 | 727 |
| Positive electrode plate P47 | 457.6 | 9.45% | 203.9 | 9.46% | 53% | 1409 | 3385 | 672 |
| Positive electrode plate P48 | 457.6 | 9.45% | 203.9 | 9.46% | 54% | 1422 | 3348 | 714 |

According to the above results, it can be seen that:
Compared with the secondary battery using the positive electrode plate P2, the secondary battery using the positive electrode plates P3-P30 has higher energy density, higher low-temperature discharge capacity retention rate, higher specific power, and longer low-temperature cycle life, and the secondary battery using the positive electrode plates P3-P12, P14-15, P17-18, P20-P22, P24, and P26-P30 has longer room-temperature cycle life;
compared with the secondary battery using the positive electrode plate P31, the secondary battery using the positive electrode plate P32 has higher energy density, higher low-temperature discharge capacity retention rate, higher specific power, and longer low-temperature cycle life;
the positive electrode plates P41-P48 comprise the first positive electrode active material and the second positive electrode active material, the positive electrode plates P33-P40 comprise only an equivalent amount of the corresponding second positive electrode active material, and compared with the positive electrode plate comprising only the second positive electrode active material, the secondary battery made of the positive electrode plate comprising the first positive electrode active material and the second positive electrode active material has higher energy density, higher low-temperature discharge capacity retention rate, higher specific power, and longer low-temperature cycle life; and
the above shows that the secondary battery made of the positive electrode plate of the present description has higher energy density, better kinetic performance, higher cell rate performance, longer low-temperature cycle life, higher low-temperature cycling capacity retention rate, and better safety.

It should be noted that the present description is not limited to the above embodiments.

## Claims

1. A positive electrode plate, comprising a positive electrode current collector and positive electrode film layers provided on at least one surface of the positive electrode current collector; wherein the positive electrode film layers have a single-layer structure or a multi-layer structure; when the positive electrode film layers have a single-layer structure, at least one of the positive electrode film layers comprises both a first positive electrode active material having a core-shell structure and a second positive electrode active material; and/or when the positive electrode film layers have a multi-layer structure, at least one layer of the at least one of the positive electrode film layers comprises both a first positive electrode active material having a core-shell structure and a second positive electrode active material; wherein
the first positive electrode active material comprises an inner core, a first coating layer coating the inner core, a second coating layer coating the first coating layer, and a third coating layer coating the second coating layer; the inner core comprises Li₁₊ₓMn_{1-y}A_{y}P_{1-z}R_{z}O₄, the first coating layer comprises crystalline pyrophosphate LiₐMP₂O₇ and/or M_{b}(P₂O₇)_{c}, the second coating layer comprises crystalline phosphate XPO₄, and the third coating layer comprises carbon;
wherein
A comprises one or more elements selected from Zn, Al, Na, K, Mg, Mo, W, Ti, V, Zr, Fe, Ni, Co, Ga, Sn, Sb, Nb and Ge;
R comprises one or more elements selected from B, Si, N and S;
x is selected from any value in the range of -0.100 to 0.100;
y is selected from any value in the range of 0.001 to 0.500;
z is selected from any value in the range of 0.001 to 0.100;
M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al,
a is selected from any value in the range of 0 to 2;
b is selected from any value in the range of 1 to 4;
c is selected from any value in the range of 1 to 6; and
X comprises one or more elements selected from Li, Fe, Ni, Mg, Co, Cu, Zn, Ti, Ag, Zr, Nb and Al;
and
the second positive electrode active material is one or more selected from LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Ni, W, Zr, Nb, Sm, Cr, Cu and B, d is independently selected from any value in the range of 0.99 to 0.999, and d + e = 1.

2. A positive electrode plate, comprising a positive electrode current collector and positive electrode film layers provided on at least one surface of the positive electrode current collector; wherein at least one of the positive electrode film layers has a multi-layer structure, and any of the positive electrode film layers having a multi-layer structure comprises in different layers a first positive electrode active material having a core-shell structure and a second positive electrode active material, respectively;
the first positive electrode active material comprises an inner core, a first coating layer coating the inner core, a second coating layer coating the first coating layer, and a third coating layer coating the second coating layer; wherein the inner core comprises Li₁₊ₓMn_{1-y}A_{y}P_{1-z}R_{z}O₄, the first coating layer comprises crystalline pyrophosphate LiₐMP₂O₇ and/or M_{b}(P₂O₇)_{c}, the second coating layer comprises crystalline phosphate XPO₄, and the third coating layer comprises carbon;
wherein
A comprises one or more elements selected from Zn, Al, Na, K, Mg, Mo, W, Ti, V, Zr, Fe, Ni, Co, Ga, Sn, Sb, Nb and Ge;
R comprises one or more elements selected from B, Si, N and S;
x is selected from any value in the range of -0.100 to 0.100;
y is selected from any value in the range of 0.001 to 0.500;
z is selected from any value in the range of 0.001 to 0.100;
M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al;
a is selected from any value in the range of 0 to 2;
b is selected from any value in the range of 1 to 4;
c is selected from any value in the range of 1 to 6; and
X comprises one or more elements selected from Li, Fe, Ni, Mg, Co, Cu, Zn, Ti, Ag, Zr, Nb and Al;
and
the second positive electrode active material is one or more selected from LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Ni, W, Zr, Nb, Sm, Cr, Cu and B, d is independently selected from any value in the range of 0.99 to 0.999, and d + e = 1; and
optionally, any of the positive electrode film layers having a multi-layer structure comprises in adjacent layers the first positive electrode active material and the second positive electrode active material, respectively.

3. A positive electrode plate, comprising a positive electrode current collector and a positive electrode film layer A and a positive electrode film layer B provided on the two surfaces of the positive electrode current collector, respectively; wherein the positive electrode film layer A and the positive electrode film layer B each independently have a single-layer structure or a multi-layer structure; at least one layer of the positive electrode film layer A comprises a first positive electrode active material having a core-shell structure, and at the same time, at least one layer of the positive electrode film layer B comprises a second positive electrode active material;
the first positive electrode active material comprises an inner core, a first coating layer coating the inner core, a second coating layer coating the first coating layer, and a third coating layer coating the second coating layer; wherein the inner core comprises Li₁₊ₓMn_{1-y}A_{y}P_{1-z}R_{z}O₄, the first coating layer comprises crystalline pyrophosphate LiₐMP₂O₇ and/or M_{b}(P₂O₇)_{c}, the second coating layer comprises crystalline phosphate XPO₄, and the third coating layer comprises carbon;
wherein
A comprises one or more elements selected from Zn, Al, Na, K, Mg, Mo, W, Ti, V, Zr, Fe, Ni, Co, Ga, Sn, Sb, Nb and Ge;
R comprises one or more elements selected from B, Si, N and S;
x is selected from any value in the range of -0.100-0.100;
y is selected from any value in the range of 0.001-0.500;
z is selected from any value in the range of 0.001-0.100;
M in the crystalline pyrophosphates LiₐMP₂O₇ and M_{b}(P₂O₇)_{c} each independently comprises one or more elements selected from Fe, Ni, Mg, Co, Cu, Zn, Ti, Ag, Zr, Nb and Al,
a is selected from any value in the range of 0-2;
b is selected from any value in the range of 1-4;
c is selected from any value in the range of 1-6; and
X comprises one or more elements selected from Li, Fe, Ni, Mg, Co, Cu, Zn, Ti, Ag, Zr, Nb and Al;
and
the second positive electrode active material is one or more selected from LiFePO₄, carbon-coated LiFePO₄, LiFe_{d}DₑPO₄, and carbon-coated LiFe_{d}DₑPO₄, wherein D independently comprises one or more elements selected from Ti, Zn, Co, Mn, La, V, Mg, Al, Ni, W, Zr, Nb, Sm, Cr, Cu and B, d is independently selected from the range of 0.99 to 0.999, and d + e = 1.

4. The positive electrode plate according to any one of claims 1 to 3, wherein in the second positive electrode active material,
the mass of carbon accounts for 0.1% - 4% of the mass of the carbon-coated LiFePO₄; and/or
the mass of carbon accounts for 0.1% - 4% of the mass of the carbon-coated LiFe_{d}DₑPO₄; optionally mass ratio of the first positive electrode active material to the second positive electrode active material is 1 : 7 - 7 : 1, optionally 1 : 4 - 4 : 1.

5. The positive electrode plate according to any one of claims 1 to 4, wherein in the first positive electrode active material,
A is selected from one or more elements of Fe, Ti, V, Ni, Co and Mg, and/or
R is selected from one element of B, Si, N and S, and/or
the ratio of y to 1-y is selected from 1 : 10 to 1 : 1, optionally 1 : 4 to 1 : 1, and/or
the ratio of z to 1-z is selected from 1 : 9 to 1 : 999, optionally 1 : 499 to 1 : 249; optionally in the first positive electrode active material, the first coating layer has an interplanar spacing of the crystalline pyrophosphate in a range of 0.293-0.470 nm, and an angle of the crystal direction (111) in a range of 18.00° - 32.00°; and the second coating layer has an interplanar spacing of the crystalline phosphate in a range of 0.244-0.425 nm, and an angle of the crystal direction (111) in a range of 20.00° - 37.00°.

6. The positive electrode plate according to any one of claims 1 to 5, wherein in the first positive electrode active material, the carbon of the third coating layer is a mixture of SP2-form carbon and SP3-form carbon, and optionally, the molar ratio of the SP2-form carbon to the SP3-form carbon is any value in the range of 0.1-10, optionally any value in the range of 2.0-3.0.

7. The positive electrode plate according to any one of claims 1 to 6, wherein in the first positive electrode active material,
a coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or
a coating amount of the second coating layer is greater than 0 and less than or equal to 6 wt%, optionally greater than 0 and less than or equal to 5.5 wt%, more optionally 2-4 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

8. The positive electrode plate according to any one of claims 1 to 7, wherein in the first positive electrode active material,
the first coating layer has a thickness of 1-10 nm; and/or
the second coating layer has a thickness of 2-15 nm; and/or
the third coating layer has a thickness of 2-25 nm; optionally in the first positive electrode active material, based on the weight of the first positive electrode active material,
a content of manganese element is in the range of 10 wt% - 35 wt%, optionally in the range of 15 wt% - 30 wt%, more optionally in the range of 17 wt% - 20 wt%; and/or
a content of phosphorus element is in the range of 12 wt% - 25 wt%, optionally in the range of 15 wt% - 20 wt%; and/or
a weight ratio of manganese element to phosphorus element is in a range of 0.90-1.25, optionally 0.95-1.20.

9. The positive electrode plate according to any one of claims 1 to 8, wherein the first positive electrode active material has a lattice change rate, before and after complete lithium intercalation-deintercalation, of 4% or less, optionally 3.8% or less, more optionally 2.0-3.8%; optionally the first positive electrode active material has an Li/Mn antisite defect concentration of 4% or less, optionally 2.2% or less, more optionally 1.5-2.2%. The Li/Mn antisite defect concentration is tested according to JIS K 0131 -1996.

10. The positive electrode plate according to any one of claims 1 to 9, wherein the first positive electrode active material has a compacted density under 3 T of 2.2 g/cm³ or more, optionally 2.2 g/cm³ or more and 2.8 g/cm³ or less. The compacted density is measured in accordance with GB/T 24533-2009.

11. The positive electrode plate according to any one of claims 1 to 10, wherein the first positive electrode active material has a surface oxygen valence state of -1.90 or less, optionally -1.90 to - 1.98; optionally the sum of the mass of the first positive electrode active material and the second positive electrode active material accounts for 88% - 98.7% of the mass of the positive electrode plate. The surface oxygen valence state is measured by electron energy loss spectroscopy (EELS).

12. A secondary battery (5), comprising a positive electrode plate according to any one of claims 1-11.

13. A battery module (4), comprising a secondary battery (5) according to claim 12.

14. A battery pack (1), comprising a battery module (4) according to claim 13.

15. A power consuming device, comprising at least one selected from a secondary battery (5) according to claim 12, a battery module (4) according to claim 13, and a battery pack (1) according to claim 14.

## Patentansprüche

1. Positive Elektrodenplatte, umfassend einen positiven Elektrodenstromabnehmer und positive Elektrodenfilmschichten, die auf mindestens einer Oberfläche des positiven Elektrodenstromabnehmers bereitgestellt sind; wobei die positiven Elektrodenfilmschichten eine Einschichtstruktur oder eine Mehrschichtstruktur aufweisen; wenn die positiven Elektrodenfilmschichten eine Einschichtstruktur aufweisen, mindestens eine der positiven Elektrodenfilmschichten sowohl ein erstes aktives Material für positive Elektroden, das eine Kern-Hülle-Struktur aufweist, als auch ein zweites aktives Material für positive Elektroden umfasst; und/oder wenn die positiven Elektrodenfilmschichten eine Mehrschichtstruktur aufweisen, mindestens eine Schicht der mindestens einen der positiven Elektrodenfilmschichten sowohl ein erstes aktives Material für positive Elektroden mit einer Kern-Hülle-Struktur als auch ein zweites aktives Material für positive Elektroden umfasst; wobei
das erste aktive Material für positive Elektroden einen inneren Kern umfasst, eine erste Beschichtungsschicht umfasst, die den inneren Kern beschichtet, eine zweite Beschichtungsschicht umfasst, die die erste Beschichtungsschicht beschichtet, und eine dritte Beschichtungsschicht umfasst, die die zweite Beschichtungsschicht beschichtet; der innere Kern Li₁₊ₓMn_{1-y}A_{y}P_{1-z}R_{z}O₄ umfasst, die erste Beschichtungsschicht kristallines Pyrophosphat LiₐMP₂O₇ und/oder M_{b}(P₂O₇)_{c} umfasst, die zweite Beschichtungsschicht kristallines Phosphat XPO₄ umfasst und die dritte Beschichtungsschicht Kohlenstoff umfasst;
wobei
A ein oder mehrere Elemente umfasst, ausgewählt aus Zn, Al, Na, K, Mg, Mo, W, Ti, V, Zr, Fe, Ni, Co, Ga, Sn, Sb, Nb und Ge;
R ein oder mehrere Elemente umfasst, ausgewählt aus B, Si, N und S;
x ausgewählt ist aus einem beliebigen Wert im Bereich von -0,100 bis 0,100;
y ausgewählt ist aus einem beliebigen Wert im Bereich von 0,001 bis 0,500;
z ausgewählt ist aus einem beliebigen Wert im Bereich von 0,001 bis 0,100;
M in den kristallinen Pyrophosphaten LiₐMP₂O₇ und M₆(P₂O₇)_{c} jeweils unabhängig voneinander ein oder mehrere Elemente umfasst, ausgewählt aus Fe, Ni, Mg, Co, Cu, Zn, Ti, Ag, Zr, Nb und Al,
a ausgewählt ist aus einem beliebigen Wert im Bereich von 0 bis 2;
b ausgewählt ist aus einem beliebigen Wert im Bereich von 1 bis 4;
c ausgewählt ist aus einem beliebigen Wert im Bereich von 1 bis 6; und
X ein oder mehrere Elemente umfasst, ausgewählt aus Li, Fe, Ni, Mg, Co, Cu, Zn, Ti, Ag, Zr, Nb und Al; und
das zweite aktive Material für positive Elektroden eines oder mehrere ist, ausgewählt aus LiFePO₄, kohlenstoffbeschichtetem LiFePO₄, LiFe_{d}DₑPO₄ und kohlenstoffbeschichtetem LiFe_{d}DₑPO₄, wobei D unabhängig ein oder mehrere Elemente umfasst, ausgewählt aus Ti, Zn, Co, Mn, La, V, Mg, AI, Ni, W, Zr, Nb, Sm, Cr, Cu und B, d unabhängig ausgewählt ist aus einem beliebigen Wert im Bereich von 0,99 bis 0,999 und d + e = 1.

2. Positive Elektrodenplatte, umfassend einen positiven Elektrodenstromabnehmer und positive Elektrodenfilmschichten, die auf mindestens einer Oberfläche des positiven Elektrodenstromabnehmers bereitgestellt sind; wobei mindestens eine der positiven Elektrodenfilmschichten eine Mehrschichtstruktur aufweist und jede der positiven Elektrodenfilmschichten mit einer Mehrschichtstruktur in verschiedenen Schichten jeweils ein erstes aktives Material für positive Elektroden, das eine Kern-Hülle-Struktur aufweist, und ein zweites aktives Material für positive Elektroden umfasst;
das erste aktive Material für positive Elektroden einen inneren Kern umfasst, eine erste Beschichtungsschicht umfasst, die den inneren Kern beschichtet, eine zweite Beschichtungsschicht umfasst, die die erste Beschichtungsschicht beschichtet, und eine dritte Beschichtungsschicht umfasst, die die zweite Beschichtungsschicht beschichtet; wobei der innere Kern Li₁₊ₓMn_{1-y}A_{y}P_{1-z}R_{z}O₄ umfasst, die erste Beschichtungsschicht kristallines Pyrophosphat LiₐMP₂O₇ und/oder M_{b}(P₂O₇)_{c} umfasst, die zweite Beschichtungsschicht kristallines Phosphat XPO₄ umfasst und die dritte Beschichtungsschicht Kohlenstoff umfasst;
wobei
A ein oder mehrere Elemente umfasst, ausgewählt aus Zn, Al, Na, K, Mg, Mo, W, Ti, V, Zr, Fe, Ni, Co, Ga, Sn, Sb, Nb und Ge;
R ein oder mehrere Elemente umfasst, ausgewählt aus B, Si, N und S;
x ausgewählt ist aus einem beliebigen Wert im Bereich von -0,100 bis 0,100;
y ausgewählt ist aus einem beliebigen Wert im Bereich von 0,001 bis 0,500;
z ausgewählt ist aus einem beliebigen Wert im Bereich von 0,001 bis 0,100;
M in den kristallinen Pyrophosphaten LiₐMP₂O₇ und M_{b}(P₂O₇)_{c} jeweils unabhängig voneinander ein oder mehrere Elemente umfasst, ausgewählt aus Fe, Ni, Mg, Co, Cu, Zn, Ti, Ag, Zr, Nb und Al;
a ausgewählt ist aus einem beliebigen Wert im Bereich von 0 bis 2;
b ausgewählt ist aus einem beliebigen Wert im Bereich von 1 bis 4;
c ausgewählt ist aus einem beliebigen Wert im Bereich von 1 bis 6; und
X ein oder mehrere Elemente umfasst, ausgewählt aus Li, Fe, Ni, Mg, Co, Cu, Zn, Ti, Ag, Zr, Nb und Al; und
das zweite aktive Material für positive Elektroden eines oder mehrere ist, ausgewählt aus LiFePO₄, kohlenstoffbeschichtetem LiFePO₄, LiFe_{d}DₑPO₄ und kohlenstoffbeschichtetem LiFe_{d}DₑPO₄, wobei D unabhängig ein oder mehrere Elemente umfasst, ausgewählt aus Ti, Zn, Co, Mn, La, V, Mg, AI, Ni, W, Zr, Nb, Sm, Cr, Cu und B, d unabhängig ausgewählt ist aus einem beliebigen Wert im Bereich von 0,99 bis 0,999 und d + e = 1; und
optional jede der positiven Elektrodenfilmschichten, die eine Mehrschichtstruktur aufweisen, in benachbarten Schichten jeweils das erste aktive Material für positive Elektroden und das zweite aktive Material für positive Elektroden umfasst.

3. Positive Elektrodenplatte, umfassend einen positiven Elektrodenstromabnehmer und eine positive Elektrodenfilmschicht A und eine positive Elektrodenfilmschicht B, die jeweils auf den zwei Oberflächen des positiven Elektrodenstromabnehmers bereitgestellt sind; wobei die positive Elektrodenfilmschicht A und die positive Elektrodenfilmschicht B jeweils unabhängig voneinander eine Einschichtstruktur oder eine Mehrschichtstruktur aufweisen; mindestens eine Schicht der positiven Elektrodenfilmschicht A ein erstes aktives Material für positive Elektroden, das eine Kern-Hülle-Struktur aufweist, umfasst und gleichzeitig mindestens eine Schicht der positiven Elektrodenfilmschicht B ein zweites aktives Material für positive Elektroden umfasst;
das erste aktive Material für positive Elektroden einen inneren Kern umfasst, eine erste Beschichtungsschicht umfasst, die den inneren Kern beschichtet, eine zweite Beschichtungsschicht umfasst, die die erste Beschichtungsschicht beschichtet, und eine dritte Beschichtungsschicht umfasst, die die zweite Beschichtungsschicht beschichtet; wobei der innere Kern Li₁₊ₓMn_{1-y}A_{y}P_{1-z}R_{z}O₄ umfasst, die erste Beschichtungsschicht kristallines Pyrophosphat LiₐMP₂O₇ und/oder M_{b}(P₂O₇)_{c} umfasst, die zweite Beschichtungsschicht kristallines Phosphat XPO₄ umfasst und die dritte Beschichtungsschicht Kohlenstoff umfasst;
wobei
A ein oder mehrere Elemente umfasst, ausgewählt aus Zn, Al, Na, K, Mg, Mo, W, Ti, V, Zr, Fe, Ni, Co, Ga, Sn, Sb, Nb und Ge;
R ein oder mehrere Elemente umfasst, ausgewählt aus B, Si, N und S;
x ausgewählt ist aus einem beliebigen Wert im Bereich von -0.100-0.100;
y ausgewählt ist aus einem beliebigen Wert im Bereich von 0.001-0.500;
z ausgewählt ist aus einem beliebigen Wert im Bereich von 0.001-0.100;
M in den kristallinen Pyrophosphaten LiₐMP₂O₇ und M_{b}(P₂O₇)_{c} jeweils unabhängig voneinander ein oder mehrere Elemente umfasst, ausgewählt aus Fe, Ni, Mg, Co, Cu, Zn, Ti, Ag, Zr, Nb und Al,
a ausgewählt ist aus einem beliebigen Wert im Bereich von 0-2;
b ausgewählt ist aus einem beliebigen Wert im Bereich von 1-4;
c ausgewählt ist aus einem beliebigen Wert im Bereich von 1-6; und
X ein oder mehrere Elemente umfasst, ausgewählt aus Li, Fe, Ni, Mg, Co, Cu, Zn, Ti, Ag, Zr, Nb und Al; und
das zweite aktive Material für positive Elektroden eines oder mehrere ist, ausgewählt aus LiFePO₄, kohlenstoffbeschichtetem LiFePO₄, LiFe_{d}DₑPO₄ und kohlenstoffbeschichtetem LiFe_{d}DₑPO₄, wobei D unabhängig ein oder mehrere Elemente umfasst, ausgewählt aus Ti, Zn, Co, Mn, La, V, Mg, AI, Ni, W, Zr, Nb, Sm, Cr, Cu und B, d unabhängig ausgewählt ist aus dem Bereich von 0,99 bis 0,999 und d + e = 1.

4. Positive Elektrodenplatte nach einem der Ansprüche 1 bis 3, wobei in dem zweiten aktiven Material für positive Elektroden
die Masse des Kohlenstoffs 0,1 %-4 % der Masse des kohlenstoffbeschichteten LiFePO₄ ausmacht; und/oder
die Masse des Kohlenstoffs 0,1 %-4 % der Masse des kohlenstoffbeschichteten LiFe_{d}DₑPO₄ ausmacht; optional das Massenverhältnis des ersten aktiven Materials für positive Elektroden zum zweiten aktiven Materials für positive Elektroden 1:7 bis 7:1, optional 1: 4-4:1 beträgt.

5. Positive Elektrodenplatte nach einem der Ansprüche 1 bis 4, wobei in dem ersten aktiven Material für positive Elektroden
A ausgewählt ist aus einem oder mehreren der Elemente Fe, Ti, V, Ni, Co und Mg, und/oder
R ausgewählt ist aus einem der Elemente B, Si, N und S, und/oder
das Verhältnis von y zu 1-y ausgewählt ist aus 1:10 bis 1:1, optional 1:4 bis 1:1, und/oder
das Verhältnis von z zu 1-z ausgewählt ist aus 1:9 bis 1:999, optional 1:499 bis 1:249; optional die erste Beschichtungsschicht in dem ersten aktiven Material für positive Elektroden einen interplanaren Abstand des kristallinen Pyrophosphats in einem Bereich von 0,293-0,470 nm und einen Winkel der Kristallrichtung (111) in einem Bereich von 18,00°-32,00° aufweist; und die zweite Beschichtungsschicht einen interplanaren Abstand des kristallinen Phosphats in einem Bereich von 0,244-0,425 nm und einen Winkel der Kristallrichtung (111) in einem Bereich von 20,00°-37,00° aufweist.

6. Positive Elektrodenplatte nach einem der Ansprüche 1 bis 5, wobei in dem ersten aktiven Material für positive Elektroden der Kohlenstoff der dritten Beschichtungsschicht ein Gemisch aus SP2-Form-Kohlenstoff und SP3-Form-Kohlenstoff ist und optional das Molverhältnis des SP2-Form-Kohlenstoffs zum SP3-Form-Kohlenstoff ein beliebiger Wert im Bereich von 0,1-10, optional ein beliebiger Wert im Bereich von 2,0-3,0 ist.

7. Positive Elektrodenplatte nach einem der Ansprüche 1 bis 6, wobei in dem ersten aktiven Material für positive Elektroden
eine Beschichtungsmenge der ersten Beschichtungsschicht größer als 0 und kleiner oder gleich 6 Gew.-%, optional größer als 0 und kleiner oder gleich 5,5 Gew.-%, noch optionaler größer als 0 und kleiner oder gleich 2 Gew.-%, bezogen auf das Gewicht des inneren Kerns, ist; und/oder
eine Beschichtungsmenge der zweiten Beschichtungsschicht größer als 0 und kleiner oder gleich 6 Gew.-%, optional größer als 0 und kleiner oder gleich 5,5 Gew.-%, noch optionaler 2-4 Gew.-%, bezogen auf das Gewicht des inneren Kerns, ist; und/oder
eine Beschichtungsmenge der dritten Beschichtungsschicht größer als 0 und kleiner oder gleich 6 Gew.-%, optional größer als 0 und kleiner oder gleich 5,5 Gew.-%, noch optionaler größer als 0 und kleiner oder gleich 2 Gew.-%, bezogen auf das Gewicht des inneren Kerns, ist.

8. Positive Elektrodenplatte nach einem der Ansprüche 1 bis 7, wobei in dem ersten aktiven Material für positive Elektroden
die erste Beschichtungsschicht eine Dicke von 1-10 nm aufweist; und/oder
die zweite Beschichtungsschicht eine Dicke von 2-15 nm aufweist; und/oder
die dritte Beschichtungsschicht eine Dicke von 2-25 nm aufweist; optional in dem ersten aktiven Material für positive Elektroden, bezogen auf das Gewicht des ersten aktiven Materials für positive Elektroden,
der Gehalt des Manganelements im Bereich von 10 Gew.-% - 35 Gew.-%, optional im Bereich von 15 Gew.-% - 30 Gew.-%, noch optionaler im Bereich von 17 Gew.-% - 20 Gew.-% liegt; und/oder
der Gehalt an Phosphor im Bereich von 12 Gew.-%-25 Gew.-%, optional im Bereich von 15 Gew.-%-20 Gew.-% liegt; und/oder
das Gewichtsverhältnis des Manganelements zu Phosphor im Bereich von 0,90-1,25, optional 0,95-1,20 liegt.

9. Positive Elektrodenplatte nach einem der Ansprüche 1 bis 8, wobei das erste aktive Material für positive Elektroden eine Gitteränderungsrate vor und nach vollständiger Lithium-Interkalation-Deinterkalation von 4 % oder weniger, optional 3,8 % oder weniger, noch optionaler 2,0-3,8 % aufweist; optional das erste aktive Material für positive Elektroden eine Li/Mn-Antisit-Fehlerkonzentration von 4 % oder weniger, optional 2,2 % oder weniger, noch optionaler 1,5-2,2 % aufweist. Die Li/Mn-Antisit-Fehlerkonzentration wird gemäß JISK 0131-1996 geprüft.

10. Positive Elektrodenplatte nach einem der Ansprüche 1 bis 9, wobei das erste aktive Material für positive Elektroden eine verdichtete Dichte unter 3 T von 2,2 g/cm³ oder mehr, optional 2,2 g/cm³ oder mehr und 2,8 g/cm³ oder weniger aufweist. Die verdichtete Dichte wird gemäß GB/T 24533-2009 gemessen.

11. Positive Elektrodenplatte nach einem der Ansprüche 1 bis 10, wobei das erste aktive Material für positive Elektroden einen Oberflächen-Sauerstoffvalenzzustand von -1,90 oder weniger, optional -1,90 bis -1,98 aufweist; optional die Summe der Masse des ersten aktiven Materials für positive Elektroden und des zweiten aktiven Materials für positive Elektroden 88 %-98,7 % der Masse der positiven Elektrodenplatte ausmacht. Der Oberflächen-Sauerstoffvalenzzustand wird durch Elektronenenergieverlustspektroskopie (EELS) gemessen.

12. Sekundärbatterie (5), umfassend eine positive Elektrodenplatte nach einem der Ansprüche 1-11.

13. Batteriemodul (4), umfassend eine Sekundärbatterie (5) nach Anspruch 12.

14. Batterieakku (1), umfassend ein Batteriemodul (4) nach Anspruch 13.

15. Leistungsverbrauchende Vorrichtung, umfassend mindestens eine der folgenden Komponenten ausgewählt aus einer Sekundärbatterie (5) nach Anspruch 12, einem Batteriemodul (4) nach Anspruch 13 und einem Batteriesatz (1) nach Anspruch 14.

## Revendications

1. Plaque d'électrode positive, comprenant un collecteur de courant d'électrode positive et des couches de film d'électrode positive prévues sur au moins une surface du collecteur de courant d'électrode positive ; dans laquelle les couches de film d'électrode positive présentent une structure monocouche ou une structure multicouche ; lorsque les couches de film d'électrode positive présentent une structure monocouche, au moins une des couches de film d'électrode positive comprend à la fois un premier matériau actif d'électrode positive présentant une structure noyau-enveloppe et un deuxième matériau actif d'électrode positive ; et/ou lorsque les couches de film d'électrode positive présentent une structure multicouche, au moins une couche de l'au moins une des couches de film d'électrode positive comprend à la fois un premier matériau actif d'électrode positive présentant une structure noyau-enveloppe et un deuxième matériau actif d'électrode positive ; dans laquelle
le premier matériau actif d'électrode positive comprend un noyau interne, une première couche de revêtement recouvrant le noyau interne, une deuxième couche de revêtement recouvrant la première couche de revêtement, et une troisième couche de revêtement recouvrant la deuxième couche de revêtement ; le noyau interne comprend du Li₁₊ₓMn_{1-y}A_{y}P_{1-z}R_{z}O₄, la première couche de revêtement comprend du pyrophosphate cristallin LiₐMP₂O₇ et/ou M₆(P₂O₇)_{c}, la deuxième couche de revêtement comprend du phosphate cristallin XPO₄, et la troisième couche de revêtement comprend du carbone ;
dans laquelle
A comprend un ou plusieurs éléments choisis parmi Zn, Al, Na, K, Mg, Mo, W, Ti, V, Zr, Fe, Ni, Co, Ga, Sn, Sb, Nb et Ge ;
R comprend un ou plusieurs éléments choisis parmi B, Si, N et S ;
x est choisi parmi n'importe quelle valeur dans la plage de -0,100 à 0,100 ;
y est choisi parmi n'importe quelle valeur dans la plage de 0,001 à 0,500 ;
z est choisi parmi toute valeur dans la plage de 0,001 à 0,100 ;
M dans les pyrophosphates cristallins LiₐMP₂O₇ et M₆(P₂O₇)_{c} comprend chacun indépendamment un ou plusieurs éléments choisis parmi Fe, Ni, Mg, Co, Cu, Zn, Ti, Ag, Zr, Nb et Al,
a est choisi parmi n'importe quelle valeur dans la plage de 0 à 2 ;
b est choisi parmi n'importe quelle valeur dans la plage de 1 à 4 ;
c est choisi parmi n'importe quelle valeur dans la plage de 1 à 6 ; et
X comprend un ou plusieurs éléments choisis parmi Li, Fe, Ni, Mg, Co, Cu, Zn, Ti, Ag, Zr, Nb et Al ; et
le deuxième matériau actif d'électrode positive est un ou plusieurs éléments choisis parmi LiFePO₄, LiFePO₄ revêtu de carbone, LiFe_{d}DₑPO₄ et LiFe_{d}DₑPO₄ revêtu de carbone, dans laquelle D comprend indépendamment un ou plusieurs éléments choisis parmi Ti, Zn, Co, Mn, La, V, Mg, Al, Ni, W, Zr, Nb, Sm, Cr, Cu et B, d est indépendamment choisi parmi n'importe quelle valeur dans la plage de 0,99 à 0,999, et d + e = 1.

2. Plaque d'électrode positive, comprenant un collecteur de courant d'électrode positive et des couches de film d'électrode positive prévues sur au moins une surface du collecteur de courant d'électrode positive ; dans laquelle au moins une des couches de film d'électrode positive présente une structure multicouche, et une quelconque des couches de film d'électrode positive présentant une structure multicouche comprend dans différentes couches un premier matériau actif d'électrode positive présentant une structure noyau-enveloppe et un deuxième matériau actif d'électrode positive, respectivement ;
le premier matériau actif d'électrode positive comprend un noyau interne, une première couche de revêtement recouvrant le noyau interne, une deuxième couche de revêtement recouvrant la première couche de revêtement, et une troisième couche de revêtement recouvrant la deuxième couche de revêtement ; dans laquelle le noyau interne comprend du Li₁₊ₓMn_{1-y}A_{y}P_{1-z}R_{z}O₄, la première couche de revêtement comprend du pyrophosphate cristallin LiₐMP₂O₇ et/ou M₆(P₂O₇)_{c}, la deuxième couche de revêtement comprend du phosphate cristallin XPO₄, et la troisième couche de revêtement comprend du carbone,
dans laquelle
A comprend un ou plusieurs éléments choisis parmi Zn, Al, Na, K, Mg, Mo, W, Ti, V, Zr, Fe, Ni, Co, Ga, Sn, Sb, Nb et Ge ;
R comprend un ou plusieurs éléments choisis parmi B, Si, N et S ;
x est choisi parmi n'importe quelle valeur dans la plage de -0,100 à 0,100 ;
y est choisi parmi n'importe quelle valeur dans la plage de 0,001 à 0,500 ;
z est choisi parmi toute valeur dans la plage de 0,001 à 0,100 ;
M dans les pyrophosphates cristallins LiₐMP₂O₇ et M_{b}(P₂O₇)_{c} comprend chacun indépendamment un ou plusieurs éléments choisis parmi Fe, Ni, Mg, Co, Cu, Zn, Ti, Ag, Zr, Nb et Al ;
a est choisi parmi n'importe quelle valeur dans la plage de 0 à 2 ;
b est choisi parmi n'importe quelle valeur dans la plage de 1 à 4 ;
c est choisi parmi n'importe quelle valeur dans la plage de 1 à 6 ; et
X comprend un ou plusieurs éléments choisis parmi Li, Fe, Ni, Mg, Co, Cu, Zn, Ti, Ag, Zr, Nb et Al ; et
le deuxième matériau actif d'électrode positive est un ou plusieurs éléments choisis parmi LiFePO₄, LiFePO₄ revêtu de carbone, LiFe_{d}DₑPO₄ et LiFe_{d}DₑPO₄ revêtu de carbone, dans laquelle D comprend indépendamment un ou plusieurs éléments choisis parmi Ti, Zn, Co, Mn, La, V, Mg, Al, Ni, W, Zr, Nb, Sm, Cr, Cu et B, d est indépendamment choisi parmi n'importe quelle valeur dans la plage de 0,99 à 0,999, et d + e = 1 ; et
en option, une quelconque des couches de film d'électrode positive présentant une structure multicouche comprend dans des couches adjacentes le premier matériau actif d'électrode positive et le deuxième matériau actif d'électrode positive, respectivement.

3. Plaque d'électrode positive, comprenant un collecteur de courant d'électrode positive et une couche de film d'électrode positive A et une couche de film d'électrode positive B prévues sur les deux surfaces du collecteur de courant d'électrode positive, respectivement ; dans laquelle la couche de film d'électrode positive A et la couche de film d'électrode positive B présentent chacune indépendamment une structure monocouche ou une structure multicouche ; au moins une couche de la couche de film d'électrode positive A comprend un premier matériau actif d'électrode positive présentant une structure noyau-enveloppe, et en même temps, au moins une couche de la couche de film d'électrode positive B comprend un deuxième matériau actif d'électrode positive ;
le premier matériau actif d'électrode positive comprend un noyau interne, une première couche de revêtement recouvrant le noyau interne, une deuxième couche de revêtement recouvrant la première couche de revêtement, et une troisième couche de revêtement recouvrant la deuxième couche de revêtement ; dans laquelle le noyau interne comprend du Li₁₊ₓMn_{1-y}A_{y}P_{1-z}R_{z}O₄, la première couche d'enrobage comprend du pyrophosphate cristallin LiₐMP₂O₇ et/ou M_{b}(P₂O₇)_{c}, la deuxième couche de revêtement comprend du phosphate cristallin XPO₄, et la troisième couche de revêtement comprend du carbone ;
dans laquelle
A comprend un ou plusieurs éléments choisis parmi Zn, Al, Na, K, Mg, Mo, W, Ti, V, Zr, Fe, Ni, Co, Ga, Sn, Sb, Nb et Ge ;
R comprend un ou plusieurs éléments choisis parmi B, Si, N et S ;
x est choisi parmi n'importe quelle valeur dans la plage de -0,100 à 0,100 ;
y est choisi parmi n'importe quelle valeur dans la plage de 0,001 à 0,500 ;
z est choisi parmi n'importe quelle valeur dans la plage de 0,001 à 0,100 ;
M dans les pyrophosphates cristallins LiₐMP₂O₇ et M_{b}(P₂O₇)_{c} comprend chacun indépendamment un ou plusieurs éléments choisis parmi Fe, Ni, Mg, Co, Cu, Zn, Ti, Ag, Zr, Nb et Al,
a est choisi parmi n'importe quelle valeur dans la plage de 0 à 2 ;
b est choisi parmi n'importe quelle valeur dans la plage de 1 à 4 ;
c est choisi parmi n'importe quelle valeur dans la plage de 1 à 6 ; et
X comprend un ou plusieurs éléments choisis parmi Li, Fe, Ni, Mg, Co, Cu, Zn, Ti, Ag, Zr, Nb et Al ; et
le deuxième matériau actif d'électrode positive est un ou plusieurs éléments choisis parmi LiFePO₄, LiFePO₄ revêtu de carbone, LiFe_{d}DₑPO₄ et LiFe_{d}DₑPO₄ revêtu de carbone, dans laquelle D comprend indépendamment un ou plusieurs éléments choisis parmi Ti, Zn, Co, Mn, La, V, Mg, Al, Ni, W, Zr, Nb, Sm, Cr, Cu et B, d est indépendamment choisi dans la plage de 0,99 à 0,999, et d + e = 1.

4. Plaque d'électrode positive selon l'une quelconque des revendications 1 à 3, dans laquelle dans le deuxième matériau actif d'électrode positive,
la masse de carbone représente 0,1 % - 4 % de la masse de LiFePO₄ revêtu de carbone ;
et/ou
la masse de carbone représente 0,1 % - 4 % de la masse de LiFe_{d}DₑPO₄ revêtu de carbone ; en option, le rapport de masse du premier matériau actif d'électrode positive par rapport au deuxième matériau actif d'électrode positive est de 1:7-7:1, en option de 1:4 - 4:1.

5. Plaque d'électrode positive selon l'une quelconque des revendications 1 à 4, dans laquelle dans le premier matériau actif d'électrode positive,
A est choisi parmi un ou plusieurs éléments parmi Fe, Ti, V, Ni, Co et Mg, et/ou
R est choisi parmi un élément de B, Si, N et S, et/ou
le rapport de y à 1-y est choisi parmi 1:10 à 1:1, en option 1:4 à 1:1, et/ou
le rapport de z à 1-z est choisi parmi 1:9 à 1:999, en option 1:499 à 1:249 ; en option, dans le premier matériau actif d'électrode positive, la première couche de revêtement présente un espacement interplanaire du pyrophosphate cristallin dans une plage de 0,293 à 0,470 nm, et un angle de la direction cristalline (111) dans une plage de 18,00° à 32,00°; et la deuxième couche de revêtement présente un espacement interplanaire du phosphate cristallin dans une plage de 0,244 à 0,425 nm, et un angle de la direction cristalline (111) dans une plage de 20,00° à 37,00°.

6. Plaque d'électrode positive selon l'une quelconque des revendications 1 à 5, dans laquelle dans le premier matériau actif d'électrode positive, le carbone de la troisième couche de revêtement est un mélange de carbone de forme SP2 et de carbone de forme SP3, et en option, le rapport molaire du carbone de forme SP2 au carbone de forme SP3 est une valeur quelconque dans la plage de 0,1 à 10, en option une valeur quelconque dans la plage de 2,0 à 3,0.

7. Plaque d'électrode positive selon l'une quelconque des revendications 1 à 6, dans laquelle dans le premier matériau actif d'électrode positive,
une quantité de revêtement de la première couche de revêtement est supérieure à 0 et inférieure ou égale à 6 % en poids, en option est supérieure à 0 et inférieure ou égale à 5,5 % en poids, davantage en option est supérieure à 0 et inférieure ou égale à 2 % en poids, sur la base du poids du noyau interne ; et/ou
une quantité de revêtement de la deuxième couche de revêtement est supérieure à 0 et inférieure ou égale à 6 % en poids, en option est supérieure à 0 et inférieure ou égale à 5,5 % en poids, davantage en option va de 2 à 4 % en poids, sur la base du poids du noyau interne ; et/ou
une quantité de revêtement de la troisième couche de revêtement est supérieure à 0 et inférieure ou égale à 6 % en poids, en option est supérieure à 0 et inférieure ou égale à 5,5 % en poids, davantage en option est supérieure à 0 et inférieure ou égale à 2 % en poids, sur la base du poids du noyau interne.

8. Plaque d'électrode positive selon l'une quelconque des revendications 1 à 7, dans laquelle dans le premier matériau actif d'électrode positive,
la première couche de revêtement présente une épaisseur de 1 à 10 nm ; et/ou
la deuxième couche de revêtement présente une épaisseur de 2 à 15 nm ; et/ou
la troisième couche de revêtement présente une épaisseur de 2 à 25 nm ; en option dans le premier matériau actif d'électrode positive, sur la base du poids du premier matériau actif d'électrode positive,
la teneur en élément manganèse se situe dans la plage de 10 % en poids à 35 % en poids, en option dans la plage de 15 % en poids à 30 % en poids, davantage en option dans la plage de 17 % en poids à 20 % en poids ; et/ou
une teneur en élément phosphore se situe dans la plage de 12 % en poids à 25 % en poids, en option dans la plage de 15 % en poids à 20 % en poids ; et/ou
un rapport de poids de l'élément manganèse par rapport à l'élément phosphore se situe dans une plage de 0,90 à 1,25, en option de 0,95 à 1,20.

9. Plaque d'électrode positive selon l'une quelconque des revendications 1 à 8, dans laquelle le premier matériau actif d'électrode positive présente un taux de changement de réseau, avant et après intercalation-désintercalation complète du lithium, de 4 % ou moins, en option de 3,8 % ou moins, davantage en option de 2,0 à 3,8 % ; en option le premier matériau actif d'électrode positive présente une concentration de défauts antisite Li/Mn de 4 % ou moins, en option de 2,2 % ou moins, davantage en option de 1,5 à 2,2 %, la concentration de défauts antisite Li/mn étant testée selon la norme JIS K 0131-1996.

10. Plaque d'électrode positive selon l'une quelconque des revendications 1 à 9, dans laquelle le premier matériau actif d'électrode positive présente une densité compactée sous 3 T de 2,2 g/cm³ ou plus, en option de 2,2 g/cm³ - ou plus et 2,8 g/cm³ ou moins, la densité compactée étant mesurée selon la norme GB/T 24533-2009.

11. Plaque d'électrode positive selon l'une quelconque des revendications 1 à 10, dans laquelle le premier matériau actif d'électrode positive présente un état de valence d'oxygène de surface de -1,90 ou moins, en option de -1,90 à -1,98 ; en option la somme de la masse du premier matériau actif d'électrode positive et du deuxième matériau actif d'électrode positive représente 88 % - 98,7 % de la masse de la plaque d'électrode positive, l'état de valence d'oxygène de surface étant mesurée par une spectroscopie de perte d'énergie des électrons (EELS).

12. Batterie secondaire (5), comprenant une plaque d'électrode positive selon l'une quelconque des revendications 1 à 11.

13. Module de batterie (4), comprenant une batterie secondaire (5) selon la revendication 12.

14. Bloc-batterie (1), comprenant un module de batterie (4) selon la revendication 13.

15. Dispositif de consommation d'énergie, comprenant au moins un élément choisi parmi une batterie secondaire (5) selon la revendication 12, un module de batterie (4) selon la revendication 13, et un bloc-batterie (1) selon la revendication 14.
